# EUROPEAN PATENT APPLICATION

(11) **EP 2 966 860 A1**
(43) Date of publication of application: **13.01.2016**
(21) Application number: 13875326.4
(22) Date of filing: 08.03.2013
(51) Int. Cl.: H04N 5/765, H04N 5/76, H04N 7/173

(54) **ELECTRONIC DEVICE, INFORMATION DELIVERY SYSTEM, INFORMATION DELIVERY METHOD AND PROGRAM**

(71) Applicant: Kabushiki Kaisha Toshiba, Minato-ku Tokyo 105-8001 (JP); Toshiba Lifestyle Products & Services Corporation, Ome-shi, Tokyo 198-8710 (JP)
(72) Inventor: OHKITA, Hideki, Tokyo 105-8001 (JP)
(74) Representative: Henkel, Breuer & Partner
(86) International application number: PCT/JP2013/056528
(87) International publication number: WO 2014/136273

(57) **Abstract**

To provide an electronic device, an information distribution system, an information distribution method, and an information distribution program capable of prompting the user to view or record a program desired by the user on the basis of information provided by a network.

An electronic device of an embodiment, comprising a search condition storage, a search module, and a list storage. The search condition storage configured to store search conditions presented by a first device equipped with a recording function. The search module configured to search a content on the basis of the search conditions stored in the search condition storage. The list storage configured to store a content list based on the search result by the search module and the schedule information and the restrictive conditions from the second device such that the content list can be acquired as a schedule list to be used by the second device for the automatic recording.

## Description

### Technical Field

The present invention relates to an electronic device, an information distribution system, an information distribution method, and an information distribution program.

### Background Art

A television receiver which receives and plays back a program supplied by a broadcaster or a distributor is capable of receiving and transmitting a variety of types of information via a network.

### Citation List

### Patent Literature

Patent Literature 1:
Jpn. Pat. Appln. KOKAI Publication No. 2002-32396

### Summary of Invention

### Technical Problem

A network supplies a variety of types of information on a program which the user wants to play back (view) or record.

Information provided by a network contributes to motivation for the user to determine which program to view or record, since such information "becomes a topic of conversation in a social networking service (SNS)", for example.

A television receiver which prompts the user to view or record a program on the basis of information provided by a network, however, requires a variety of elements in a process of specifying a program desired by the user.

Accordingly, it is difficult to prompt the user to view or record all the programs desired by the user on the basis of information provided by a network.

It is therefore an object of the present invention to provide an electronic device, an information distribution system, an information distribution method, and an information distribution program capable of prompting the user to view or record a program desired by the user on the basis of information provided by a network.

### Solution to Problem

An electronic device of an embodiment, comprising: a search condition storage, a search module, and a list storage. The search condition storage configured to store search conditions presented by a first device equipped with a recording function. The search module configured to search a content on the basis of the search conditions stored in the search condition storage. The list storage configured to store a content list based on the search result by the search module and the schedule information and the restrictive conditions from the second device such that the content list can be acquired as a schedule list to be used by the second device for the automatic recording.

### Brief Description of Drawings

FIG. 1 is an exemplary diagram of a shift of screen displays of a display device (electronic device) according to an embodiment.
FIG. 1A illustrates an exemplary screen display (home screen) of the display device upon activation according to the embodiment.
FIG. 1B illustrates an exemplary screen display of a shift screen based on the shift of screen displays shown in FIG. 1.
FIG. 1C illustrates an exemplary screen display of a shift screen based on the shift of screen displays shown in FIG. 1.
FIG. 1D illustrates an exemplary screen display of a shift screen based on the shift of screen displays shown in FIG. 1.
FIG. 1E illustrates a shift screen based on the shift of screen displays shown in FIG. 1, which is an example of a screen display (top screen) when a forum service is activated.
FIG. 1F illustrates a shift screen based on the shift of screen displays shown in FIG. 1, which is an example of a screen display when the forum service is used.
FIG. 2 illustrates a shift of screen displays of the display device (electronic device) according to the embodiment.
FIG. 2A illustrates an exemplary screen display of a shift screen based on the shift of screen displays of the display device according to the embodiment.
FIG. 2B illustrates an exemplary screen display of a shift screen based on the shift of screen displays of the display device according to the embodiment.
FIG. 2C illustrates an exemplary screen display of a shift screen based on the shift of screen displays of the display device according to the embodiment.
FIG. 2D illustrates an exemplary screen display of a shift screen based on the shift of screen displays of the display device according to the embodiment.
FIG. 2E illustrates an exemplary screen display of a shift screen based on the shift of screen displays of the display device according to the embodiment.
FIG. 2F illustrates an exemplary screen display of a shift screen based on the shift of screen displays of the display device according to the embodiment.
FIG. 2G illustrates an exemplary screen display of a shift screen based on the shift of screen displays of the display device according to the embodiment.
FIG. 2H illustrates an exemplary screen display of a shift screen based on the shift of screen displays of the display device according to the embodiment.
FIG. 2I illustrates an exemplary screen display of a shift screen based on the shift of screen displays of the display device according to the embodiment.
FIG. 2J illustrates an exemplary screen display of a shift screen based on the shift of screen displays of the display device according to the embodiment.
FIG. 2K illustrates an exemplary screen display of a shift screen based on the shift of screen displays of the display device according to the embodiment.
FIG. 2L illustrates an exemplary screen display of a shift screen based on the shift of screen displays of the display device according to the embodiment.
FIG. 2M illustrates an exemplary screen display of a shift screen based on the shift of screen displays of the display device according to the embodiment.
FIG. 2N illustrates an exemplary screen display of a shift screen based on the shift of screen displays of the display device according to the embodiment.
FIG. 2P illustrates an exemplary screen display of a shift screen based on the shift of screen displays of the display device according to the embodiment.
FIG. 2Q illustrates an exemplary screen display of a shift screen based on the shift of screen displays of the display device according to the embodiment.
FIG. 2R illustrates an exemplary screen display of a shift screen based on the shift of screen displays of the display device according to the embodiment.
FIG. 2S illustrates an exemplary screen display of a shift screen based on the shift of screen displays of the display device according to the embodiment.
FIG. 2T illustrates an exemplary screen display of a shift screen based on the shift of screen displays of the display device according to the embodiment.
FIG. 2U illustrates an exemplary screen display of a shift screen based on the shift of screen displays of the display device according to the embodiment.
FIG. 2V illustrates an exemplary screen display of a shift screen based on the shift of screen displays of the display device according to the embodiment.
FIG. 2W illustrates an exemplary screen display of a shift screen based on the shift of screen displays of the display device according to the embodiment.
FIG. 2X illustrates an exemplary screen display of a shift screen based on the shift of screen displays of the display device according to the embodiment.
FIG. 2Y illustrates an exemplary screen display of a shift screen based on the shift of screen displays of the display device according to the embodiment.
FIG. 2Z illustrates an exemplary screen display of a shift screen based on the shift of screen displays of the display device according to the embodiment.
FIG. 3 illustrates a shift of screen displays of the display device (electronic device) according to the embodiment.
FIG. 3A illustrates an exemplary screen display (Home screen) when the display device according to the embodiment is activated.
FIG. 3B illustrates an exemplary screen display of a shift screen based on the shift of screen displays of the display device according to the embodiment.
FIG. 3C illustrates an exemplary screen display of a shift screen based on the shift of screen displays of the display device according to the embodiment.
FIG. 3D illustrates an exemplary screen display of a shift screen based on the shift of screen displays of the display device according to the embodiment.
FIG. 3E illustrates an exemplary screen display of a shift screen based on the shift of screen displays of the display device according to the embodiment.
FIG. 3F illustrates an exemplary screen display of a shift screen based on the shift of screen displays of the display device according to the embodiment.
FIG. 3G illustrates an exemplary screen display of a shift screen based on the shift of screen displays of the display device according to the embodiment.
FIG. 3H illustrates an exemplary screen display of a shift screen based on the shift of screen displays of the display device according to the embodiment.
FIG. 3I illustrates an exemplary screen display of a shift screen based on the shift of screen displays of the display device according to the embodiment.
FIG. 3J illustrates an exemplary screen display of a shift screen based on the shift of screen displays of the display device according to the embodiment.
FIG. 3K illustrates an exemplary screen display of a shift screen based on the shift of screen displays of the display device according to the embodiment.
FIG. 3L illustrates an exemplary screen display of a shift screen based on the shift of screen displays of the display device according to the embodiment.
FIG. 3M illustrates an exemplary screen display of a shift screen based on the shift of screen displays of the display device according to the embodiment.
FIG. 3N illustrates an exemplary screen display of a shift screen based on the shift of screen displays of the display device according to the embodiment.
FIG. 3P illustrates an exemplary screen display of a shift screen based on the shift of screen displays of the display device according to the embodiment.
FIG. 3Q illustrates an exemplary screen display of a shift screen based on the shift of screen displays of the display device according to the embodiment.
FIG. 3R illustrates an exemplary screen display of a shift screen based on the shift of screen displays of the display device according to the embodiment.
FIG. 3S illustrates an exemplary screen display (My Page screen) of the display device according to the embodiment.
FIG. 4 illustrates an exemplary shift of screen displays of the display device (electronic device) according to the embodiment.
FIG. 5 illustrates an exemplary shift of screen displays of the display device (electronic device) according to the embodiment.
FIG. 5A illustrates an exemplary screen display (home screen) of the display device upon activation according to the embodiment.
FIG. 5B illustrates an exemplary screen display (My Page screen) of the display device according to the embodiment.
FIG. 5C illustrates an exemplary screen display of a shift screen based on the shift of screen displays of the display device according to the embodiment.
FIG. 5D illustrates an exemplary screen display of a shift screen based on the shift of screen displays of the display device according to the embodiment.
FIG. 6 illustrates an exemplary screen display of a shift screen based on the shift of screen displays of the display device according to the embodiment.
FIG. 7 illustrates an exemplary screen display of a shift screen based on the shift of screen displays of the display device according to the embodiment.
FIG. 8 illustrates an exemplary screen display of a shift screen based on the shift of screen displays of the display device according to the embodiment.
FIG. 9 illustrates an exemplary screen display of a shift screen based on the shift of screen displays of the display device according to the embodiment.
FIG. 10 illustrates an exemplary screen display of a shift screen based on the shift of screen displays of the display device according to the embodiment.
FIG. 11 illustrates an exemplary screen display of the display device according to the embodiment.
FIG. 11A illustrates exemplary contents of the screen display shown in FIG. 11.
FIG. 11B illustrates an exemplary relationship between displays and control instructions of the screen display shown in FIG. 11.
FIG. 12 illustrates an exemplary screen display of the display device according to the embodiment.
FIG. 12A illustrates exemplary contents of the screen display shown in FIG. 12.
FIG. 12B illustrates an exemplary relationship between displays and control instructions of the screen display shown in FIG. 12.
FIG. 12C illustrates exemplary operations corresponding to button displays on the screen display shown in FIG. 12.
FIG. 13 illustrates an exemplary screen display of the display device according to the embodiment.
FIG. 13A illustrates exemplary contents of the screen display shown in FIG. 13.
FIG. 13B illustrates an exemplary relationship between displays and control instructions of the screen display shown in FIG. 13.
FIG. 13C illustrates exemplary operations corresponding to button displays on the screen display shown in FIG. 13.
FIG. 14 illustrates an exemplary screen display of the display device according to the embodiment.
FIG. 14A illustrates exemplary contents of the screen display shown in FIG. 14.
FIG. 14B illustrates an exemplary relationship between displays and control instructions of the screen display shown in FIG. 14.
FIG. 14C illustrates exemplary operations corresponding to button displays on the screen display shown in FIG. 14.
FIG. 15 illustrates an exemplary screen display of the display device according to the embodiment.
FIG. 15A illustrates exemplary contents of the screen display shown in FIG. 15.
FIG. 15B illustrates an exemplary relationship between displays and control instructions of the screen display shown in FIG. 15.
FIG. 15C illustrates exemplary operations corresponding to button displays on the screen display shown in FIG. 15.
FIG. 16 illustrates an exemplary screen display of the display device according to the embodiment.
FIG. 16A illustrates exemplary contents of the screen display shown in FIG. 16.
FIG. 16B illustrates an exemplary relationship between displays and control instructions of the screen display shown in FIG. 16.
FIG. 17 illustrates an exemplary screen display of the display device according to the embodiment.
FIG. 17A illustrates exemplary contents of the screen display shown in FIG. 17.
FIG. 17B illustrates an exemplary relationship between displays and control instructions of the screen display shown in FIG. 17.
FIG. 17C illustrates exemplary operations corresponding to button displays on the screen display shown in FIG. 17.
FIG. 18 illustrates an exemplary screen display of the display device according to the embodiment.
FIG. 18A illustrates exemplary contents of the screen display shown in FIG. 18.
FIG. 19 illustrates an exemplary screen display of the display device according to the embodiment.
FIG. 19A illustrates exemplary contents of the screen display shown in FIG. 19.
FIG. 20 illustrates an exemplary screen display of the display device according to the embodiment.
FIG. 20A illustrates exemplary contents of the screen display shown in FIG. 20.
FIG. 21 illustrates an exemplary screen display of the display device according to the embodiment.
FIG. 21A illustrates exemplary contents of the screen display shown in FIG. 21.
FIG. 22 illustrates an exemplary screen display of the display device according to the embodiment.
FIG. 22A illustrates exemplary contents of the screen display shown in FIG. 22.
FIG. 23 illustrates an exemplary screen display of the display device according to the embodiment.
FIG. 23A illustrates exemplary contents of the screen display shown in FIG. 23.
FIG. 24 illustrates an exemplary screen display of the display device according to the embodiment.
FIG. 24A illustrates exemplary contents of the screen display shown in FIG. 24.
FIG. 24B illustrates exemplary operations corresponding to button displays on the screen display shown in FIG. 24.
FIG. 25 illustrates an exemplary screen display of the display device according to the embodiment.
FIG. 25A illustrates exemplary contents of the screen display shown in FIG. 25.
FIG. 25B illustrates exemplary operations corresponding to button displays on the screen display shown in FIG. 25.
FIG. 26 illustrates an exemplary screen display of the display device according to the embodiment.
FIG. 26A illustrates exemplary contents of the screen display shown in FIG. 26.
FIG. 27 illustrates exemplary contents of a screen display of the display device according to the embodiment.
FIG. 28 illustrates exemplary contents of a screen display of the display device according to the embodiment.
FIG. 29 illustrates exemplary contents of a screen display of the display device according to the embodiment.
FIG. 30 illustrates exemplary contents of a screen display of the display device according to the embodiment.
FIG. 31 illustrates exemplary contents of a screen display of the display device according to the embodiment.
FIG. 32 illustrates exemplary contents of a screen display of the display device according to the embodiment.
FIG. 33 illustrates an exemplary screen display of the display device according to the embodiment.
FIG. 34 illustrates an exemplary screen display of the display device according to the embodiment.
FIG. 35 illustrates an exemplary screen display of the display device according to the embodiment.
FIG. 36 is an exemplary diagram of an operation on the display device according to the embodiment, illustrating an example of an operation that prompts the user to make [Automatic recording setting].
FIG. 37 schematically illustrates a conception of a forum service according to the embodiment.
FIG. 38 illustrates an example of data transfer between a display device and a server (cloud service) in the forum service according to the embodiment.
FIG. 39 illustrates an exemplary main configuration of the server (cloud service) according to the embodiment.
FIG. 40 schematically illustrates an outline of a configuration that achieves [Automatic recording setting] using the forum service according to the embodiment.
FIG. 41 illustrates an example of a configuration of a forum (server) and an automatic recording process according to the embodiment.
FIG. 42 illustrates an example of a process of searching for a target for automatic recording in a forum service according to the embodiment.
FIG. 43 illustrates an exemplary overview of an EPG searcher in the forum service according to the embodiment.
FIG. 44 illustrates an exemplary screen display of the EPG searcher in the forum service according to the embodiment.
FIG. 45 illustrates an example of search in the EPG searcher in the forum service according to the embodiment.
FIG. 46 illustrates an exemplary preview screen display of a search result of the EPG searcher in the forum service according to the embodiment.
FIG. 47 illustrates an example of filtering in a first filtering device in the forum service according to the embodiment.
FIG. 48 illustrates an example of filtering in a third filtering device in the forum service according to the embodiment.
FIG. 49 illustrates an example of filtering (condition settings) based on automatic recording condition settings in the forum service according to the embodiment.
FIG. 50 illustrates an example of filtering (condition settings) based on the automatic recording condition settings in the forum service according to the embodiment.
FIG. 51 illustrates an example of setting of the order of priority for channels to be targets for recording in the automatic recording condition settings in the forum service according to the embodiment.
FIG. 52 illustrates an example of filtering in which an event (scheduled in advance by the user) is taken into account in the forum service, according to the embodiment.
FIG. 53 illustrates an example of timing for update of automatic recording scheduling in the forum service according to the embodiment.
FIG. 54 illustrates an example of setting of the order of priority at the time of automatic recording scheduling in the forum service according to the embodiment.
FIG. 55 illustrates an example of setting of the order of priority at the time of automatic recording scheduling in the forum service according to the embodiment.
FIG. 56 illustrates an example of setting of a destination device and a recording time at the time of automatic recording scheduling in the forum service according to the embodiment.
FIG. 57 illustrates an example of a preview display of the automatic recording scheduling in the forum service according to the embodiment.
FIG. 58 illustrates an exemplary configuration of a program list processing application in the forum service according to the embodiment.
FIG. 59 illustrates an example of filtering (condition setting) based on the automatic recording condition settings in the forum service, according to the embodiment.
FIG. 60 illustrates an example of development of filtering in the third filtering device in the forum service according to the embodiment.

Best Mode for Carrying Out the Invention Hereinafter, an embodiment of the present invention will be described with reference to the accompanying drawings.

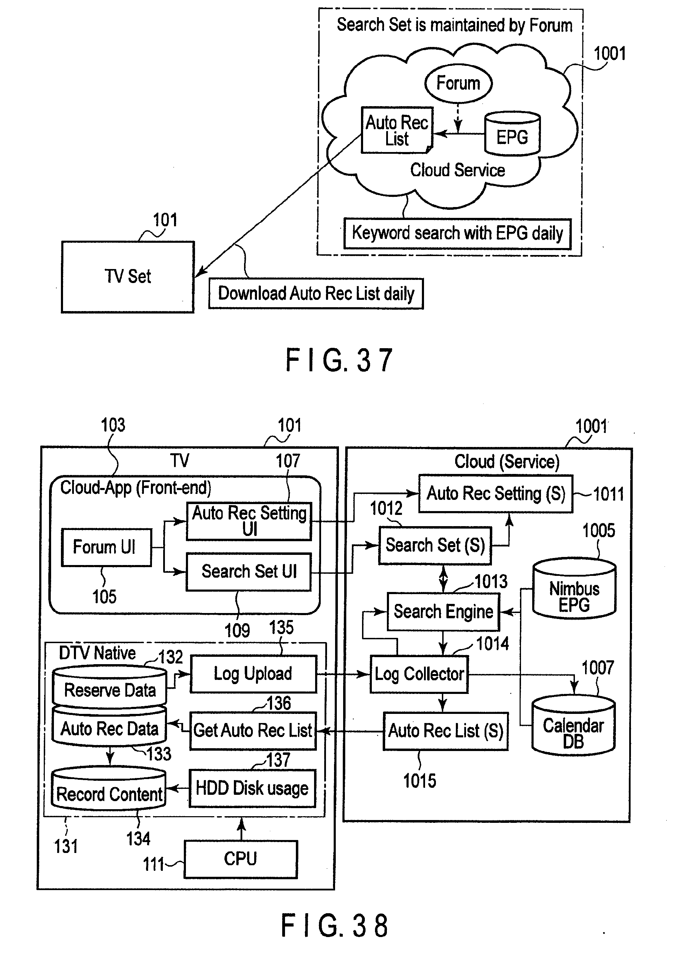

FIGS. 37-60 illustrate an exemplary overview of a system according to the embodiment.

FIG. 37 schematically illustrates a conception of a forum service according to the embodiment.

As shown in FIG. 37, an electronic device, such as a television broadcast receiver (hereinafter referred to as a television set, or simply a TV or a TV set) 101 equipped with a recording function downloads an automatic recording list <Auto Rec (Recording) List> from a server (such as a cloud service <Cloud Service>) 1001, and prepares for recording of a program (content) desired by the user. The television set (TV) 101 may be a display device to which a video recorder (or a recording device), for example, is connected. The server 1001 may be formed of either one server device or a plurality of server devices. The display device may be any device capable of displaying moving images and still images, such as a display device connected to a personal computer (PC), for example, or a portable device called a tablet terminal, for example. Data transfer between the display device and the recording device may be performed in either a wired or wireless manner.

The server 1001 stores an automatic recording list created on the basis of information that can be acquired from a social networking service (SNS), which is referred to as a forum <Forum>, for example, and allows users to share information on content (programs) that the users want to view or record, and information contained in electronic program guides (EPGs), such that the user can acquire the automatic recording list. A forum is designed to be created for a specific theme by a user, for example, and a one-on-one program list (list of programs to be recorded or viewed) is set for each forum. In other words, a forum is designed to connect a plurality of users via a program list as an axis, and is also designed to allow a plurality of users to share the program list. A recording list may be created manually by a user by adding a program one by one, or a program list that matches search conditions set by a user for a forum may be created. When a user registers in a forum, a program list set in the forum is downloaded into the device used by the user. The device performs a recording process and a playback process according to the downloaded program list. In the server 1001, a plurality of forums set by the user or the like exist, and a plurality of users are registered in each of the forums. A user is capable of registering in a plurality of forums.

FIG. 38 illustrates an example of data transfer between the television set and the server (cloud service).

As shown in FIG. 38, the television set 101 includes an interface part <Cloud App> 103 which controls transfer of data between the television set 101 and the server 1001, i.e., access to the server 1001, an information storage part <Native <DTV Native>> 131 which stores an acquired automatic recording list and records content (programs) according to the list, and a central processing unit (CPU; processor) 111.

The interface part 103 includes an automatic recording user interface <Auto Rec Setting UI> 107 which manages recording settings for automatic recording, a search user interface <Search Set UI> 109 which manages search condition settings for automatic recording, and a forum user interface <Forum UI> 105 which controls the both interfaces <activates the both interfaces and manages operations of the both interfaces>, with respect to the forum provided by the server 1001.

The information storage part <Native> 105 includes a data storage part (storage such as a hard disc drive [HDD]) 134 configured to store automatic recording data <Auto Rec Data>, schedule information (data <Reserve Data>), and content (programs <Record Content>), and a data storage management part <Hard Disc use> 137, which manages content stored in the HDDs (storages) 132, 133, and 134. The schedule information (data <Reserve Data>) is data scheduled for recording set in advance in the television set 101, and is a list of programs scheduled for recording, for example. The schedule information (data <Reserve Data>) may include schedule recording set on the basis of automatic recording data, and schedule recording set by a user operation on the television set 101.

An upload part <Log Upload> 135 transmits schedule information <Reserve Data> stored in the data storage part 132 to the server 1001. A list acquisition part <Get Auto Rec List> 137 acquires the automatic recording data (automatic recording list <Auto Rec Data>) 1015 from the server 1001.

The data storage part 132 stores automatic recording data (automatic recording list <Auto Rec Data>) acquired by the list acquisition part <Get Auto Rec List> 136. The data storage management part <Hard Disc use> 137 stores restrictive conditions on recording set in the television set 101. The restrictive conditions refer to restrictions on recording, such as a channel on which recording can be made, a time range in which recording can be made, and the amount of time per day for which recording can be made. The television set 101 records programs shown in the list on the basis of the acquired automatic recording list. The television set 101 may record a program included in an automatic recording list and given a higher priority preferentially when the remaining amount of the HDD (data storage parts 132, 133, and 134) is less than a predetermined value. An order of priority for programs to be recorded is determined on the basis of an order of priority for channels of the programs, an order of priority for time ranges of the programs, an order of priority for forums to which the programs belong, an order of priority for users who are registered in the forums, or the like.

The operation of each of the above-described parts (blocks), interfaces, and the like in the television set 101 is controlled by a central processing unit (CPU) 111.

The server 1001 includes an automatic recording setting part <Auto Rec Setting(s)> 1011, a search condition storage part <Search Set> 1012, a search part <Search Engine> 1013, an EPG data storage part <Nimbus EPG> 1005, a calendar database part <Calendar DB> 1007, an upload reception part <Log Collector> 1014, and an automatic recording list creation part <Auto Rec List> 1015.

The automatic recording setting part <Auto Rec setting(s)> 1011 makes automatic recording settings according to recording setting (Auto Rec Setting> information, which is an input from the automatic recording user interface 107 of the television set 101 and search condition <Search Set> information, which is an input from the search user interface 109 of the television set 101, and stores the automatic recording settings.

The search condition storage part <Search Set(s)> 1012 receives the search condition <Search Set> information from the television set 101, and supplies the automatic recording setting part and the search part with the received information.

The search part <Search Engine> 1013 receives the search conditions from the search condition storage part 1012 and the schedule information <Reserve Data> from the upload part <Log Upload> 135, and searches for a content for automatic recording by referring to program information stored in the EPG data storage part 1005 and date and time information managed by the calendar database part 1007. The search part 1013 supplies the automatic recording list creation (storage) part <Auto Rec List(s)> 1015 with the searched result via the upload reception part <Log Collector> 1014, such that the searched result can be used as recommended data <Auto Rec Data> for automatic recording. That is, the search part 1013 searches for a program on the basis of search conditions set by a forum master, for example, for each forum, and supplies the automatic recording list creation (storage) part <Auto Rec List(s)> 1015 with the program list obtained by the search. The upload reception part <Log Collector> 1014 collects schedule information <Reserve Data> from the television set 101. The upload reception part <Log Collector> 1014 may acquire schedule information on a user basis, for example. That is, when a user uses a plurality of devices, for example, a television set equipped with a video recorder or a recording function, such as the television set 101, a recording device capable of recording and playing back a content, and the like, schedule information may be obtained from the plurality of devices associated with (linked with) the user. In this case, a list showing correspondence between users and devices used by the users may be stored in the server 1001. When one recording device is used by a plurality of users, the upload reception part <Log Collector> 1014 may further acquire schedule information on scheduled recording set by each of the plurality of users. The upload reception part <Log Collector> 1014 may further acquire information on scheduled viewing set in the television set 101. The upload reception part <Log Collector> 1014 may further acquire information on restrictive conditions set in the television set 101. The restrictive conditions refer to restrictions on recording set in the television set 101, such as a channel on which recording can be performed, a time range in which recording can be made, and the maximum amount of time per day for which recording can be made.

The automatic recording list storage (creation) part 1015 stores the search result by the search part 1013 such that the list acquisition part (television set 101) can acquire the search result as recommended data for automatic recording. That is, the automatic recording list storage (creation) part 1015 makes the automatic recording list set for each forum public to a network, such that the automatic recording list can be accessed by the interface part <Cloud App (Front-end)> 103. The automatic recording list storage creation part 1015 prepares, for each television set 101, an automatic recording list, which is obtained by removing programs overlapping with programs indicated by schedule information acquired by the upload reception part <Log Collector> 1014 from the programs included in the automatic recording list obtained by search of the search part 1013. From the schedule information, the automatic recording list creation part 1015 may remove only programs indicated by information on scheduled recording, or may remove programs indicated by information on scheduled recording and programs indicated by information on scheduled viewing. Further, the automatic recording list creation part 1015 may create an automatic recording list in which programs in the automatic recording list are narrowed down on the basis of the restrictive conditions set in the television set 101.

The automatic recording list storage creation part 1015 transmits the list according to a request from the television set 101 (the television set 101 downloads an automatic recording list stored in the list storage creation part 1015 according to a download request from the television set 101). That is, the server device 1001 is equipped with a function of making the automatic recording list obtained as a search result by the search part 1013 public and a function of transmitting an automatic recording list obtained by arranging the recording list for each television set 101 to the television set 101 (storing the automatic recording list such that the television set or the recording device can download the automatic recording list).

In FIG. 38, one recording (video recorder) device (a HDD, a recorder, or a television set) is shown, but when more than one recording devices (HDDs and/or television sets) are provided, the server 1001 is capable of preparing recommended data <Auto Rec Data> for automatic recording in each recording device. That is, when a plurality of user accounts are set on a television set 101 (recording device) and the plurality of accounts are registered in different forums, the automatic recording list creation part 1015 may create an automatic recording list obtained by compiling automatic recording lists of the respective forums, and transmit the complied automatic recording list to the television set 101 (the automatic recording list is stored such that the television set or the recorder device can download the automatic recording list). In this case, the automatic recording list creation part 1015 may acquire schedule information from a plurality of devices (television sets equipped with recording devices and/or a video recording function) used by each of the plurality of users, and create an automatic recording list obtained by removing programs overlapping with schedule information from the programs included in the compiled automatic recording list. Therefore, it is also possible to classify recording devices according to the type (whether age restriction is set) and genre <Genre> of content, for example.

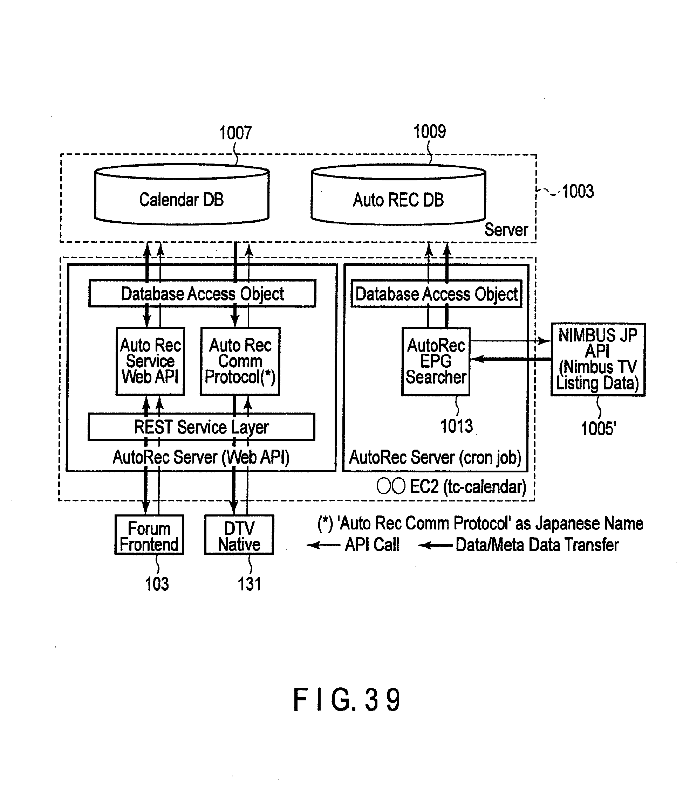

FIG. 39 illustrates a main configuration of a server (cloud service) that embodies a forum service.

As shown in FIG. 39, the server 1001 includes a database section 1003 including a calendar database part <Calendar DB> 1007 and an automatic recording base part <Auto Rec DB> 1009.

An automatic recording server <Auto Rec Service (Web API)> and an automatic recording control unit <Auto Rec Service (cron job)> included in an external calendar server <XX EC2 (tc-calendar)>, for example, are connected to the database section 1003.

A forum service <Forum Front-end> is connected to the database section 1003 via the automatic recording service program (application <Auto Rec Service Web API>) in the automatic recording server of the external calendar server. A television set <DTV Native> 101 is also connected to the database section 1003 via an automatic recording communication controller (Auto Rec Comm Protocol <automatic recording communication protocol>) in the automatic recording control unit of the above-described external calendar server.

Further, the automatic recording base part <Auto Rec DB> 1009 stores a database for automatic recording by referring to EPG data acquired by an automatic recording detection part <Auto Rec EPG Searcher> from an EPG database part <NIMBUS JP API (Nimbus TV Listing Data)> 1005'.

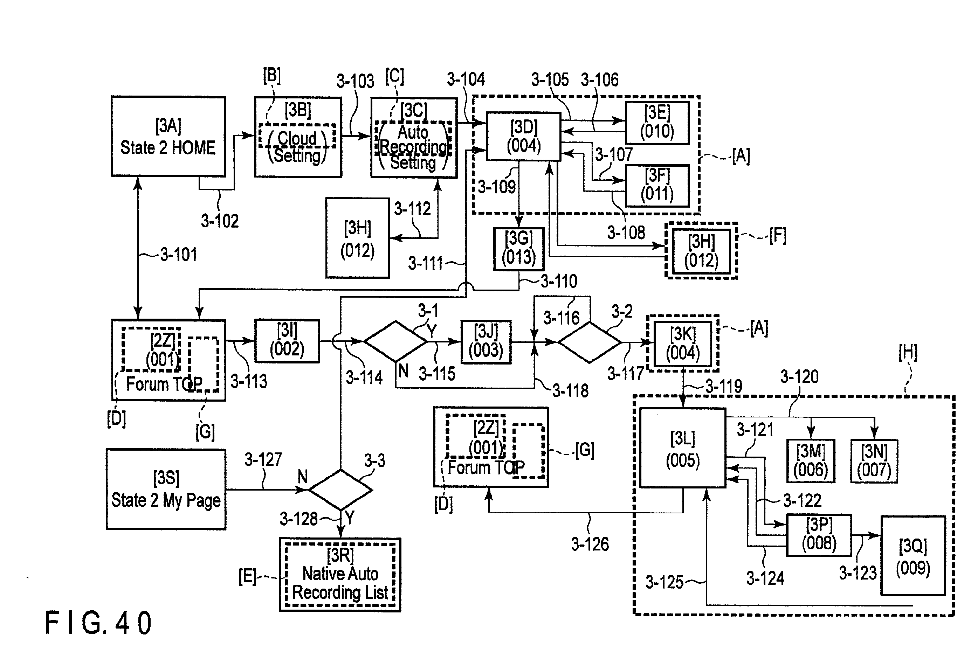

FIG. 40 schematically shows an overview of a configuration that allows the user to make [Automatic recording settings] using a forum service. In FIG. 40, screen displays displayed on a display part of the television set 101 and a shift of screen displays in response to a user input (or setting) on the screen display are displayed as a list.

FIG. 40 illustrates a variety of screen displays that are presented to a user participating in (subscribing to) a forum to enable [Automatic recording settings], by way of illustration. Examples of such screen displays include the following:
[A] User interface (UI) screen display for master settings <Auto Rec Master Setting for Device> of a video recorder (recording device)
[B] User interface (UI) screen display for automatic recording characteristics check <Check Capability of Auto Rec>
[C] User interface (UI) screen display for automatic recording list manual update <Update Auto Rec List manually>
[D] Picture-in-Picture (PinP) display of relevant forums <Show PinP related Forums> and user interface (UI) screen display
[E] Automatic recording list <Auto Rec List>, i.e., a graphical user interface (GUI) screen display for a video recorder (recording device)
[F] User interface (UI) screen display for forum priority setting <Forum Priority Setting>
[G] Search result display <Search Result is displayed>
[H] User interface (UI) screen display for automatic recording setting of a forum or a video recorder (recording device) <Auto Rec Setting for Forum/Device>

Therefore, not all the screen displays shown in FIG. 40 are displayed at the same time, and the [C] Automatic recording list manual update <Update Auto Rec List manually> screen display is displayed by selecting the Automatic recording characteristics check (by turning on (pressing) the enter button on the screen display by a user operation on a remote control and thereby activating selection instruction control) on the screen display on which the [B] Automatic recording characteristics check <Check Capability of Auto Rec> is displayed, for example.

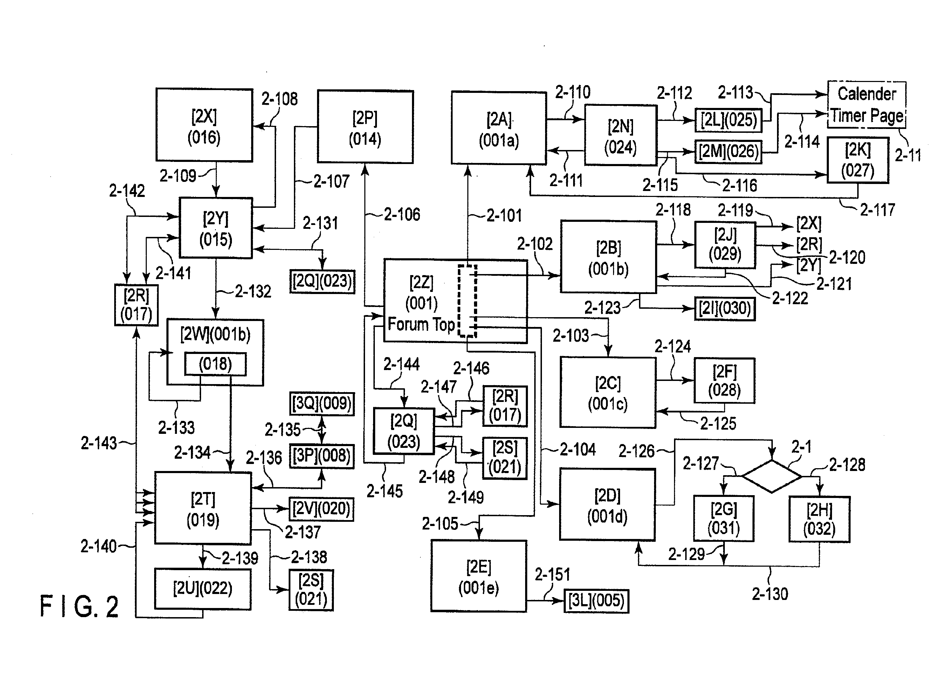

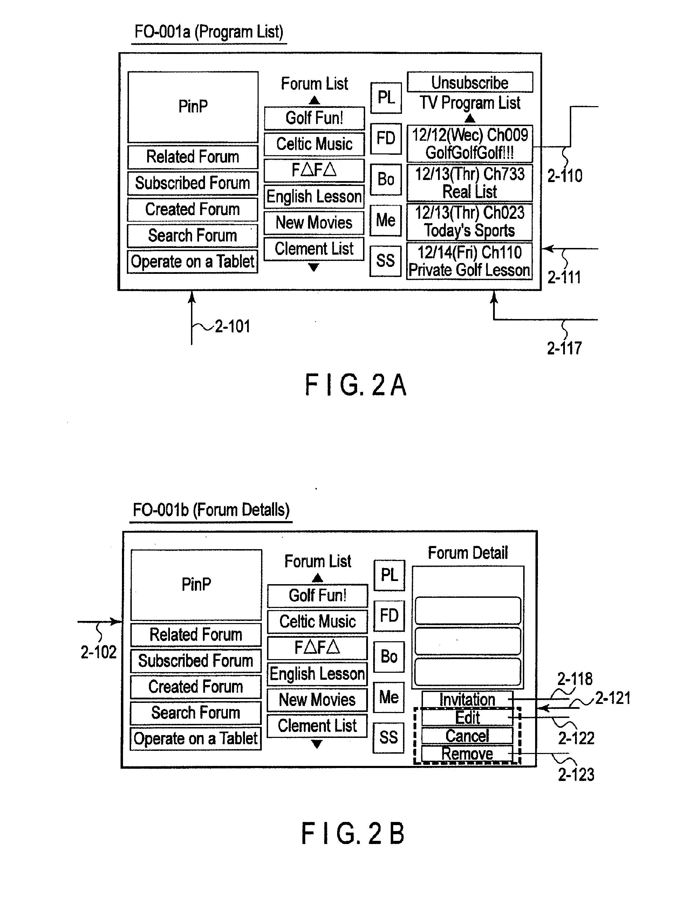

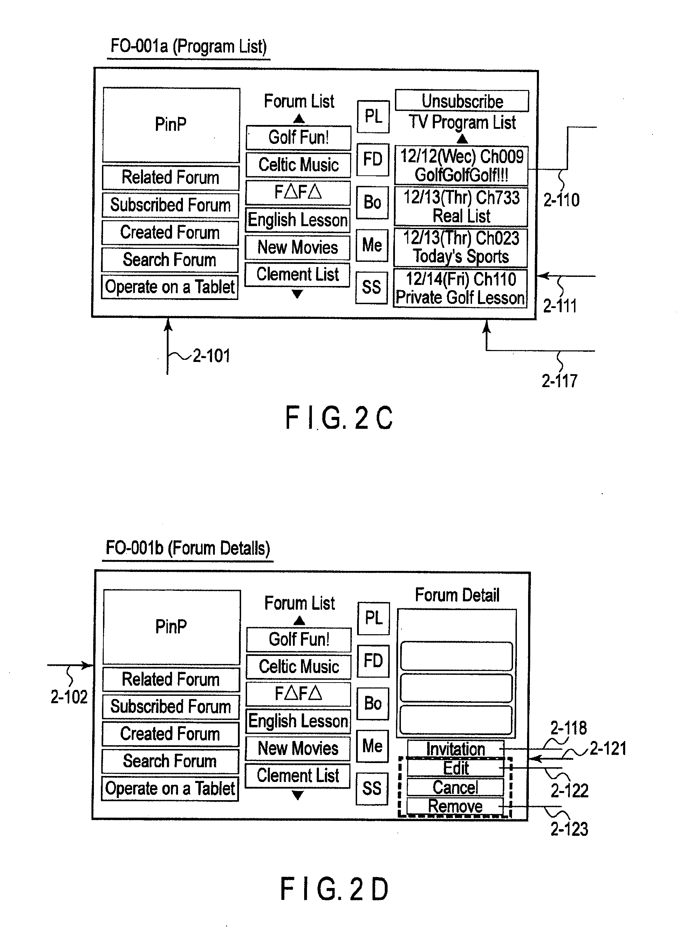

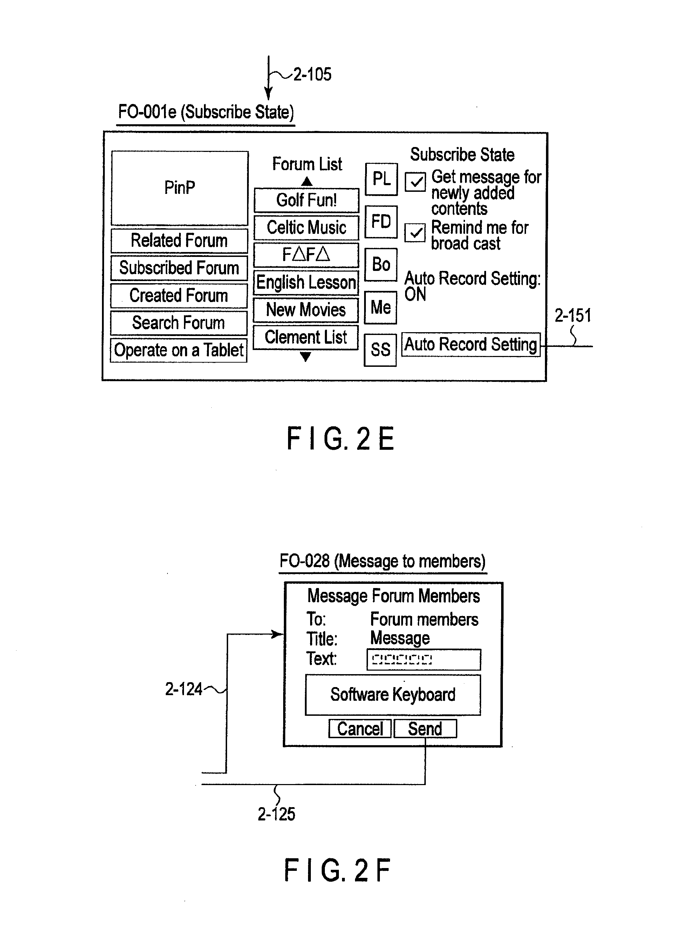

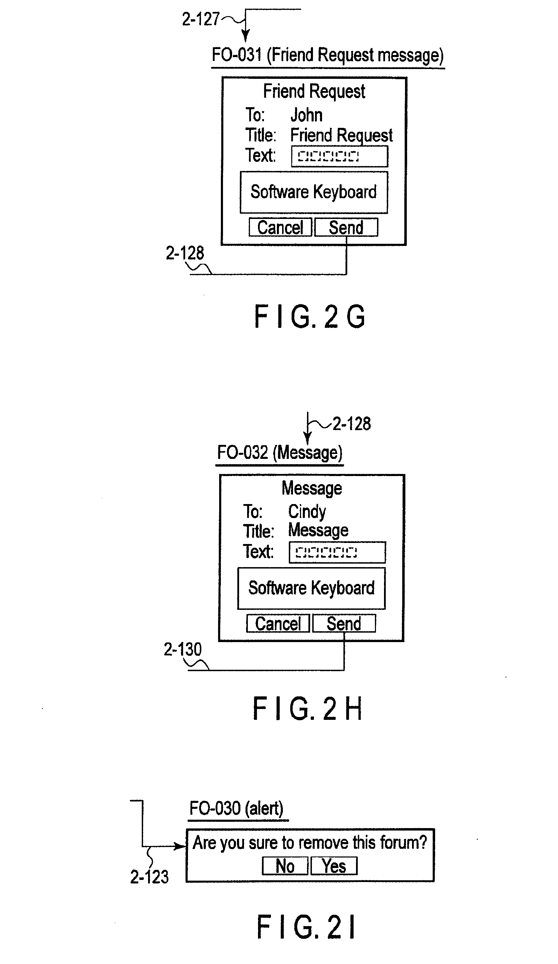

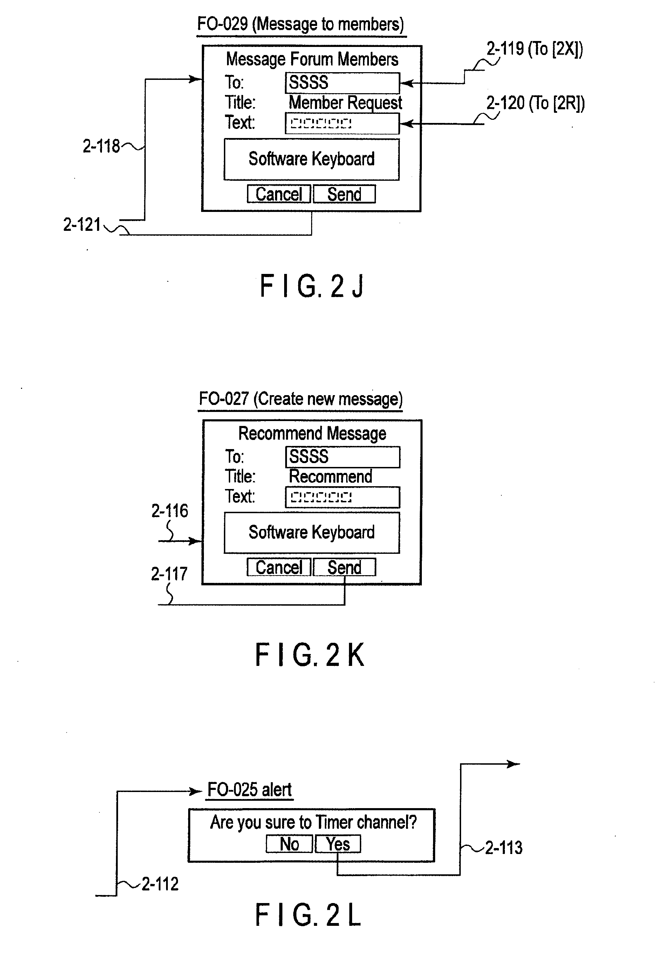

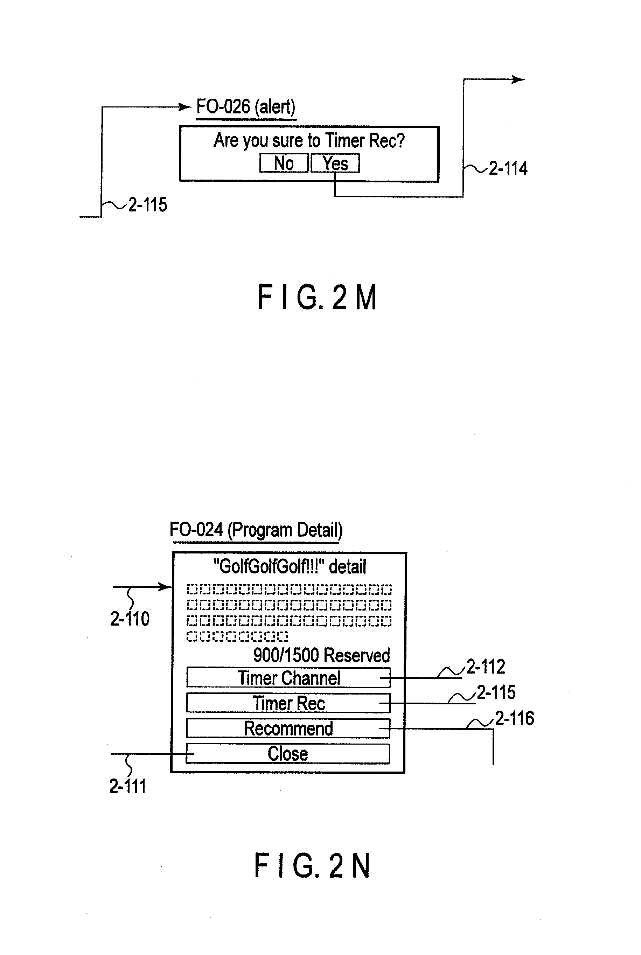

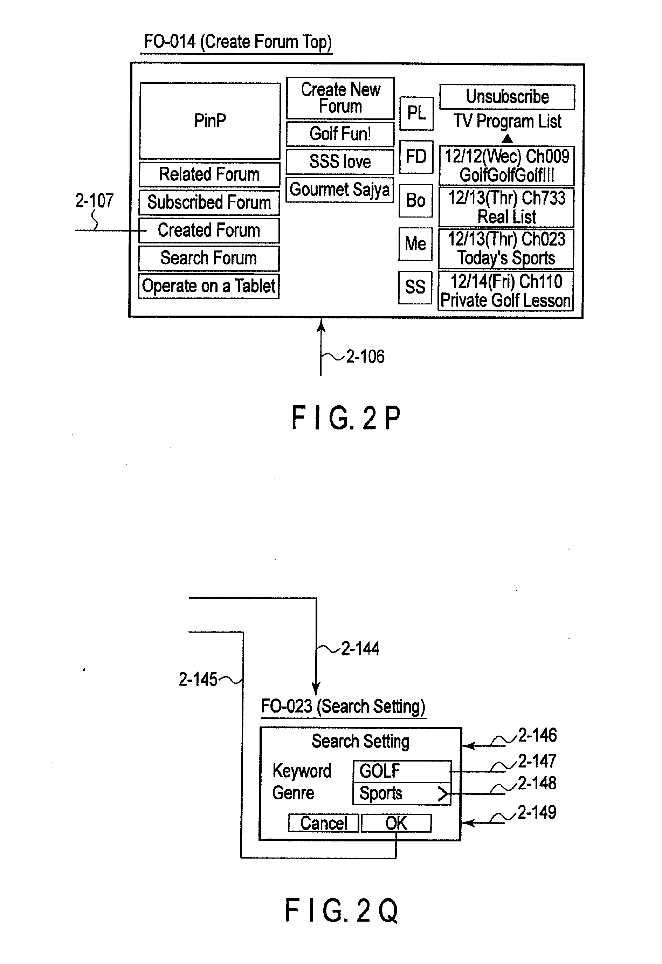

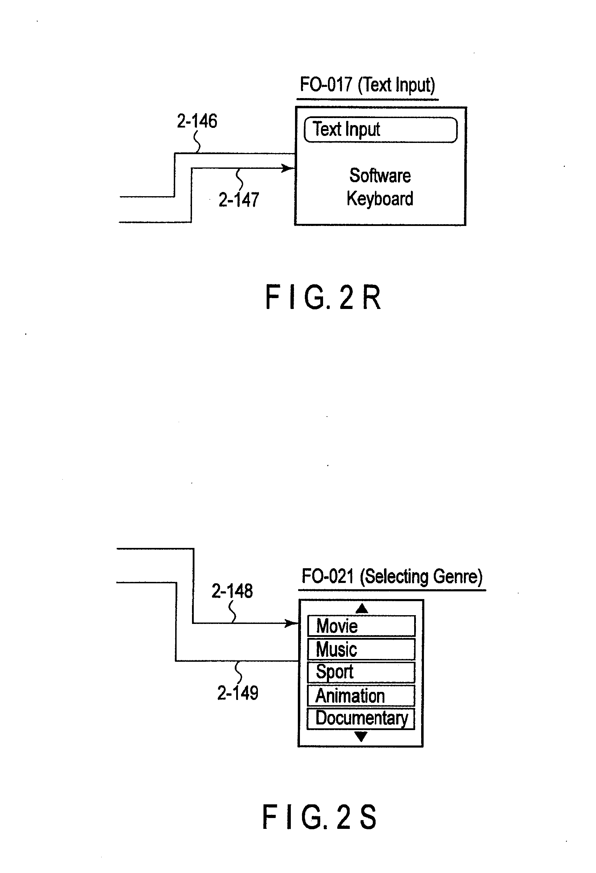

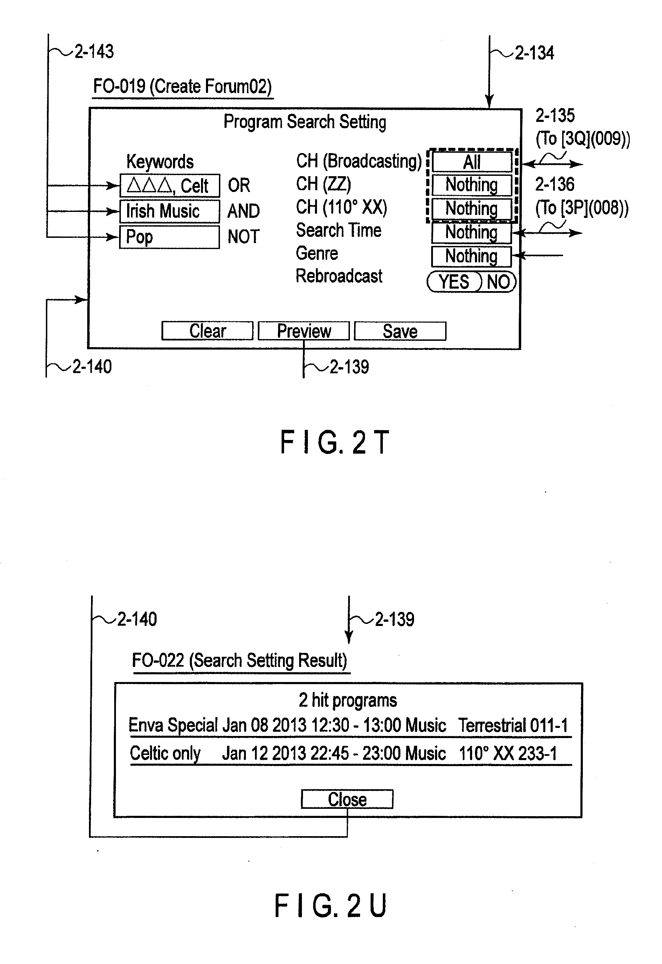

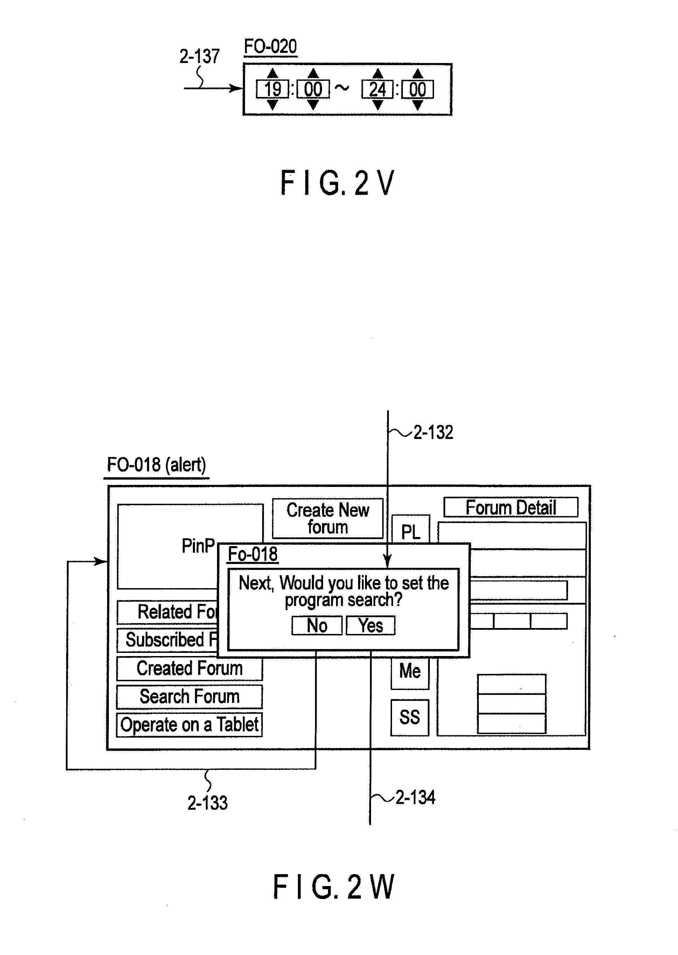

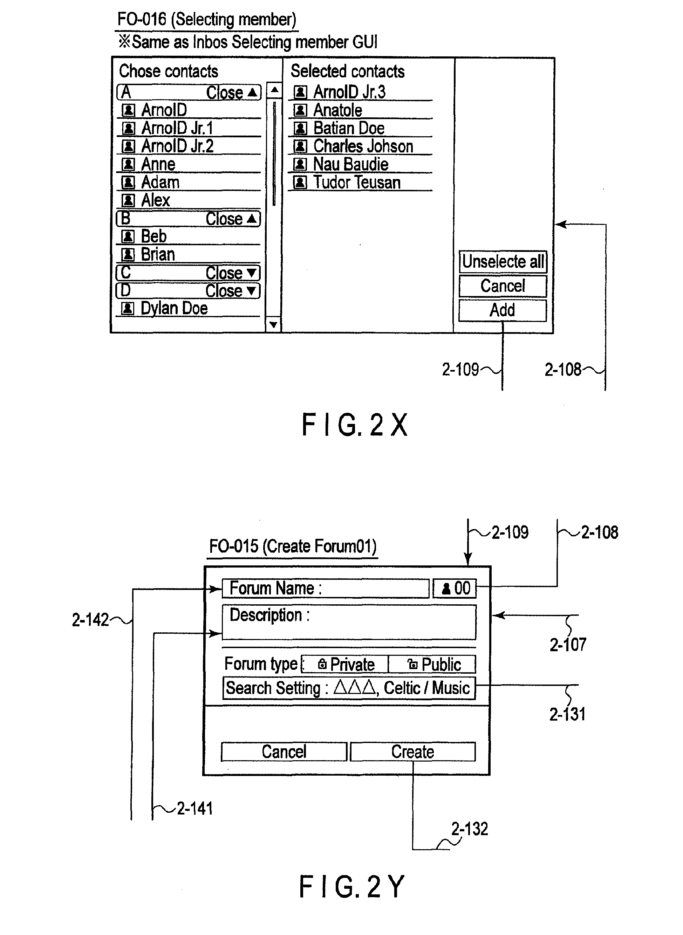

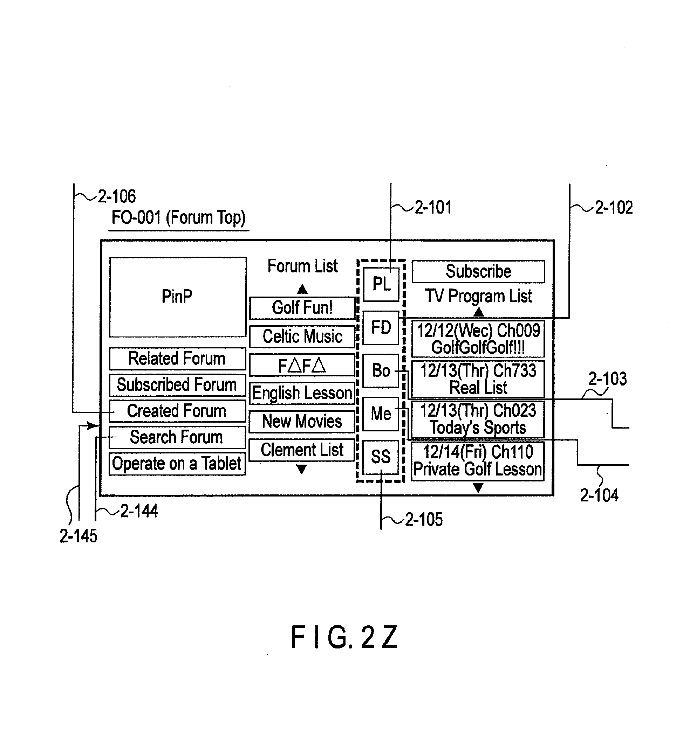

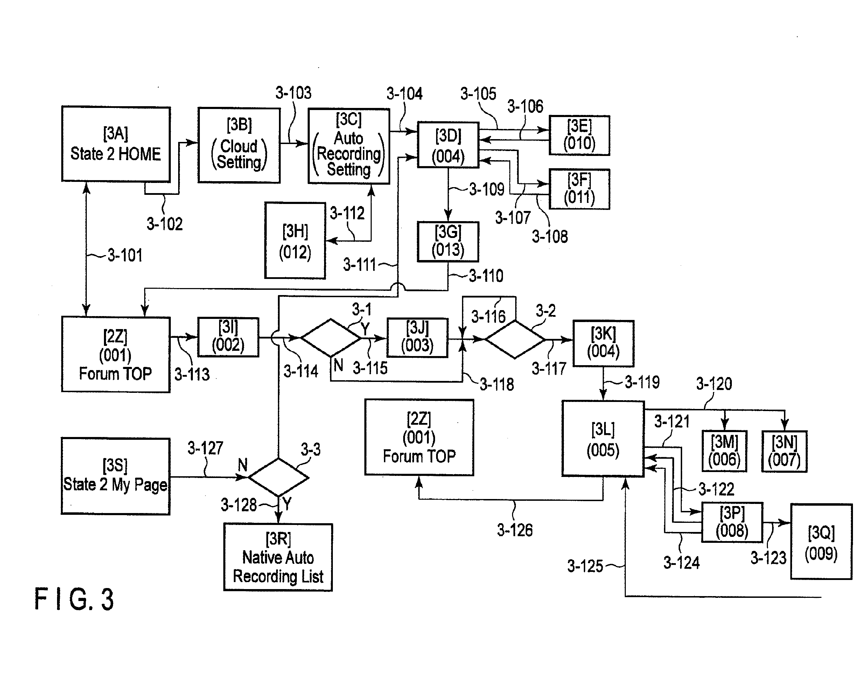

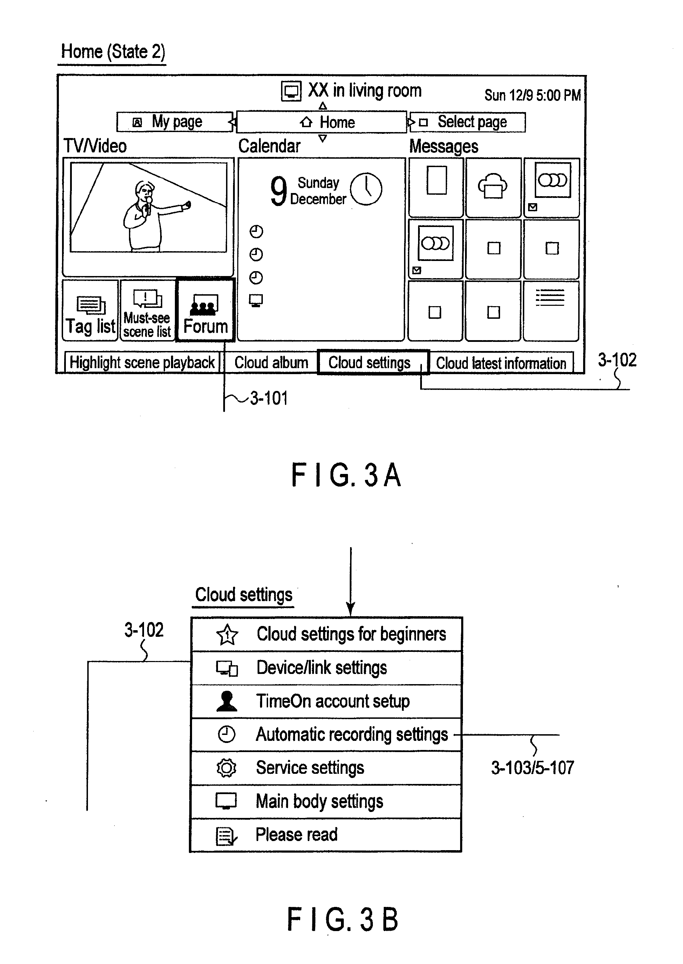

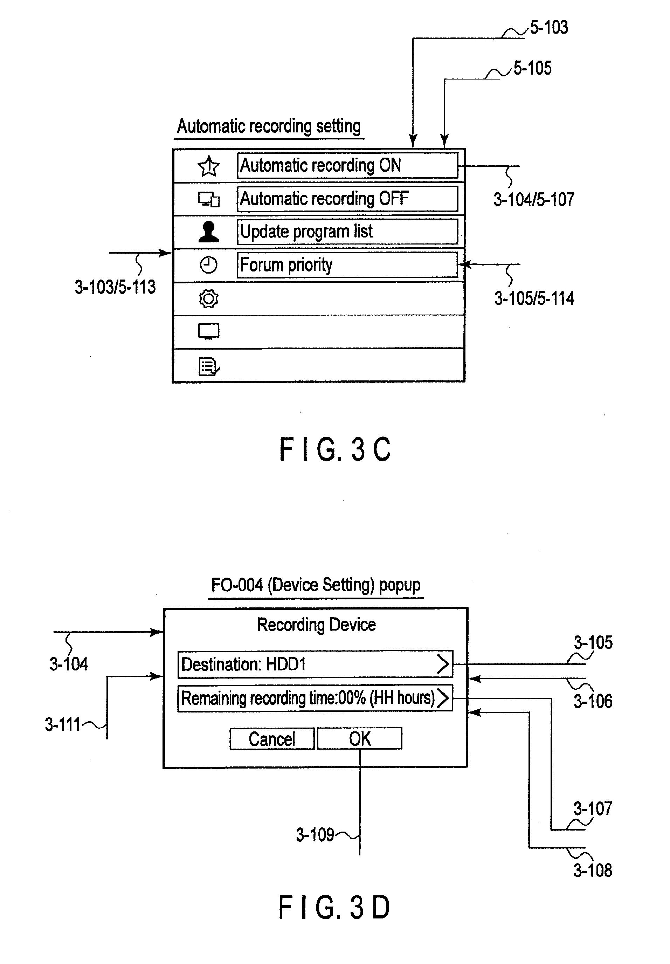

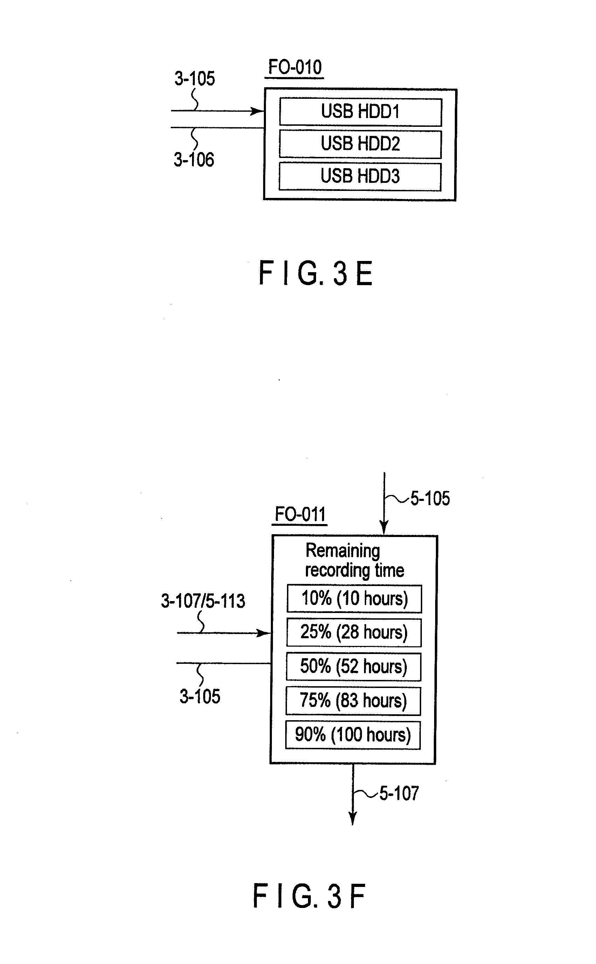

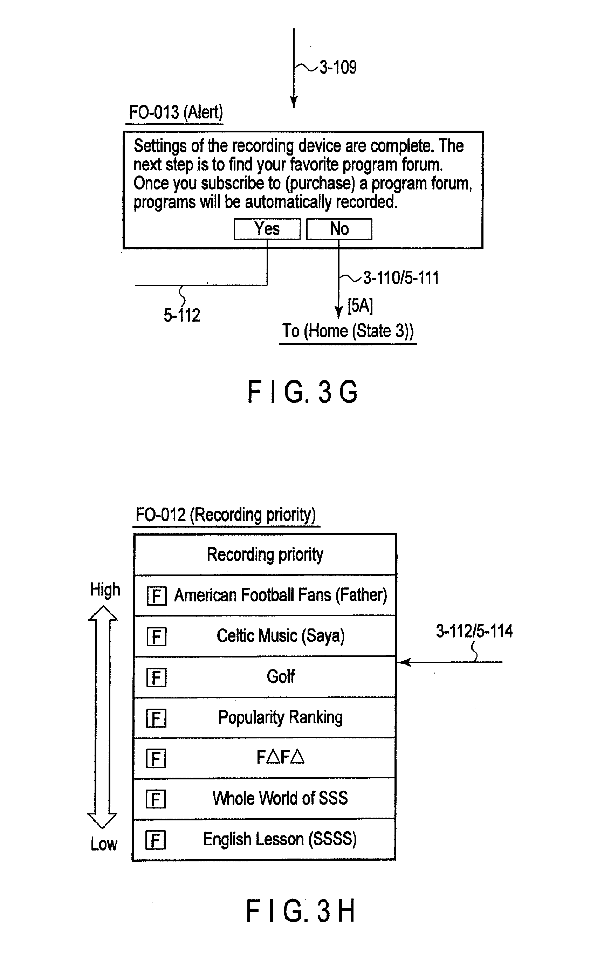

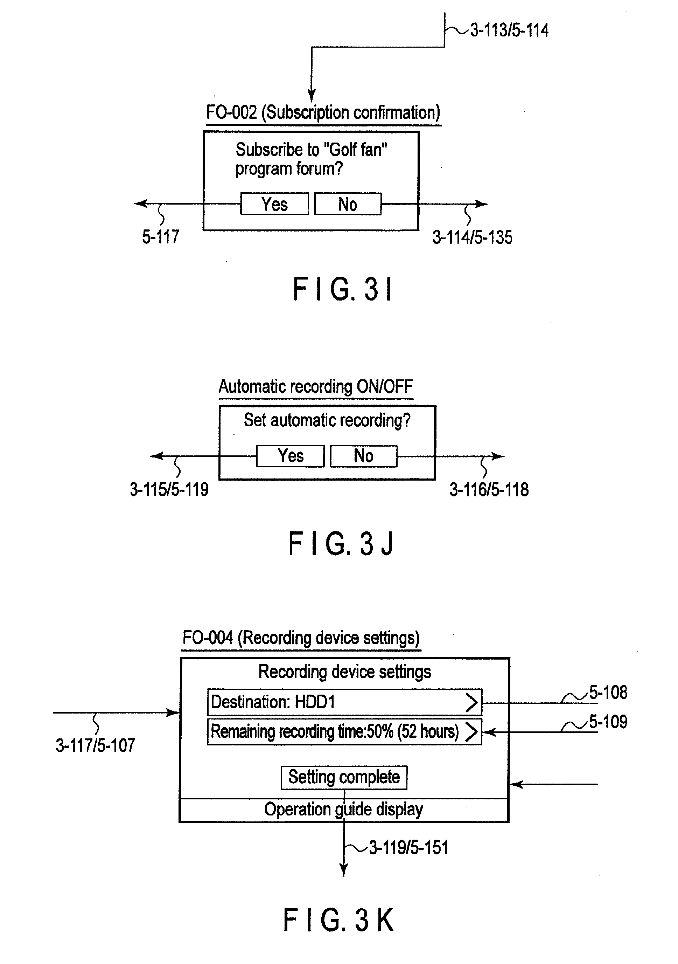

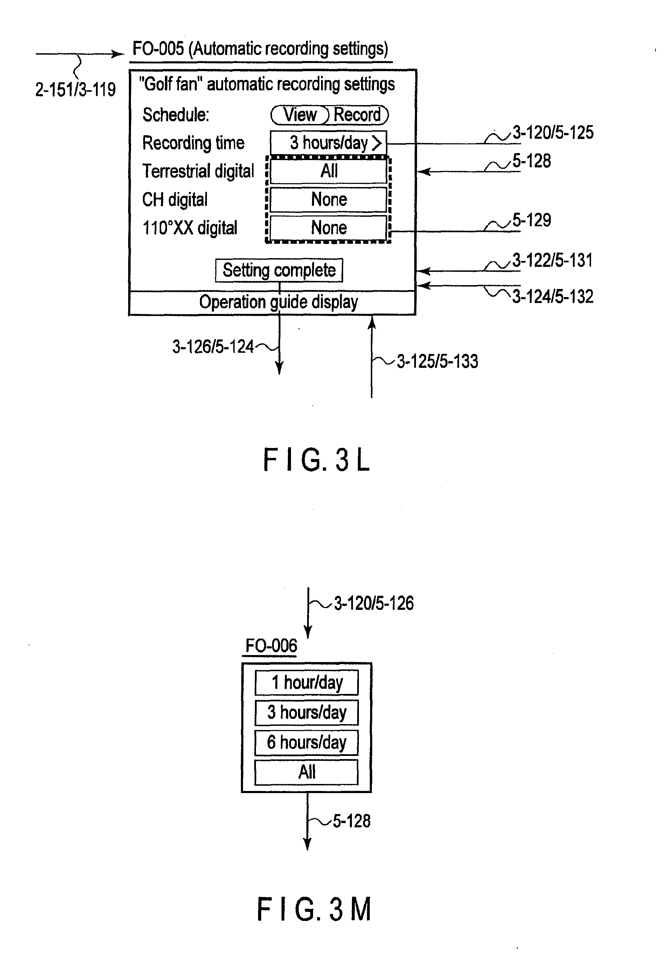

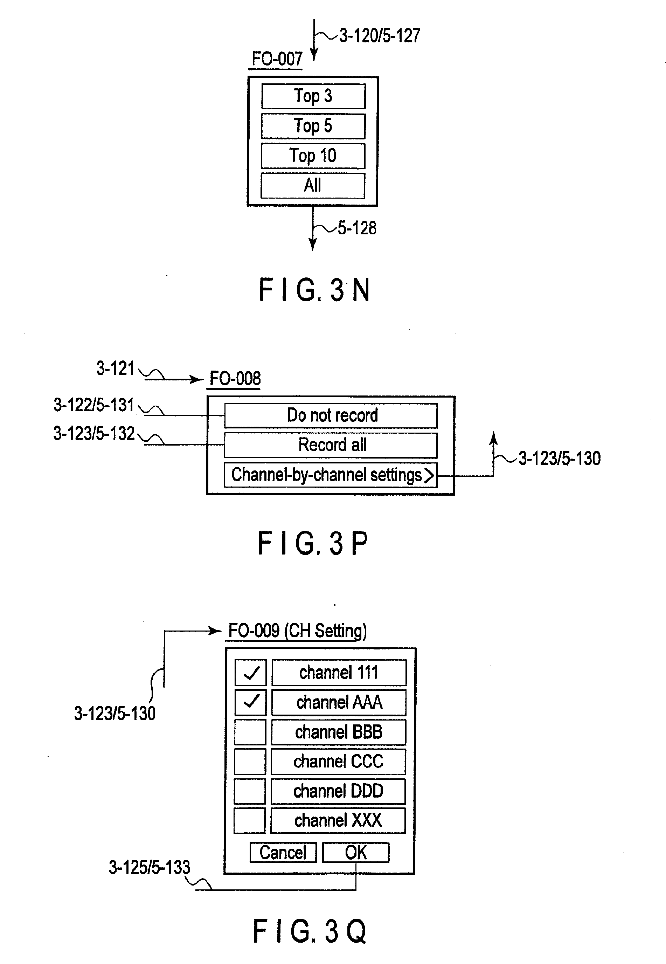

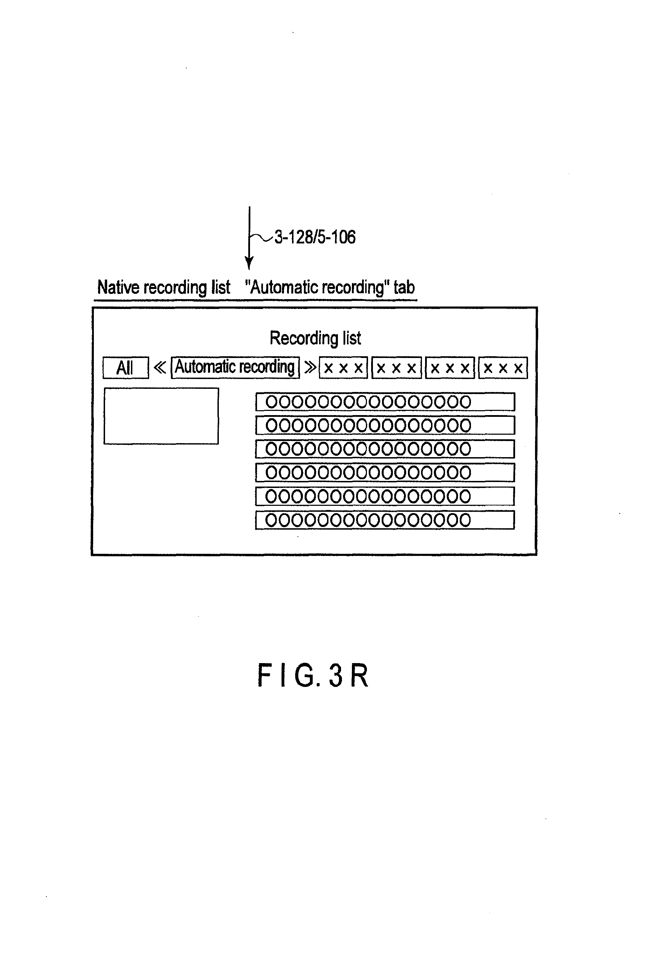

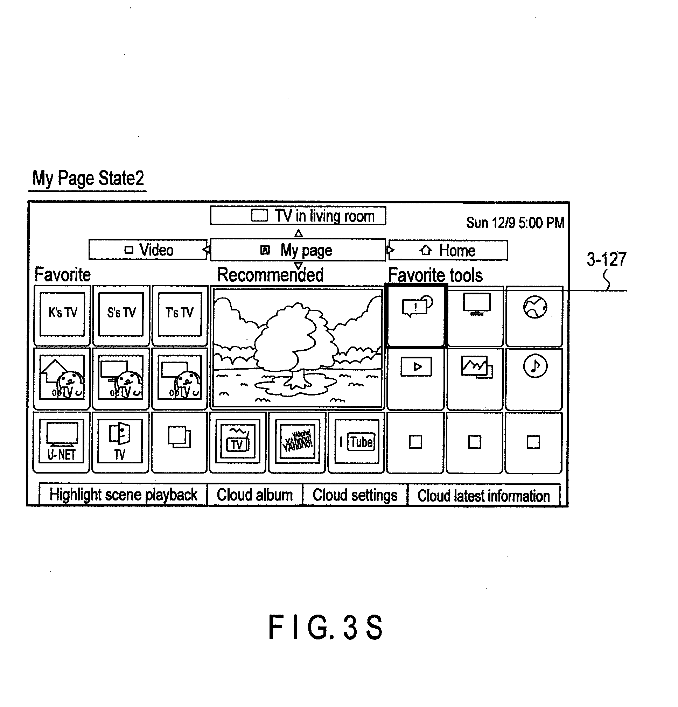

Individual display examples included in FIG. 40 will be described with reference to the respective drawings corresponding to the drawing numerals shown in [3A]-[3N] and [3P]-[3S] in FIG. 3 and [2Z] in FIG. 2.

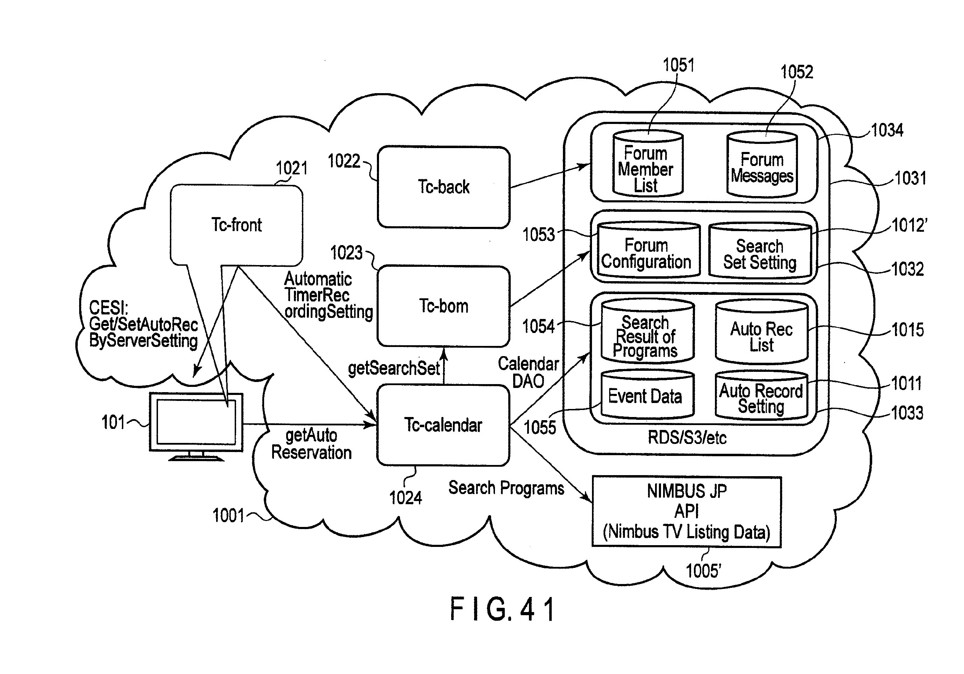

FIG. 41 illustrates an example of a configuration of a forum (server) and an automatic recording process <Backend> in the forum service.

As shown in FIG. 41, the forum (server) 1001 hierarchically includes, for example, a Tc-front server <Tc-front> 1021, a Tc-back server <Tc-back> 1022, a TC-bom server <Tc-bom> 1023, a TC-calendar server <Tc-calendar> 1024, an EPG database part <NIMBUS JP API (Nimbus TV Listing Data)> 1005', a calendar management part <calendar DAO <RDS/S3/etc>> 1031, and the like.

The front server 1021 sets scheduled automatic recording <Automatic Timer Recording Setting> in the television set 101 and the calendar server 1024.

The calendar server 1024 supplies the automatic schedules <get Auto Reservation> from the television set 101 to the bom server 1023, the EPG database part <NIMBUS JP API (Nimbus TV Listing Data)> 1005', and the calendar management part 1031.

Further, the calendar server 1024 sets a search result of programs (content [programs]) <Search Result of Programs> 1054, an automatic recording list <Auto Rec List> 1015, event data <Event Data> 1005' such as the start time, the end time, the broadcast type, the channel, and the like of an event specified by the EPGs or the calendar, i.e., a program corresponding to the search result, the scheduled automatic recording <Auto Rec Setting(s)> 1015, and the like.

The bom server 1023 sets a "forum type <Forum Configuration>" 1053 and "search conditions <Search Set Setting>" 1021' in the calendar management part 1031. The back server 1022 sets a "forum members list <Forum Members List>" 1051 and "forum messages <Forum Messages>" 1052 in the calendar management part 1031.

A region of the calendar server 1031 that is accessed by the back server 1022 will be referred to as a region 1034, a region of the calendar server 1031 that is accessed by the bom server 1023 will be referred to as a region 1032, and a region of the calendar server 1031 that is accessed by the calendar server 1024 will be referred to as a region 1033.

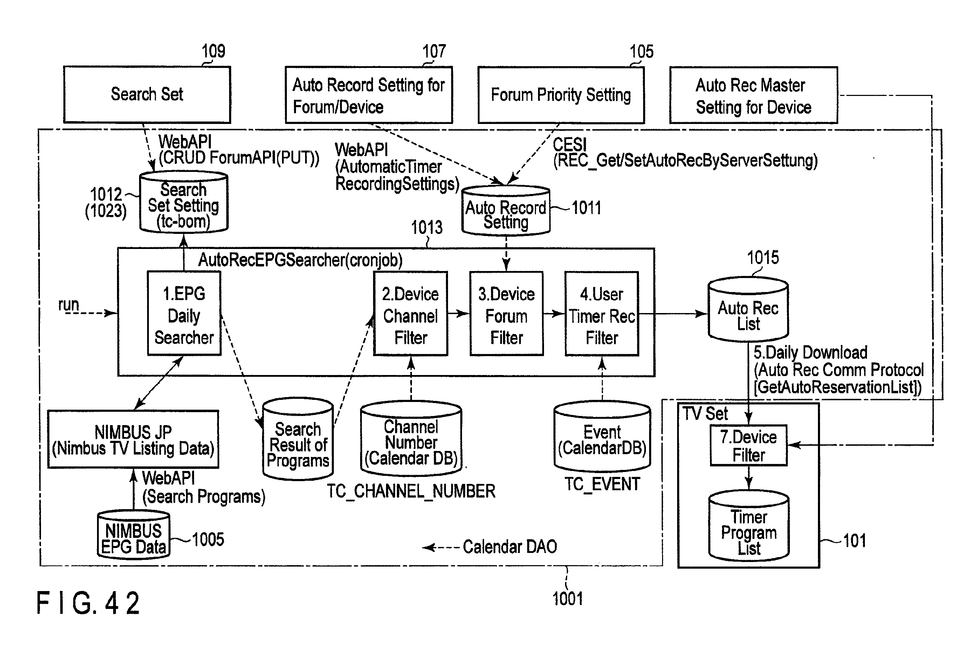

FIG. 42 illustrates a process of searching for programs to be targets for automatic recording in the forum service.

FIG. 42 schematically shows screen displays displayed on the display part of the television set 101, a shift of screen displays according to a user input (or setting) on the screen display, and a process (data processing) and a flow of the process in the server (forum) shown in FIG. 41.
<1> By referring to search conditions <Search Set Setting (N)> entered from the search condition <Search Set> (screen display) 109 via the bom server 1023, an EPG searcher <EPG Daily Searcher> 1013 searches for target programs matching the search conditions from the EPG database part 1005'. Television list data stored in the EPG database part 1005' may contain information on all the broadcast programs of all regions of the country. The search conditions are set for each forum, for example.
<2> The program list <Search Result of Programs> extracted by the EPG searcher <EPG Daily Searcher> 1013 is channel-adjusted by a first filtering device (Device Channel Filter> as necessary. That is, since there are cases where channels of a program differ according to the region in which the television set 101 receives broadcast signals, the first filtering device changes the channel of the program extracted by the EPG searcher 1013 to a channel appropriate for the region of the television set 101 (in which the television set 101 is positioned). The first filtering device <Device Channel Filter> detects a region to which the television set 101 belongs by referring to a channel list <Channel Number> of the calendar database part 1024 and adjusts the channel.
<3> A second filtering device <Device Forum Filter> filters a program to be automatically recoded according to restrictive conditions set in the television set 101, by referring to automatic recording conditions <Auto Record Setting (N)> 1011 entered via the automatic recording setting <Auto Rec Setting for Forum/Device> (screen display) 107 and priority setting <Forum Priority setting> (screen display) 105.
<4> A third filtering device <User Timer Rec Filter> checks to confirm that the program is in a time range in which scheduled recording has not been made (an event does not exist) and scheduled recording can be made. The third filtering device may add a new program to the program list from the second filtering device <Device Forum Filter>. In this case, the server 1001 is equipped with a function of causing a user account to register a program recommended by another user account as a program to be recorded. The third filtering device <Device Forum Filter> adds the recommended program (automatic recording <Auto Rec List>) to the program list.

Thereby, the automatic recording list <Auto Rec List> is set in the server 1001 such that the automatic recording list can be used (downloaded) by the television set (recording device) 101. The television set also checks to confirm that scheduled recording can be made on the basis of master settings <Auto Rec Master Setting for Device>.

The television set 101 (TV set or video recorder) downloads the automatic recording list <Auto Rec List> once a day, for example, and performs a recording process according to the automatic recording list <Auto Rec List>. When an HDD amount is less than a predetermined value, for example, the television set 101 performs filtering specific to the television set 101 on the automatic recording list <Auto Rec List>, and extracts a program to be recorded from the programs included in the downloaded automatic recording list <Auto Rec List>.

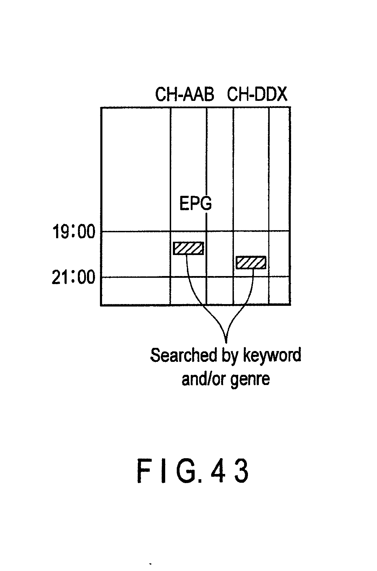

FIG. 43 illustrates an exemplary overview of an EPG searcher <EPG Daily Searcher> in the forum (server).

As shown in FIG. 43, the EPG searcher searches for a program on the basis of a combination of keywords "AND", an excluded keyword "NOT", or at least one of keywords "OR", for example, in one or two sets of search <Search Set (N)>, for example.

Further, the EPG searcher searches for a channel according to an order of priority <Priority>.

Further, the EPG searcher searches for a program according to a set recording time <interest>.

Further, the EPG searcher searches for a program according to a genre <Genre>.

Further, the EPG searcher is capable of removing rebroadcast <Re-broadcast> programs from the target for search.

Data contained in the EPG is also used for the search.

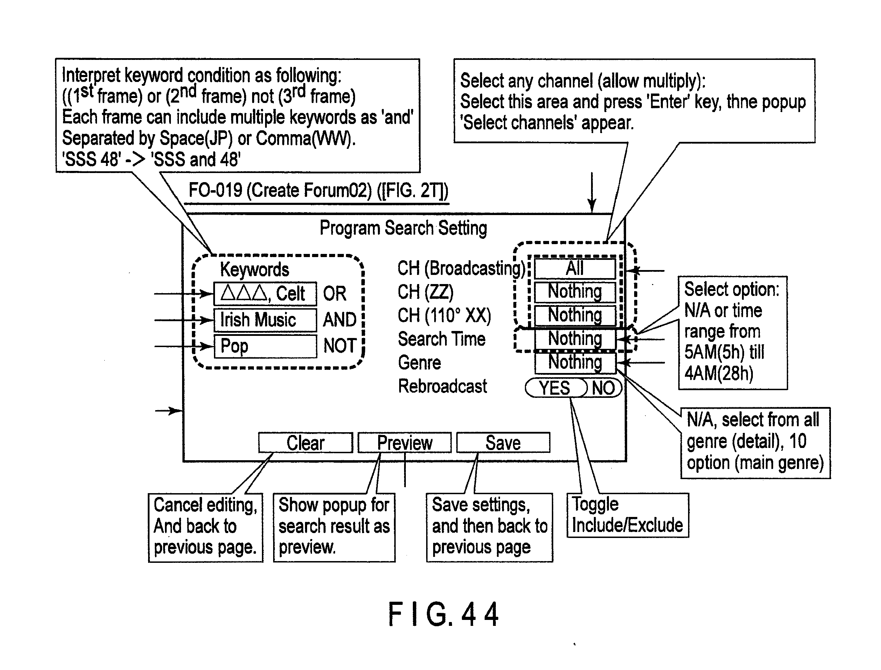

FIG. 44 illustrates an exemplary screen display of the EPG searcher in a forum (server).

That is, keyword input, broadcast type selection, recording target time, genre, and the like of a program to be recorded according to an automatic recording schedule that uses a forum service can be arbitrarily set in the television set 101, as shown in FIG. 2T (screen display example [019]).

The input (setting) will be described with reference to FIG. 2T.

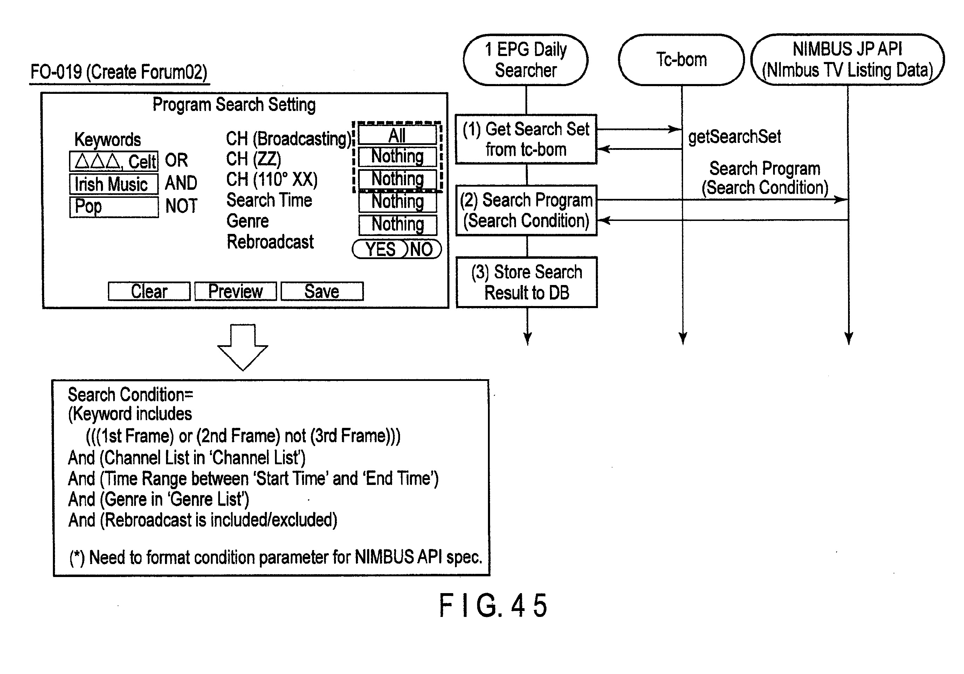

FIG. 45 illustrates search in the EPG searcher.

When conditions shown in FIG. 44, for example, are set on the screen display shown in FIG. 2T (screen display example [019]), search sets (search conditions) are set in the EPG searcher according to an access to the bom server by the EPG searcher (the EPG searcher acquires search conditions).

The EPG searcher searches a Nimbus television list database (EPG database part <NIMBUS JP API (Nimbus TV Listing Data)>) for a program appropriate to an input (setting conditions) on the basis of the acquired search conditions (when an appropriate program exists, the program is stored in a database (predetermined storage region).

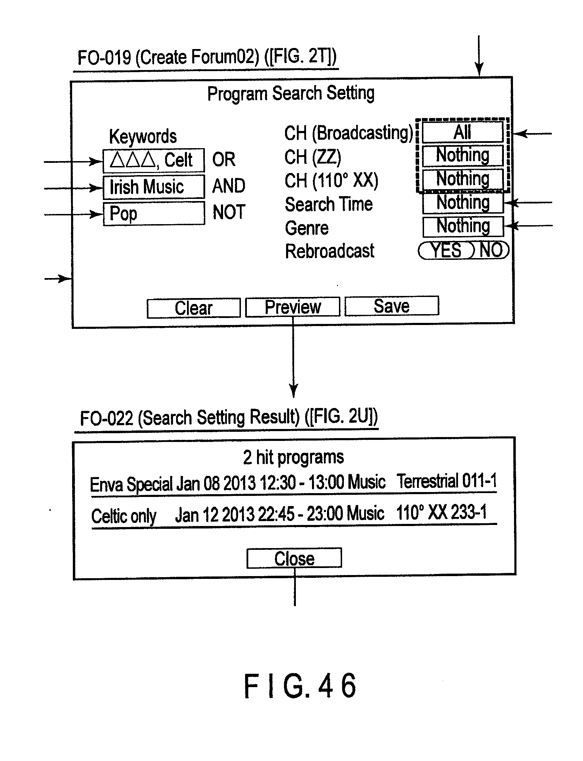

FIG. 46 illustrates an exemplary preview screen display of a search result in the EPG searcher. That is, a result of search for a program to be recorded in accordance with an automatic recording schedule using a forum service can be checked at arbitrary timing in the television set 101.

A description of the screen display will be given with reference to FIG. 2U (screen display example [022]).

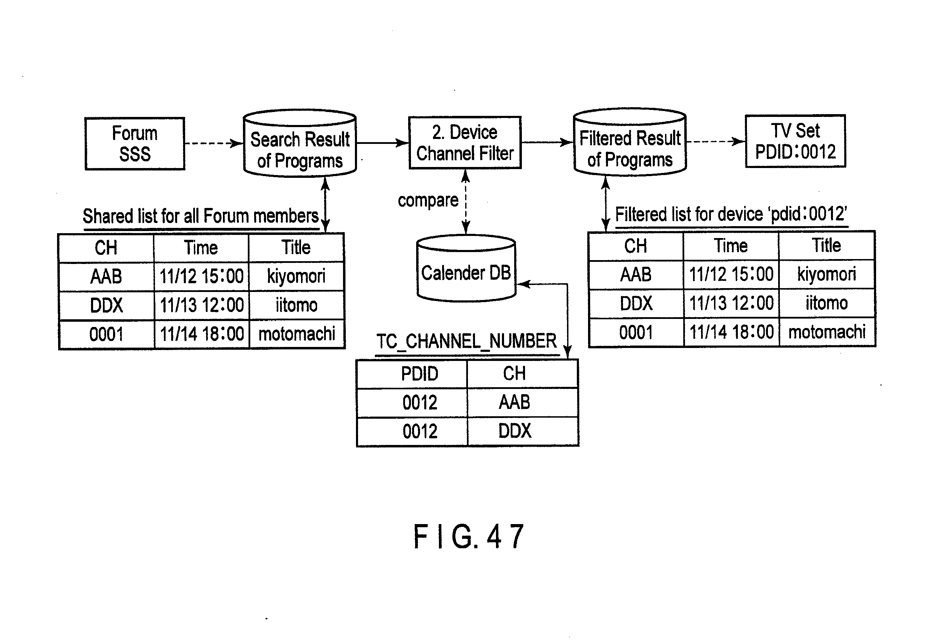

FIG. 47 illustrates an example of filtering performed by the first filtering device <Device Channel Filter>.

For example, in a case where a shared list shared by members of a forum exists, in a non-service area, i.e., in an area where a user who wants to set automatic recording lives but some of the broadcasts, such as programs provided by a broadcast station (distributor) or the like from which broadcasts cannot be received, or programs provided by a broadcaster using satellites, such as BS/CS broadcasts, cannot be received, the scheduled automatic recording of the appropriate program can be not set (not selected) using the channel filter.

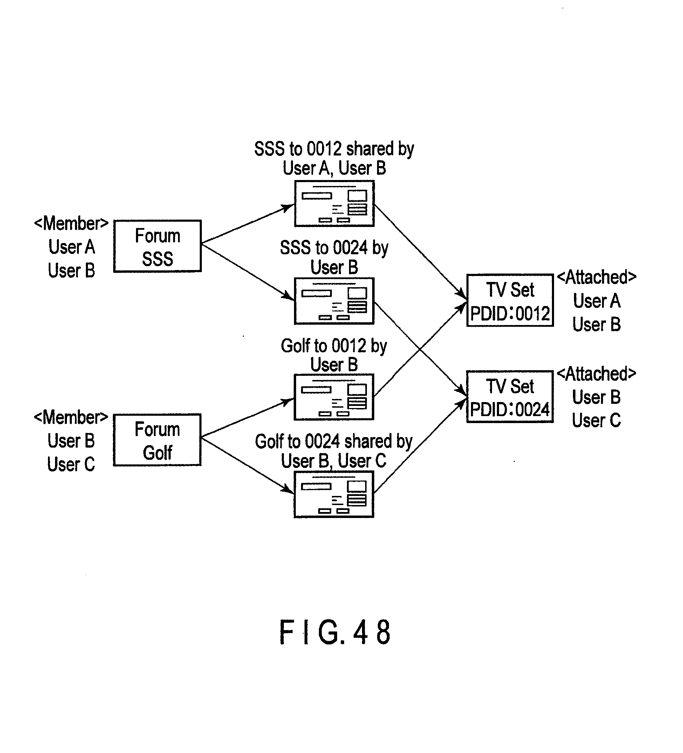

FIG. 48 illustrates an example of filtering performed by the third filtering device <User Timer Rec Filter>.

Hereinafter, a case will be described where the number of at least one of the television sets and the users (forum members) is two or more, and a first user (user A) who has registered a user account in a television set with ID (PDID) 0012, for example, a third user (user C) who has registered a user account in a television set with ID (PDID) 0024, for example, and a second user (user B) who has registered a user account in both of the television sets exist, by way of illustration. The server 1001 determines which of the forums users A, B, and C are registered in. When users A and B are registered in a forum SSS and users B and C are registered in a forum Golf, and scheduled automatic recording is suggested from the two forums, the forum SSS and the forum Golf, for example, the server 1001 is capable of sorting a program list set in one of the forums (forum SSS) to which user A belongs and a program list set in the other forum (forum Golf) to which user B belongs into the respective television sets. The program list is, for example, an automatic recording list, a viewing list, or the like.

That is, a list of programs is created according to conditions set by users A and B for the forum SSS as a program list (SSS to 0012 shared by User A, User B). For example, when user A sets a recording restricted to a time range A and user B sets a recording restricted to a time range B in the forum SSS, a list of programs corresponding to both of the time ranges A and B is created as a program list (SSS to 0012 shared by User A, User B). Similarly, a program list is created that satisfies an OR condition of users B and C as a program list (Golf to 0024 shared by User B, User C).

By downloading the above-described program lists to the television set <TV Set> 0012 and the television set <TV Set> 0024 and combining automatic recording schedules such that the television set 0012, in which the accounts of users A and B are registered, records a program scheduled for automatic recording on the basis of a program list (automatic recording schedules) provided by one of the forums, and the television set 0024 viewed by users C and B records programs scheduled for automatic recording on the basis of automatic recording schedules provided by the other forum, user B is capable of viewing programs proposed by each of the forums. Further, user A is capable of viewing a program recorded on the basis of a program list from a forum to which user A belongs. Similarly, user C is capable of recording and viewing a program recorded on the basis of a program list from a forum to which user C belongs (forum in which user C registers a user account).

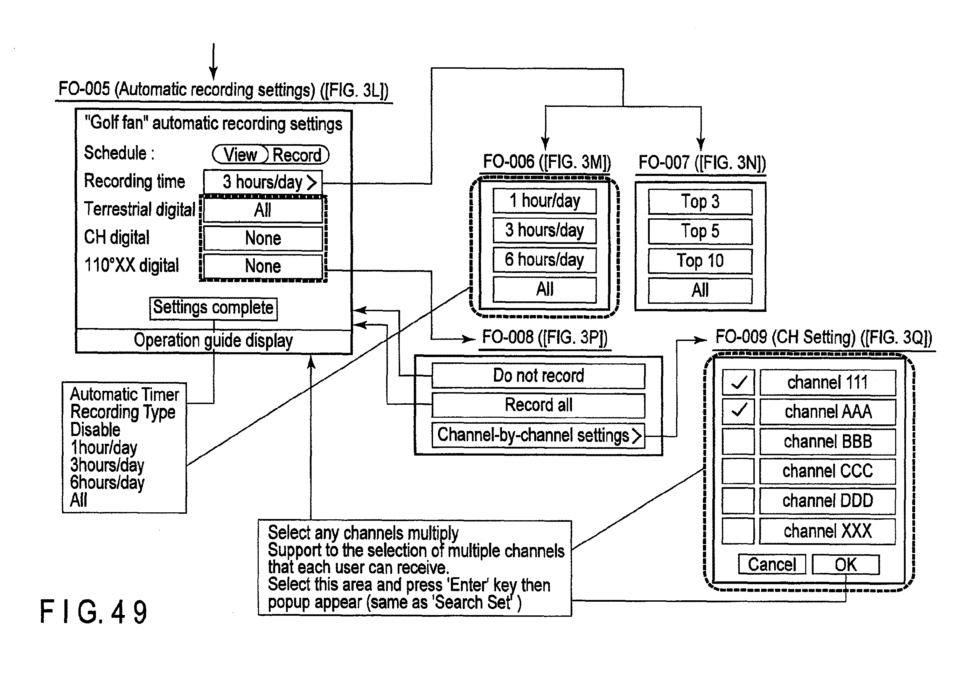

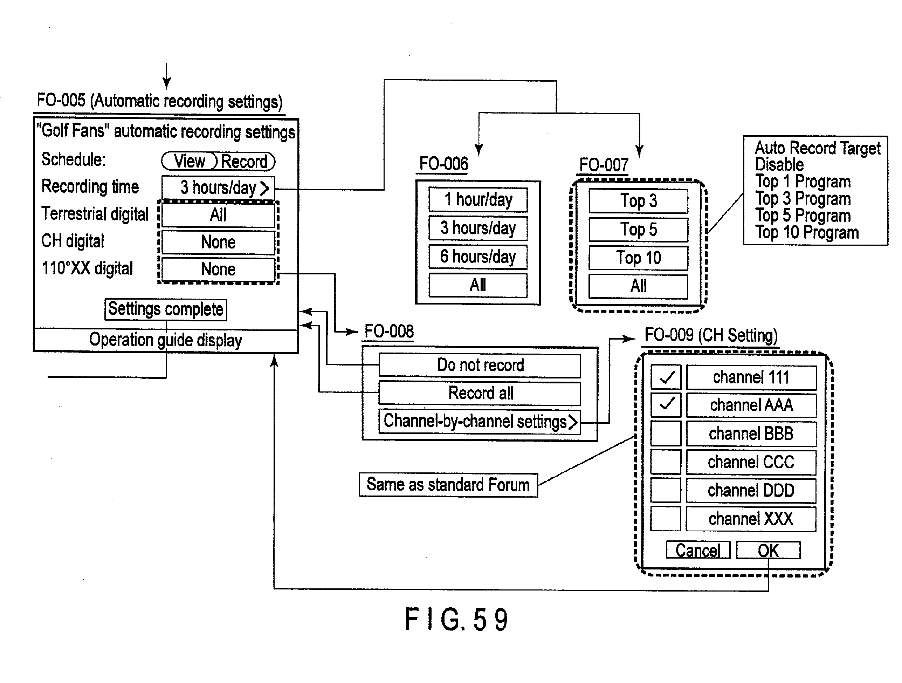

FIGS. 49 and 59 illustrate an example of filtering (condition settings) based on automatic recording condition settings <"'+++ forum' forum auto recording setting">. The screen display will be described with reference to FIG. 3L (screen display example [005]), FIG. 3M (screen display example [006]), FIG. 3N (screen display example [007]), FIG. 3P (screen display example [008], and FIG. 3Q (screen display example [009]).

The automatic recording condition settings define the number of programs or the total amount of recording time that can be recorded per day, and settings can be made such that only the upper ranks in a ranking are automatically recorded (screen display example [007]/FIG. 3N), only restricted channels are recoded (screen display example [009]/FIG. 3Q), or the like, for example.

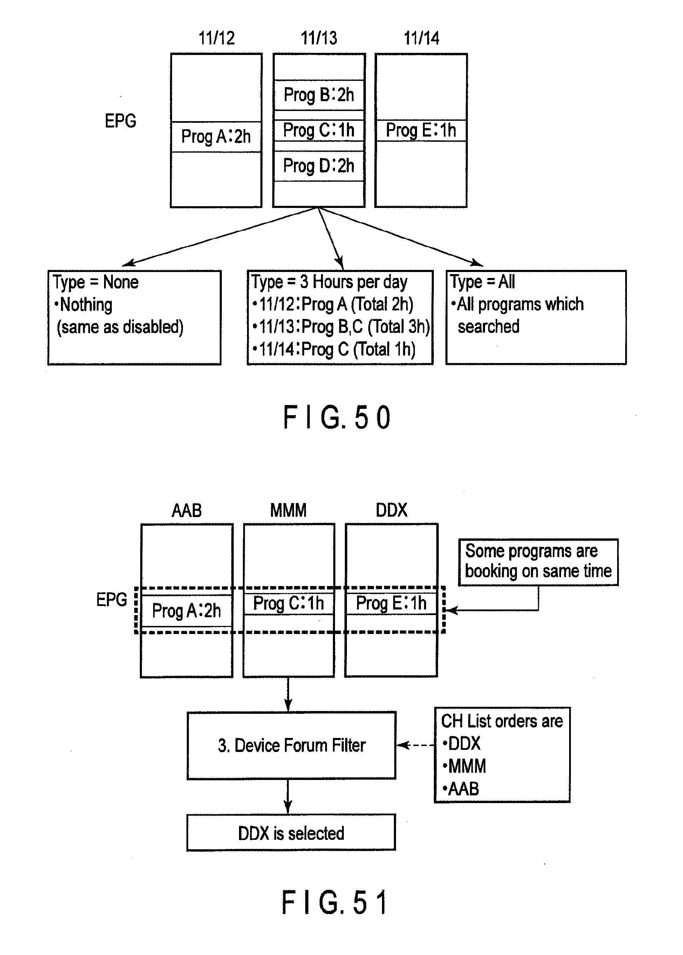

FIG. 50 illustrates an example of filtering (condition settings) based on the automatic recording condition settings <"'+++ forum' forum auto recording setting">. The example of FIG. 50 corresponds to the case where the total amount of recording time per day is set, according to the setting shown in FIG. 3M.

For example, when the number of programs scheduled for automatic recording on the 12th is one and the length of the program is two hours, the entire program can be recorded in a setting of three hours per day.

For example, when the number of programs scheduled for automatic recording on the 13th is three, the length of the programs is two hours, one hour, and two hours, two of the programs in ascending order of the scheduled time can be recorded (the third program cannot be recorded) in a setting of three hours per day.

FIG. 51 relates to the order of priority for channels as targets for recording in the automatic recording condition settings. More specifically, programs of a channel given with a higher priority in the EPG searcher shown in FIG. 43 are filtered as targets for scheduled automatic recording.

That is, in the example of FIG. 51, programs of a channel "CH-DDX" are stored in a scheduled automatic recording list as targets for scheduled automatic recording.

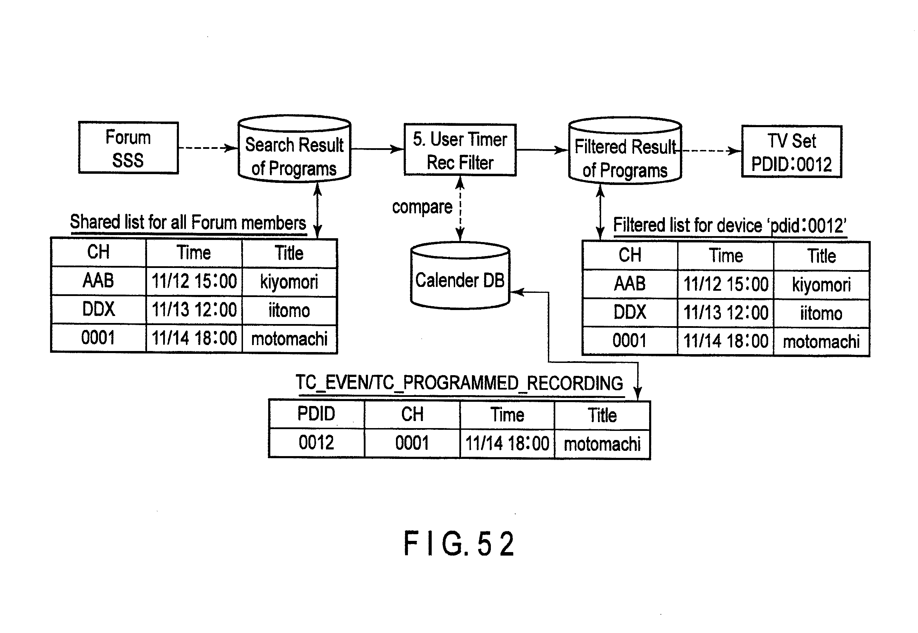

FIG. 52 illustrates an example of filtering in which an event (scheduled in advance by the user) is taken into consideration.

When a shared list shared by members of a forum exists and a program for which the user has set scheduling scheduled in advance by a user is included in the list, the program is excluded from the targets for scheduled automatic recording by the third filtering device <User Timer Rec Filter>.

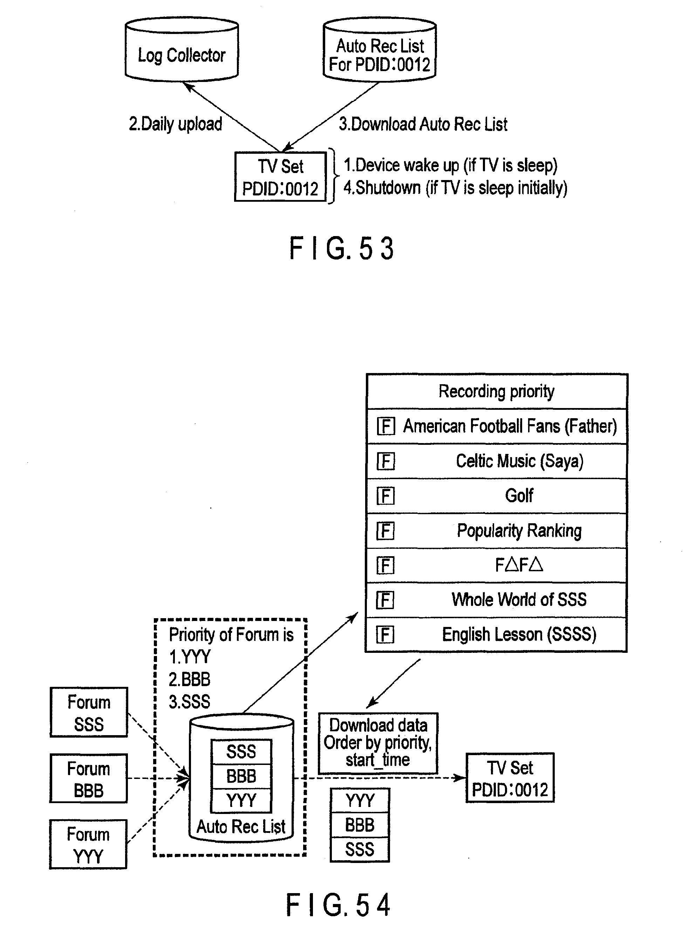

FIG. 53 illustrates an example of timing for update <Upload> of scheduled automatic recording.

A television set acquires an automatic recording list <Auto Rec List> for scheduled automatic recording at least once a day from the server. Accordingly, prior to the update (acquisition), schedule information <Reserve Data> stored in the television set is uploaded to the server. In this case, when the television set will be powered off (not powered on) or in a sleep mode, the television set is powered on prior to the upload.

When schedule information <Reserve Data> is uploaded from a television set, an automatic recording schedule list for the television set is prepared in the server. When the television set is not powered, the television set is powered off (set to a sleep mode) after completion of download of the automatic recording schedule list from the server (acquisition of the list).

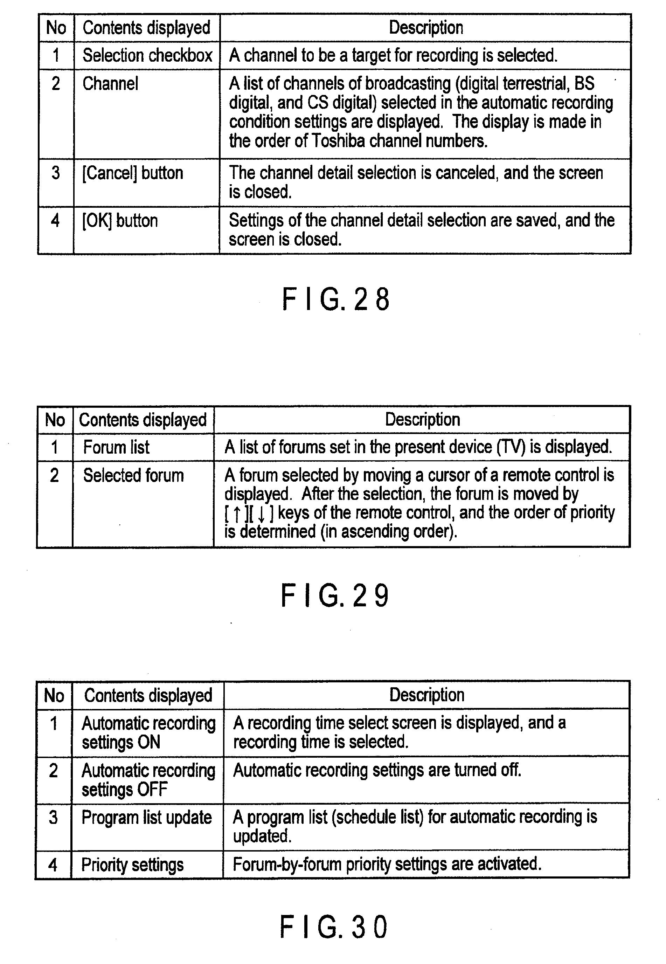

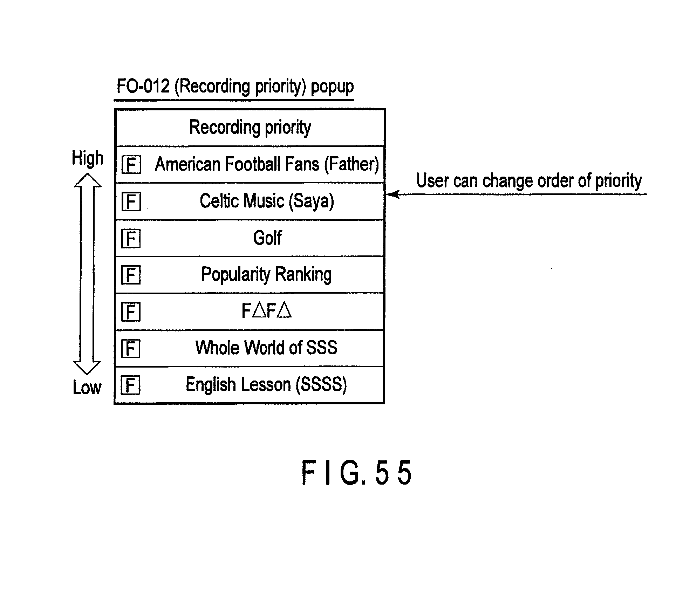

FIGS. 54 and 55 illustrate an example of setting of the order of priority in scheduled automatic recording set in the television set 101. In the setting, an order of priority is set for each of a plurality of forums in which a plurality of users registered in the television set 101 are registered. Personal accounts (Father) and (Saya) and a common account (no name) are registered in the television set 101, and are managed by the server 1001 in which a unique identifier is assigned to each account. Each of the accounts can be registered in an arbitrary forum, and can acquire an automatic recording list from each forum. The personal accounts "Father" and "Saya" may be registered in different devices. In this case, the screen display corresponds to a [Forum priority] setting screen shown in FIG. 3H (screen display example [012]). As for the setting method, a forum for which the order of priority should be changed is selected by moving a cursor with the [↑] and [↓] keys of a remote control and then (a display of) the forum is moved to a position to which the forum should be moved, thereby determining the order of priority, as shown in FIG. 29. A forum positioned on an upper side is given with a higher order of priority (more reliable recording can be expected).

By operating (turning on/pressing) an [Enter] key of the remote control unit once [first time], the target forum is selected. By operating (turning on/pressing) the [Enter] key of the remote control unit once more [second time], the selected forum is deselected.

A higher order of priority is given to a forum set on the [Forum priority] screen shown in FIG. 3H, but when a list of automatic recording schedules is given by a plurality of forums in the same genre, the order of priority is determined according to the start time (of recording).

As described with reference to FIG. 48, when two or more recording devices (television sets) are provided, a unified recording device (recording destination device) may be used for each forum. Further, as described with reference to FIG. 52, a program for which the user has already set scheduling is recorded preferentially.

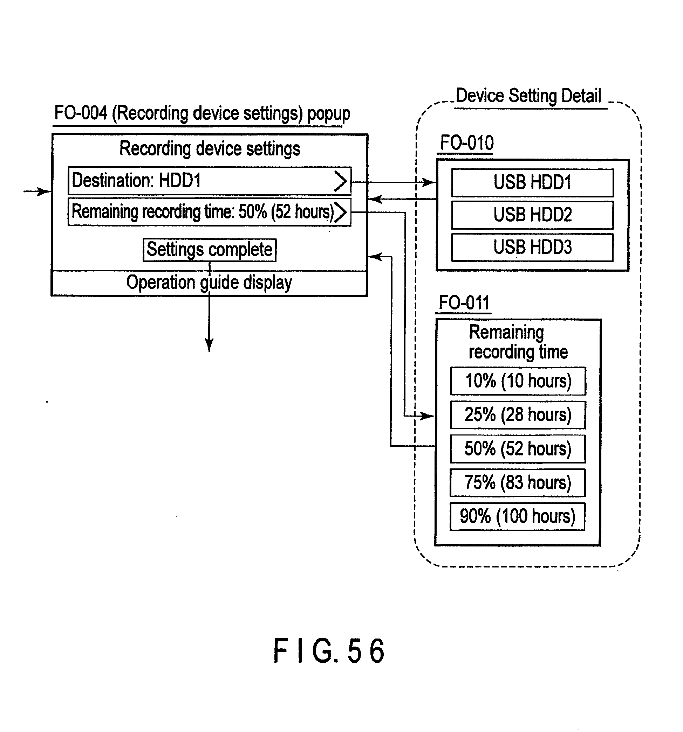

FIG. 56 relates to setting of a recording time (used space of a recording device (HDD) with respect to the recording capacity) and a destination device (recording device) in scheduled automatic recording. That is, a destination device and a recording time of a program to be recorded according to scheduled automatic recording using a forum service can be arbitrarily set in the television set 101. The screen display will be described in detail with reference to FIG. 3K (screen display example [004]), FIG. 3E (screen display example [010]), and FIG. 3F (screen display example [011]).

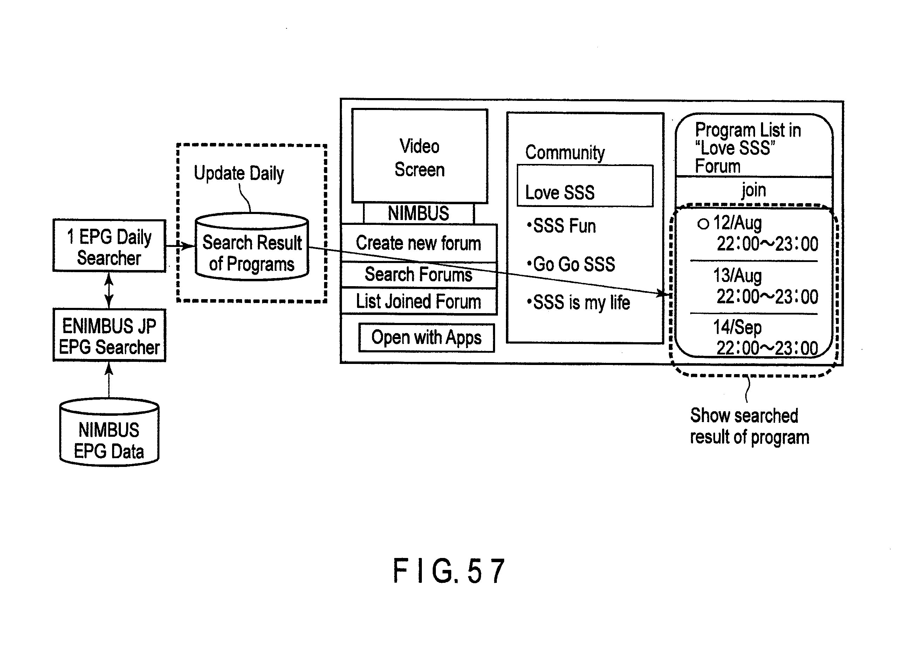

FIG. 57 illustrates a preview of an automatic recording schedule using a forum service.

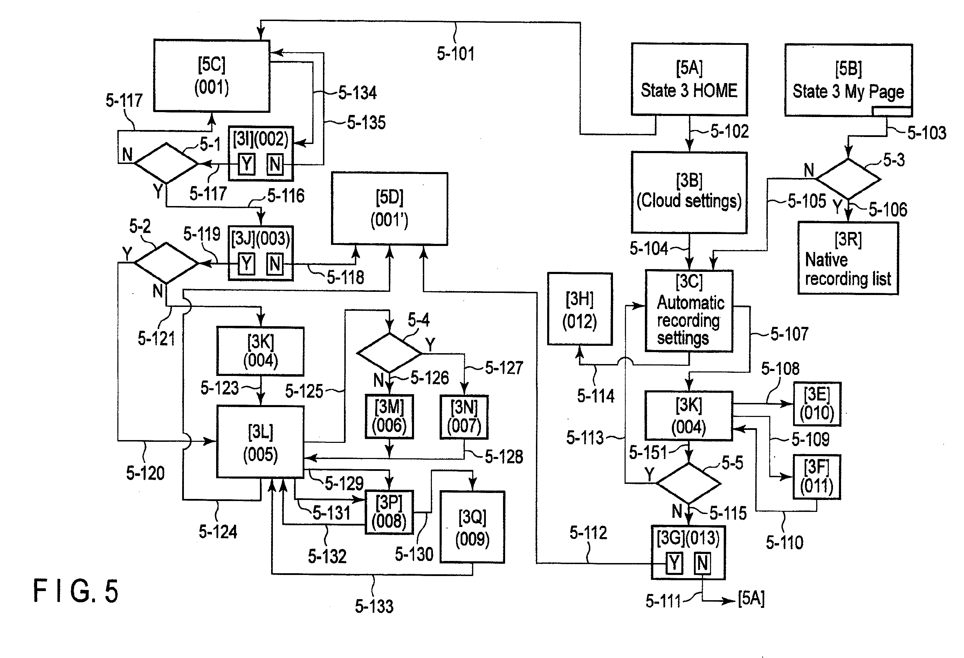

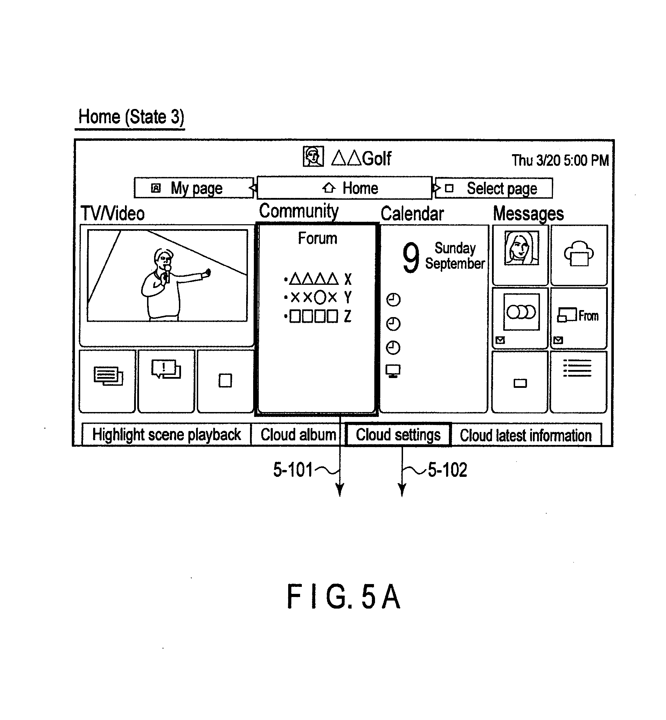

In the television set 101, the user is capable of checking information on a forum to which a program to be recorded according to scheduled automatic recording using a forum service belongs, information on a relevant forum, a program list obtained by subscribing to the forum, and the like on the forum top screen. When the user subscribes to a forum, the forum top screen displays a program proposed by the forum as a picture-in-picture (PiP) in a PinP display region. The screen display is similar to FIG. 2Z (screen display example [001]) and the state (FIGS. 3A and 5A) in which a specific forum is selected from the screen display shown in FIG. 2Z.

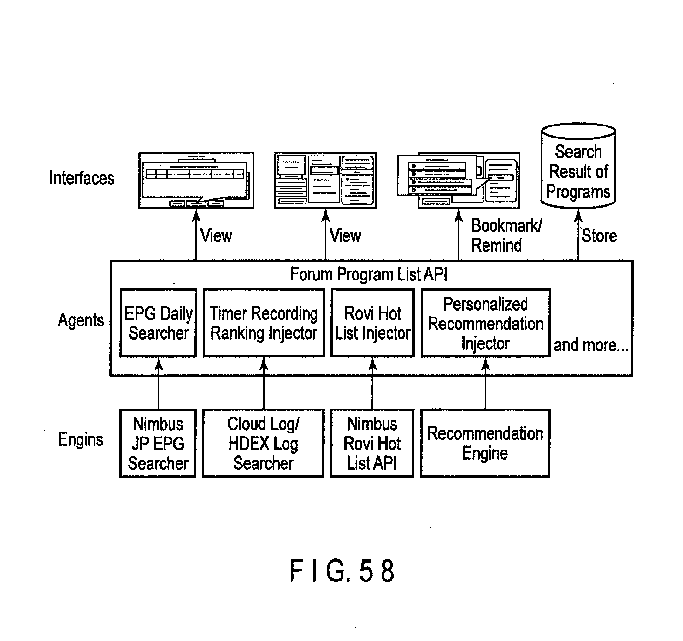

FIG. 58 illustrates a configuration of a program list processing application <Forum Program List API> of the server (cloud service).

The program list processing application unifies agents <Agents> that function as signal processors configured to display a plurality of user interfaces, such as a [Program search set <"Search Set N">] screen (FIG. 2T) shown in FIG. 46, the forum top screen shown in FIG. 57, and a variety of screen displays (FIG. 2Z (screen display example [001]) that shift according to selection by a user from the forum top screen shown in FIG. 57, for example. It is to be noted that "N" represents a positive integer.

The program list processing application is obtained by unifying individual agents <Agents>, i.e., the EPG searcher <EPG Daily Searcher>, a ranking injector <Timer Recording Ranking Injector>, a hot list injector <"+++" Hot List Injector>, and a user schedule setting part <Personalized Recommendation Injector>, which will be described with reference to FIG. 42 and the like.

The EPG searcher is an application (program) which acquires data from a Nimbus EPG searcher <Nimbus EPG Searcher>, and the ranking injector similarly acquires data from a Cloud Log/HDEX Log Searcher <Cloud Log/HDEX Log Searcher>. The host list injector <"+++" Hot List Injector> acquires data from a Nimbus hot list application <Nimbus "+++" Hot List API>, and the user schedule setting part similarly acquires data from a recommendation engine <Recommendation Engine>.

A search result <Search Result of Programs> by the program list processing application is stored (recorded) in the recording device.

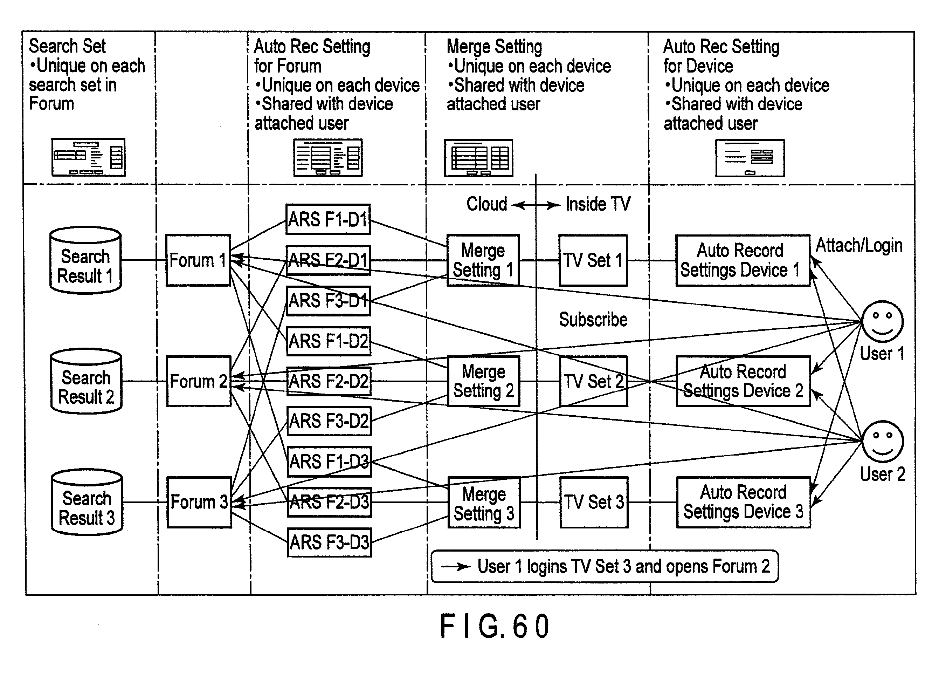

FIG. 60 illustrates an example of development according to the embodiment described with reference to FIG. 48.

When at least one of the number of television sets and the number of users (forum members) is two or more, it is possible to make settings on scheduled automatic recording, which is set according to information proposed by an arbitrary user (forum member), such that different recording devices (television devices) perform recording for the respective forums.

That is, when each of two users (forum members) performs automatic recording on a recording device (television set) according to a proposal (recommendation) by an arbitrary forum, it is possible to compile automatic recording schedules of each forum in each of the television sets [1] to [3].

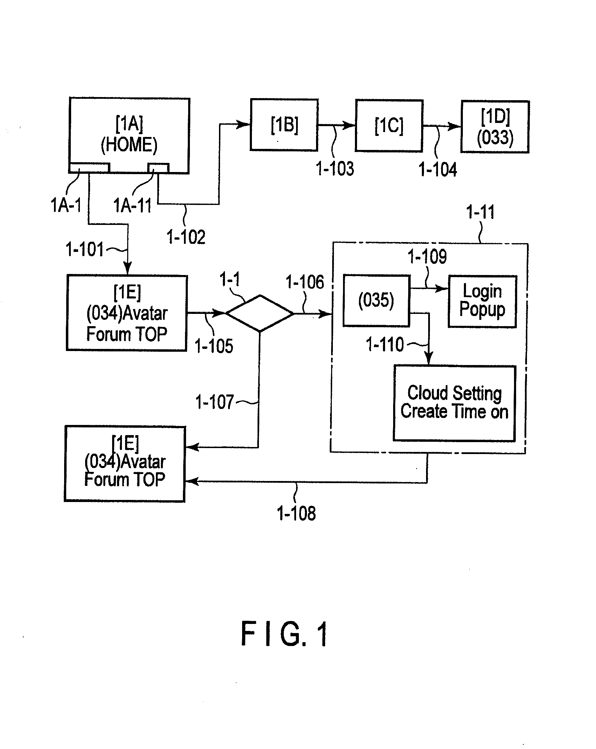

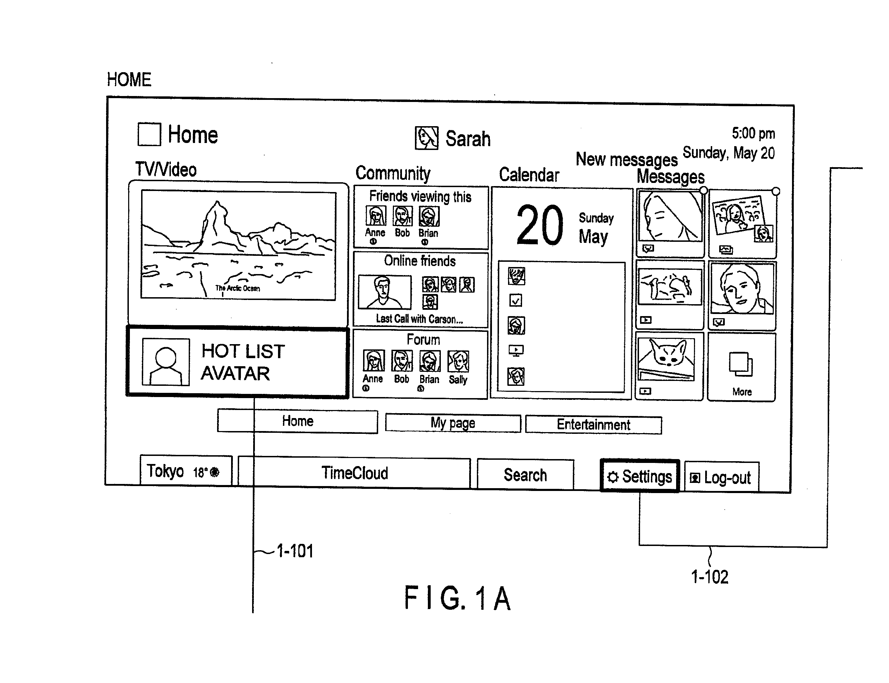

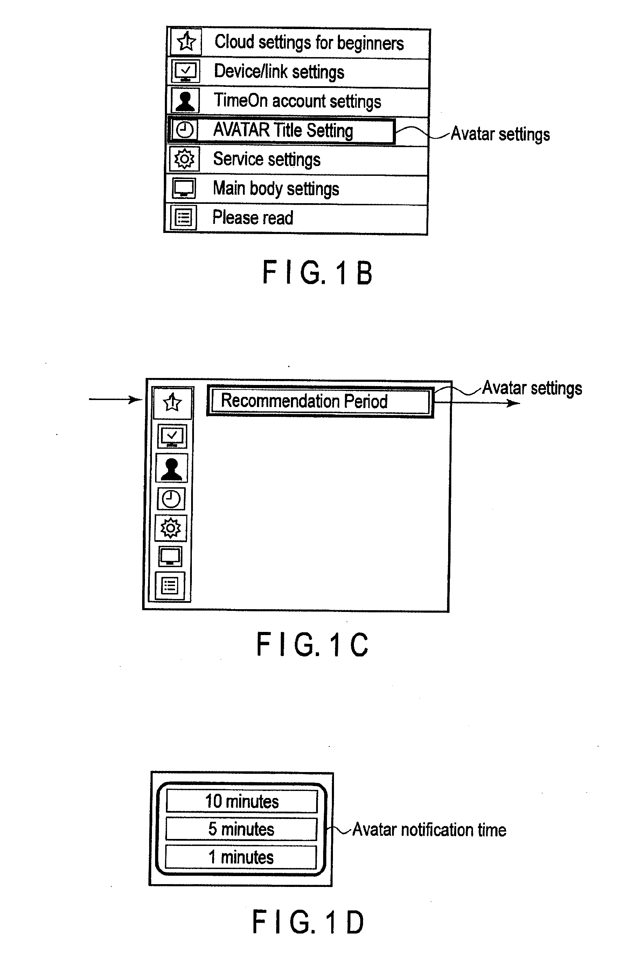

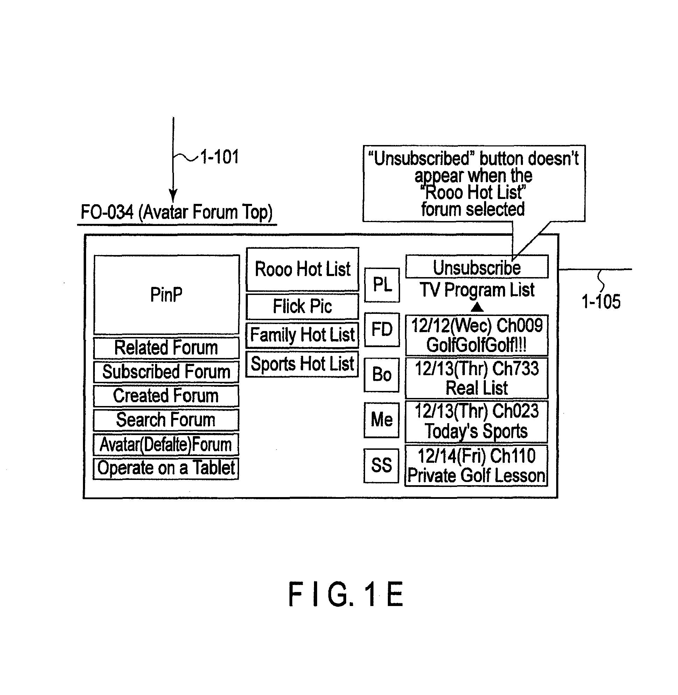

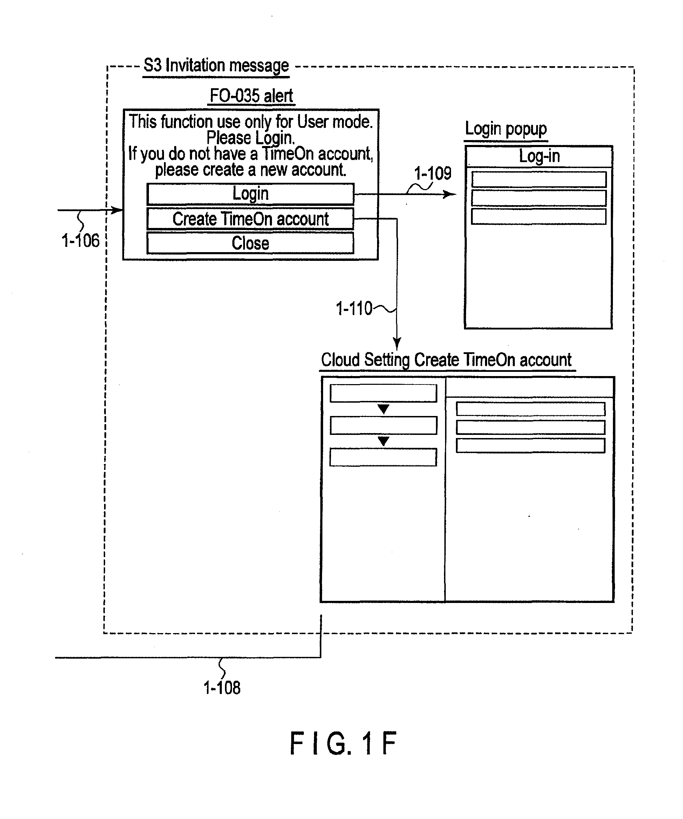

Next, an embodiment that achieves the above-described request will be described. FIGS. 1-36 illustrate screen examples and processing examples in the television set 101.

### <<Forum Top>>

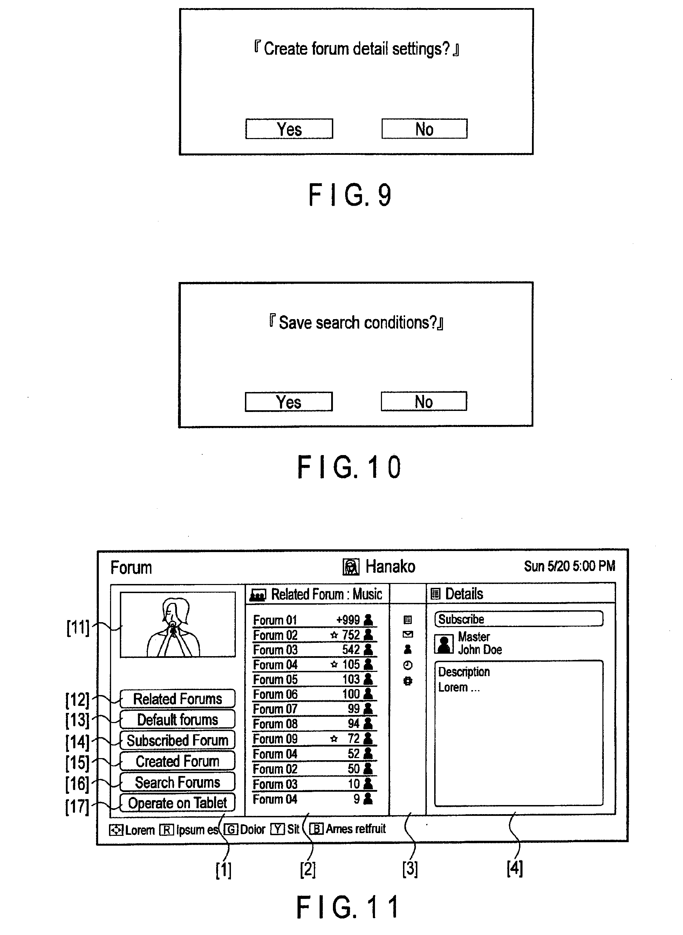

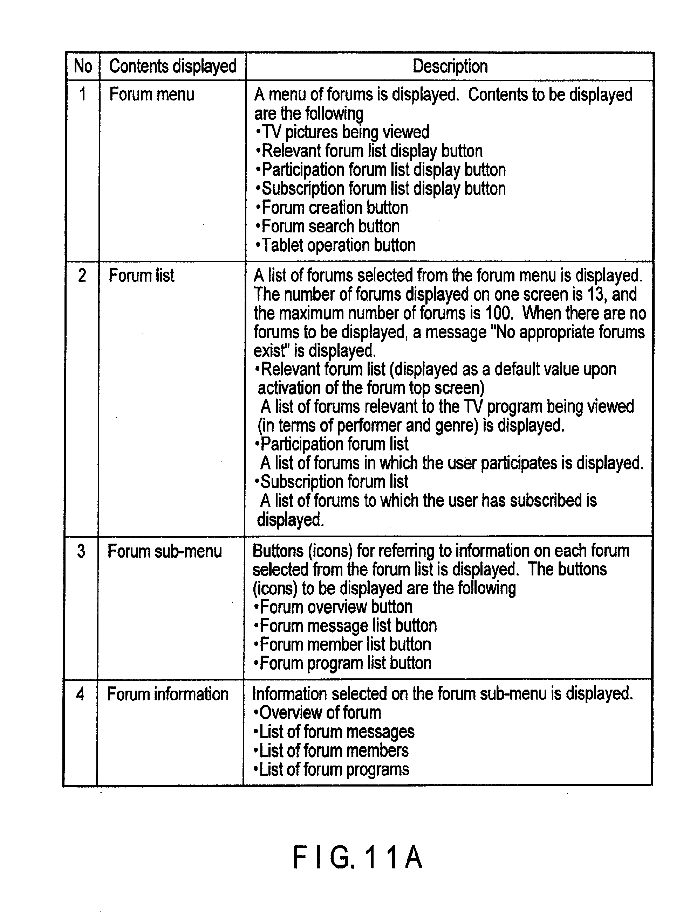

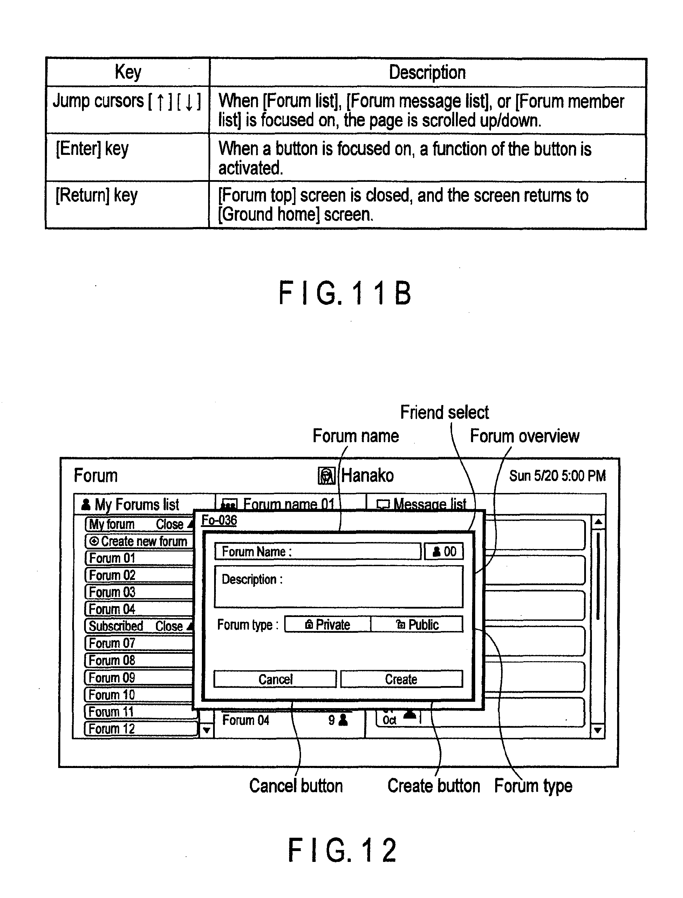

FIG. 11 illustrates an exemplary screen display of the display device according to the embodiment, and is a display example of a forum top <"Forum TOP"> screen display.

The forum top screen displays a list of forums in which the logged-in user (user) participates.

The initial display of the forum top <"Forum TOP"> screen display includes the following [1] to [4]:
[1] Forum menu
[2] Forum list
[3] Forum sub-menu
[4] Forum details

FIG. 11A is an exemplary diagram of contents of the screen display shown in FIG. 11, illustrating contents to be displayed on the forum top screen display.

### [1] Forum menu

A menu of forums is displayed.
- Television (TV) pictures being viewed [11]
- Relevant forum list display button [12]
- Participation forum list display button [13]
- Subscription forum list display button [14]
- Forum create button [15]
- Forum search button [16]
- Tablet operate button [17]

### [2] Forum list

A list of forums selected from the forum menu is displayed.

The number of forums displayed on one screen is 13, and the maximum number of forums is 100.

When there are no forums to be displayed, a message "No appropriate forums exist" is displayed.

### - Relevant forum list (forum top)

A relevant forum list is displayed as a default value upon activation of the screen.

A list of forums relevant to a television program being viewed (in terms of the performer, the genre, and the like) is displayed.

### - Participation forum list

A list of forums in which the user participates is displayed.

### - Subscription forum list

A list of forums to which the user has registered subscription is displayed.

### [3] Forum sub-menu

Buttons (icons) for referring to information on each forum selected in the forum list is displayed.

The buttons (icons) to be displayed on the forum sub-menu are as follows:
- Forum overview button
- Forum message list button
- Forum member list button
- Forum program list button

### [4] Forum Details

Information selected on the forum sub-menu is displayed.
- Overview of forum
- List of forum messages
- List of forum members
- List of forum programs

FIG. 11B is an exemplary diagram of a relationship between displays and control instructions of the screen display shown in FIG. 11, illustrating remote control keys and operations corresponding to instructions made by a remote control on the forum top screen display.

Operations for display are as follows:
[←] key
[→] key
[t] key
[↓] key

Each of the arrow keys shifts information selected (focused display, reversed display, or display with changed background color) in the [1] Forum menu, the [2] Forum list, the [3] Forum sub-menu, and the [4] Forum details, by one.

When a dead end appears ([next] information in the direction indicated by each of the arrow keys does not exist), movement is not made even if a key operation (control signal) is performed.
[ 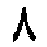 (▲)] key (jump cursor)
[ 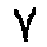 (▼)] key (jump cursor)
(jump cursor) key
(jump cursor) key

When the "Forum list", the "Forum message list", or the "Forum member list" is focused on, the page is scrolled up or down (jumped to the [previous] page or the [next] page of the page being displayed).

### [Enter] key

A function of the focused [button] is activated.

### (A control signal that executes a function of the button is output.)

### [Return] key

The forum top screen is closed, and the screen returns to the cloud home <"Cloud Home"> screen.

### (A control signal that displays a screen display associated as a [previous] screen display is output.)

### <<"Create new forum">>

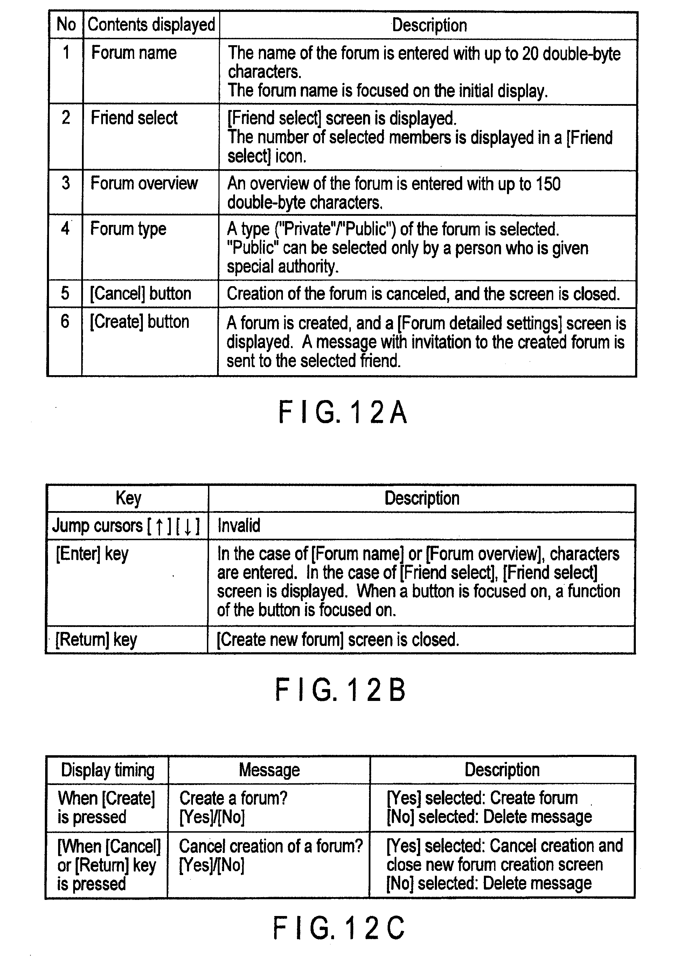

FIG. 12 is an exemplary diagram of a screen display of the display device according to the embodiment, illustrating contents to be displayed on the new forum creation <"Create new Forum"> screen display.

By selecting the new forum creation <"Create new Forum"> from the participation forum list on the forum top screen display shown in FIG. 11, a new forum creation screen [036] is displayed as an on-screen display (OSD) over a pop-up <Pop Up> screen display ([screen currently being displayed]).

The new forum creation screen [036] includes the following:
- Forum name
- Friend <"Friend"> select
- Forum overview
- Forum type
- Cancel <"Cancel"> button
- Create <"Create"> button

FIG. 12A illustrates contents of display of the new forum creation <"Create new forum"> screen display [036] shown in FIG. 12.

### [1] Forum name

The name of the forum is (can be) entered with up to 20 double-byte characters.

The forum name is focused on on the initial display.

### (A GUI (character input) screen of a digital TV is used for input of characters.)

### [2] Friend <"Friend"> select

A [Friend select] screen is displayed.

The number of selected members is displayed in a [Friend select] icon.

### [3] Forum overview

An overview of the forum is entered with up to 150 double-byte characters.

### (A GUI (character input) screen of a digital TV is used for input of characters.)

### [4] Forum type

A type <"Private" or "Public"> of the forum can be selected.

"Public" can be selected only by a user who is given special authority.

### [5] Cancel <"Cancel"> button

Creation of the forum is canceled, and the screen is closed.

### (A control signal for displaying a screen display associated as a [previous] screen display is output.)

### [6] Create <"Create"> button

A forum is created, and a [Forum <"Forum"> detail setting] screen is displayed.

An invitation message to the created forum is sent to the selected friend <Friend>.

FIG. 12B is an exemplary diagram of a relationship between displays and control instructions of the screen display shown in FIG. 12, illustrating remote control keys and operations in response to display on the screen display of the new forum creation screen [036].
[←] key
[→] key
[↑] key
[↓] key

Each of the arrow keys shifts information selected (focused display, reversed display, or display with changed background color) in each of the [1] Forum name, the [2] Friend select, [3] Forum overview, and [4] Forum type, by one.

When a dead end appears ([next] information in the direction indicated by each of the arrow keys does not exist), movement is not made even if a key operation (control signal) is performed.
[ 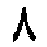 (▲)] (jump cursor) key
[ 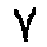 (▼)] (jump cursor) key

The key operation is invalidated.

### [Enter] key

### "Forum name", "Forum overview"

A GUI (character input) screen of the digital TV 101 is activated, and a character input is received.

### "Friend select"

A "Friend select" screen is displayed.

A function of a focused [button] is activated.

### (A control signal that executes the function of the button is output.)

### [Return] key

The [Create forum] screen is closed, and a control signal that displays a screen display associated as a [previous] screen display is output.

FIG. 12C is an exemplary diagram of operations corresponding to button displays on the screen display shown in FIG. 12, illustrating instruction inputs made with remote control keys and operations on the screen display of the new forum creation screen [036].

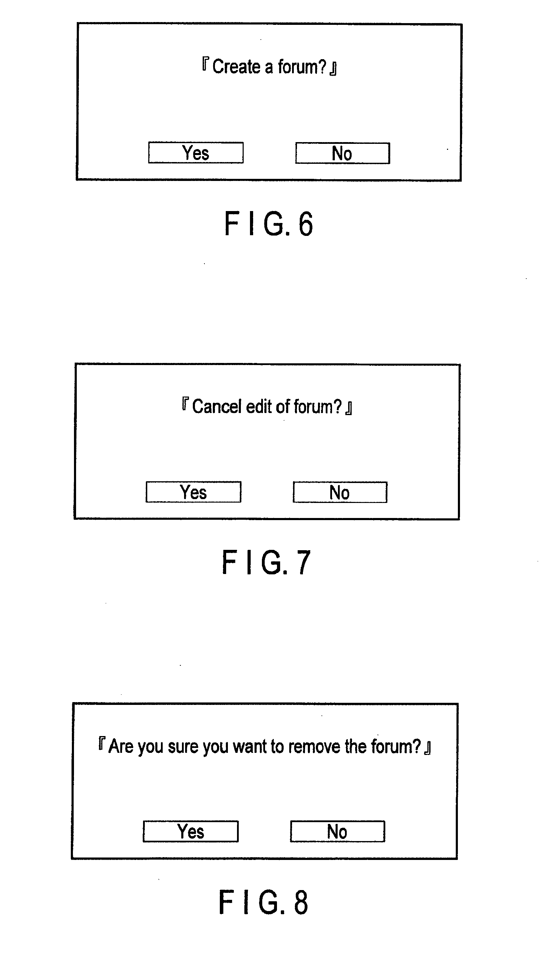

When [Create <"Create">] button is turned on (pressed), a message "Create a forum?" is displayed (FIG. 6).

Further, "YES" and "NO" buttons are displayed, as shown in [FIG. 6].

By selecting "YES", i.e., by focusing on the button with the [←] and [→] keys and turning on the [Enter] button, the new forum creation screen [036] is displayed.

By selecting "NO", i.e., by focusing on the button with the [←] and [→] keys and turning on the [Enter] button, the message ([FIG. 6]) is deleted, the new forum creation screen [036] is closed, and a control signal configured to display a screen display associated as a [Previous] screen display is output.

### [Cancel <"Cancel">] key

The "new forum create" screen is closed (A control signal for displaying a screen display associated as a [Previous] screen display is output).

### <<Forum Edit>>

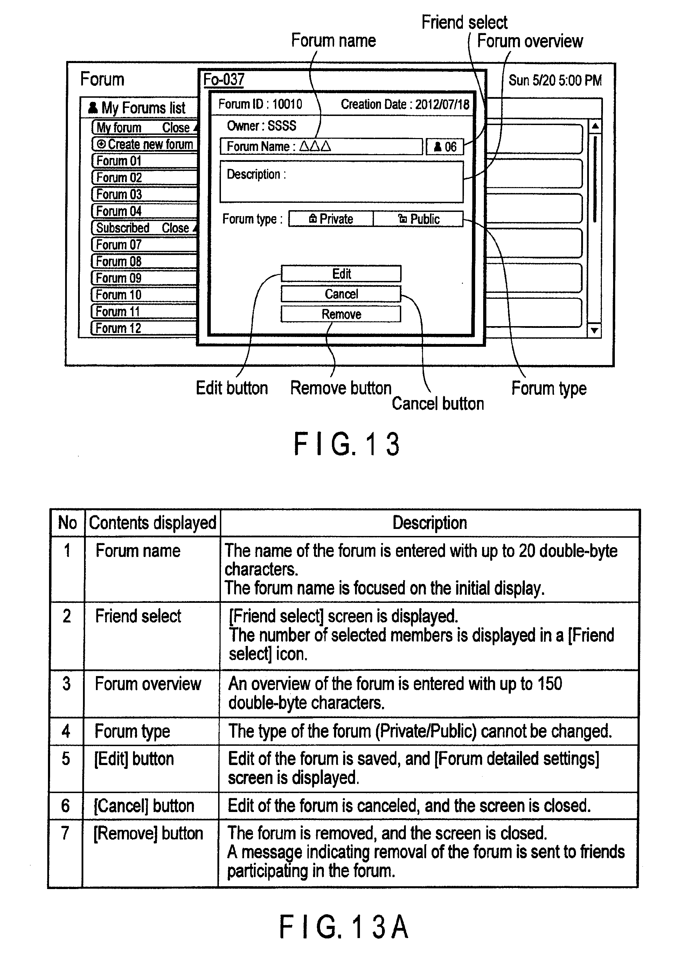

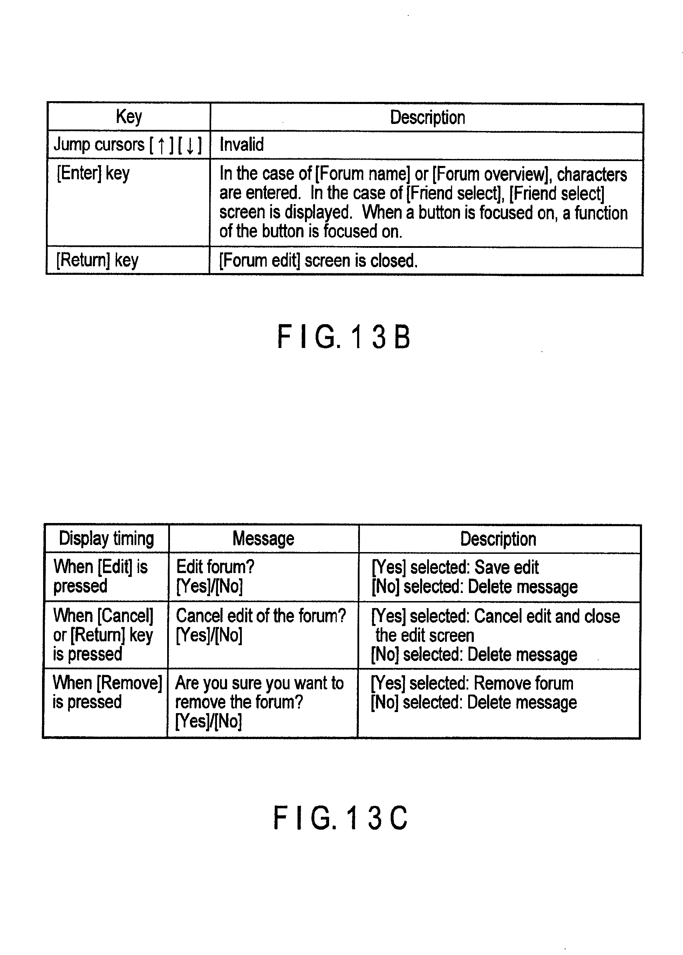

FIG. 13 is an exemplary diagram of a screen display of the display device according to the embodiment, illustrating contents to be displayed on the screen display of a <Forum edit "Edit"> screen [037].

By selecting edit <"Edit"> on the display of the forum details screen shown in FIG. 11, the forum edit screen [037] shown in FIG. 13 is displayed as a pop-up. The edit screen includes, for example, the following:
- Edit <"Edit"> button
- Cancel <"Cancel"> button
- Remove <"Remove"> button
- Forum name
- Friend select button
- Forum overview
- Forum type

FIG. 13A is an exemplary diagram of contents of the screen display shown in FIG. 13, illustrating contents to be displayed on a screen display of the edit <"Edit"> screen.

### - Edit button

An edit button is displayed only when the logged-in user is the master of the forum (the edit button is effective only for the master of the forum).

### - Cancel button

Edit of the forum is canceled, and the screen is closed.

### - Remove button

The forum is removed, and the screen is closed.

A message indicating removal of the forum is sent to friends participating in the forum.

### - Forum name

The name of the forum is (can be) entered with up to 20 double-byte characters.

The forum name is focused on on the initial display. (A GUI (character input) screen of a digital TV is used for input of characters.)

### - Friend select

A [friend screen] is displayed.

The number of selected members is displayed in a [Friend select] icon.

### - Forum overview

An overview of the forum is entered with up to 150 double-byte characters (A GUI (character input) screen of a digital TV is used for input of characters).

### - Forum type

The forum type is invalidated (The type of the forum "private <"Private"> or public <"Public">" cannot be changed).

FIG. 13B is an exemplary diagram of a relationship between displays and control instructions of the screen display shown in FIG. 13, illustrating remote control keys and operations in response to display on the screen display of the [Edit] screen.
[←] key
[→] key
[↑] key
[↓] key

Each of the arrow keys shifts information selected (focused display, reversed display, or display with changed background color) in each of the "Forum name", the "Friend select", the "Forum overview", and the "Forum type" by one.

When a dead end appears ([next] information in the direction indicated by each of the arrow keys does not exist), movement is not made even if a key operation (control signal) is performed.
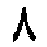 (▲)] key (jump cursor)
[ 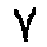 (▼)] key (jump cursor)

The key operation is invalidated.

### [Enter] key

### - "Forum name", "Forum overview"

A GUI (character input) screen of the digital TV 101 is activated, and a character input is received.

### - "Friend select"

A "Friend select" screen is displayed.

A function of a focused [button] is activated.

### (A control signal that executes the function of the button is output.)

### [Return] key

The edit screen is closed.

### (A control signal that displays a screen display associated as a [previous] screen display is output.)

FIG. 13C illustrates exemplary operations corresponding to button displays on the screen display shown in FIG. 13, in which operations on a screen display corresponding to control inputs made by remote control keys are shown.

When the [Edit] key is turned on (pressed), a message "Edit forum?" and "YES" and "NO" buttons are displayed.

When "YES" is selected in response to the display, an "Edit" screen is displayed such that the "forum name" and the "forum overview" can be edited. A GUI (character input) screen of the digital TV 101 is activated, and a character input is received.

When "NO" is selected in response to the display, the message (screen display) is deleted, and the [Edit] screen is closed.

### [Cancel] key

A message such as "Cancel edit of the forum?" and "YES" and "NO" buttons, as shown in FIG. 7, are displayed.

When "YES" is selected, the edit is canceled and the [Edit] screen is closed, and when "NO" is selected, the message ([FIG. 7]) is deleted.

### [Remove] key

A message such as "Are you sure you want to remove the forum?" and "YES" and "NO" buttons, as shown in FIG. 8, are displayed.

When the user selects "YES" in response to the "YES" and "NO" display, the forum is removed (the forum is removed). When the user selects "NO", the message ([FIG. 8]) is deleted.

### <<Forum Detail Settings "Forum Detail Setting">>

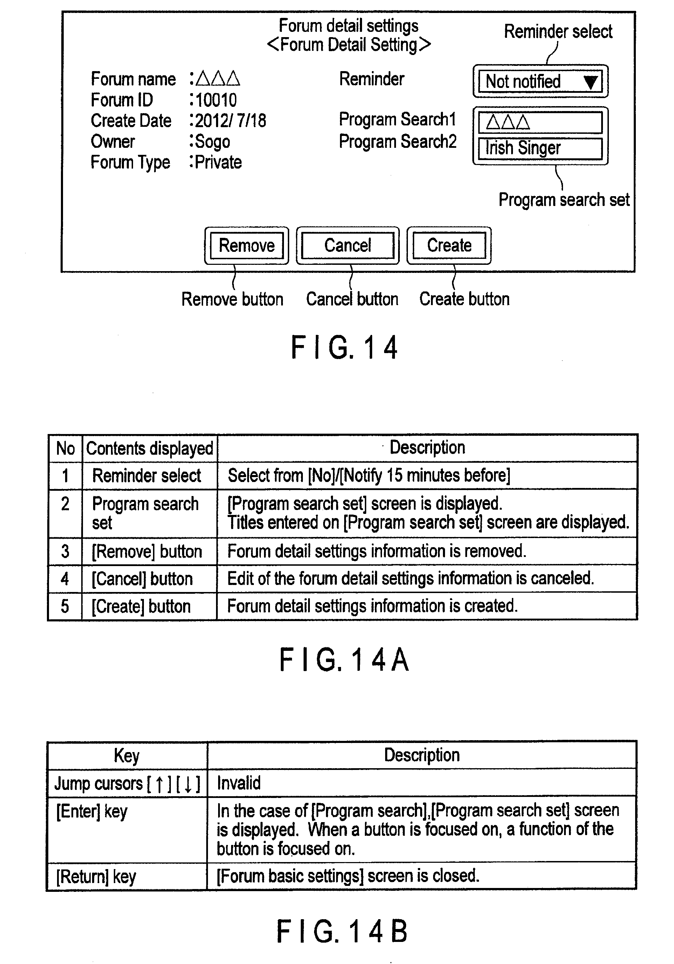

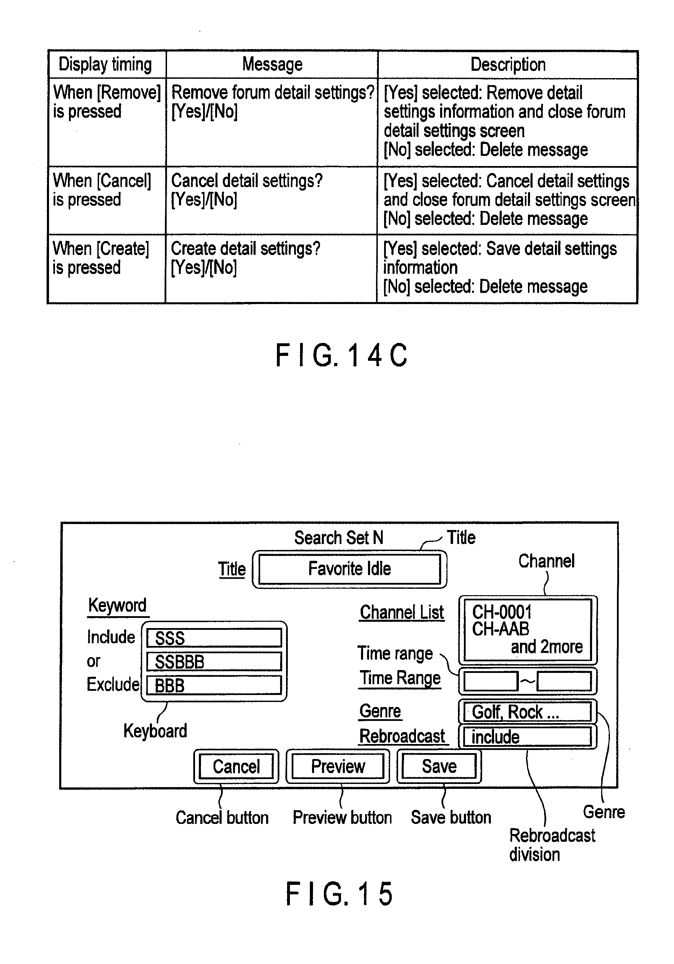

FIG. 14 is an exemplary diagram of a screen display of the display device according to the embodiment, illustrating an example of a [Forum detail settings <"Forum Detail Setting">] screen.

The [Forum detail setting] screen shown in FIG. 14 is displayed after the above-described creation of a new forum and edit of the forum, and includes the following select fields, input fields, and buttons:
Reminder <"Reminder"> select field
Program search set <"Program Search 1> field A <[1]>
Program search set <"Program Search 2> field B <[2]>
Remove <"Remove"> button
Cancel <"Cancel> button
Create <"Create"> button

The "display" further includes the following:
[Forum name] <"Forum Name"> field
[Forum ID] <"Forum ID"> field
[Created date] <"yy (Year)/mm (Month)/dd (Day)"> field
[Forum master (Owner) name] <"Owner Name"> field
[Forum type] <"Forum Type"> field

FIG. 14A is an exemplary diagram of contents of the screen display shown in FIG. 14, illustrating contents of display in the reminder select field.

### [1] Reminder select field

Whether to enable a reminder or not can be selected (set), and one of [No] and [Notify 15 minutes before] is selected.

### [2] Program search set field

A program search set screen display is displayed.

Titles entered on the program search set screen display, such as a [genre] and an [artist name] are displayed.

### [3] Remove button

Forum detail setting information is removed.

### [4] Cancel button

Edit (input/setting) of the forum detail setting information is canceled (the screen is closed after the cancellation).

### [5] Create button

Forum detail setting information is created (entered/set).

In each of the program search sets, characters are (can be) entered with up to 20 double-byte characters (A GUI (character input) screen of a digital TV is used for input of characters).

FIG. 14B is an exemplary diagram of a relationship between displays and control instructions of the screen display shown in FIG. 14, illustrating operations of remote control keys and operations in response to display on the [Forum detail setting] screen.
[T] key
[↓] key

Each of the arrow keys shifts information in one of the [1] Reminder select field and the [2] Program search set, by one.
[ 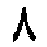 (▲)] key (jump cursor)
[ 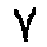 (▼)] key (jump cursor)

The key operation is invalidated.

### [Enter] key

In the "Program search set" field, a "Program search set" screen is displayed. (A GUI [character input] screen of a digital TV is activated, and a character input is received.)

A function of a focused [button] is activated (A control signal that executes the function of the button is output).

### [Return] key

The "forum detail setting" screen is closed.

FIG. 14C illustrates correspondence between button displays on the screen display shown in FIG. 14, control inputs made by remote control keys, and operations on the screen display.

### [Remove] button

A message such as "Remove forum detail setting?" and "YES" and "NO" buttons are displayed.

When "YES" is selected, the detail setting information is removed, and the forum detail setting screen is closed.

When "NO" is selected, the message is deleted.

### [Cancel] button

A message such as "Cancel forum detail setting?" and buttons "YES" and "NO" are displayed, and when "YES" is selected, the forum detail settings are canceled and the forum detail setting screen is closed. When "NO" is selected, on the other hand, the message is deleted.

### [Create] button

Forum detail setting information is created (input/set).

A message such as "Create forum detail settings?" and "YES" and "NO" buttons shown in [FIG. 9] are displayed, and when "YES" is selected, the [forum detail settings] are saved. When "NO" is selected, the message ([FIG. 9]) is deleted.

### <<Program Search Set>

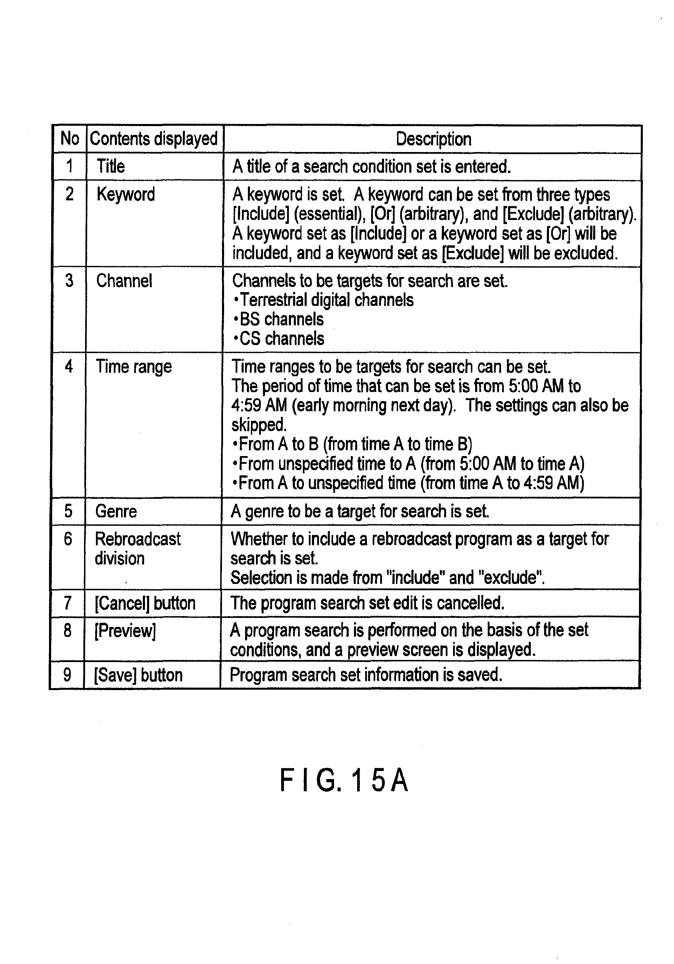

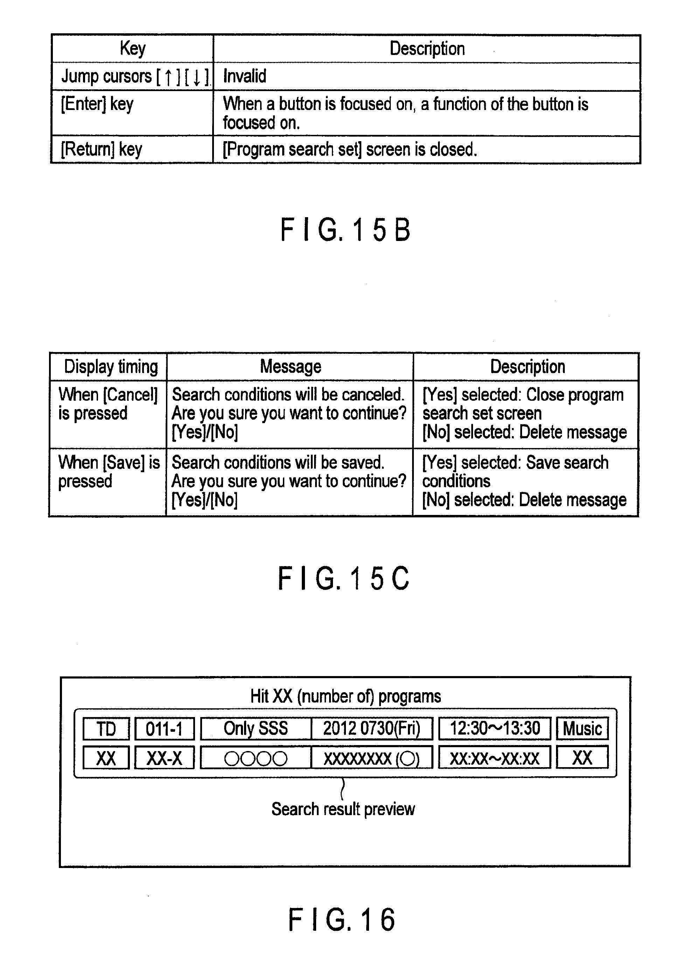

FIG. 15 is an exemplary diagram of a screen display of the display device according to the embodiment, illustrating a [Program search set <"Search Set N">] screen. The [Program search set <"Search Set N">] screen includes the following:
Title <"Title">
Keyword <"Keyword">
Channel <"Channel List"> field
Time range <"Time Range"> field
Genre <"Genre"> field
Rebroadcast division <"Rebroadcast"> field
Cancel <"Cancel"> button
Preview <"Create"> button
Save <"Save"> button

Remote control keys and operations in response to displays on the [Forum detail settings] screen will be shown.
[↑] key
[↓] key
[↑] key
[↓] key

Each of the arrow keys shifts one of [1] Cancel button, the [2] Preview button, and [3] Save button, by one.

FIG. 15A is an exemplary diagram of contents of the screen display shown in FIG. 15, illustrating contents of functions (displays) of fields and buttons on the [Program search set] screen.

### [1]Title

A title of a search condition set can be entered.

The input is performed directly using a GUI (keyboard-type input screen).

### [2] Keyword

A keyword is set.

Input of an [Include] field (item) is compulsory.

Input of an [Or] field and an [Exclude] field is optional.

That is, a keyword set in the [Include] field and a keyword set in the [Or] field will be included, and a keyword set in the [Exclude] field will be excluded.

The input is performed directly using a GUI (keyboard-type input screen).

### [3] Channel

Channels to be targets for search can be set from the following channels:
Terrestrial (digital broadcast) channels
BS (broadcasting satellite) channels
CS (communications satellite) channels

### [4] Time range

Time ranges to be targets for search can be set.

Time ranges that can be set are as follows:
a) From 5:00 a.m. to 4:59 a.m. (the next day)
   * When there is no input, it is regarded that the setting has been skipped, and all the time ranges (a) are automatically set.
b) From A to B (from time A to time B)
c) From an unspecified time to A (from 5:00 a.m. to time A)
d) From A to an unspecified time (from time A to 4:59 a.m.)

The input is performed directly using numerical (alphabetical) keys.

### [5] Genre

A genre to be a target for search can be set.

The setting is performed by a direct input (via a keyboard-type input screen) using a GUI or a direct input using numerical (alphabetical) keys.

### [6] Rebroadcast division

Whether to include "rebroadcast" programs as a target for search can be set, and whether to "include" or "exclude" rebroadcast programs can be selected by a scroll-type select display field (selection is made by switching display between "include" and "exclude").

### [7] Cancel button

The program search set edit is cancelled.

### [8] Preview button

A program search is performed on the basis of the set conditions.

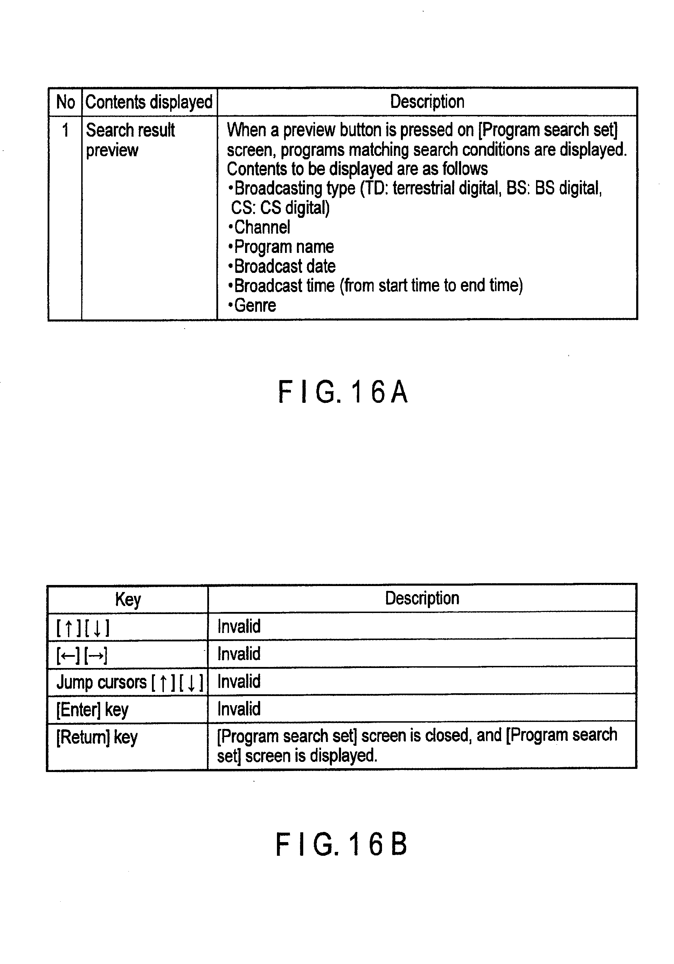

A preview screen [FIG. 16 <"Preview">] is displayed.

### [9] Save button

Program search set information is saved.

FIG. 15B is an exemplary diagram of a relationship between displays and control instructions of the screen display shown in FIG. 15, illustrating operations of remote control keys and operations in response to display on the screen.
[↑] key
[↓] key

Each of the arrow keys performs selective switching between [1] Title field, [2] Keyword group (string), [7] Cancel, [8] Preview, [9] Save group (string), [3] Channel, [4] Time range, [5] Genre, and [6] Rebroadcast division group (string), by one.

Each of the arrow keys shifts one of [2] Keyword group (string), [3] Channel, [4] Time range, [5] Genre, and [6] Rebroadcast division group (string) by one.

### [Enter] key

When a button is focused on, a function of the button is activated. (A function of a focused button is activated. [A control signal that executes the function of the button is output.])

### [Return] key

The [Program search set] screen is closed.

FIG. 15C illustrates operations of remote control keys corresponding to button displays on the screen display shown in FIG. 15, and operations corresponding to displays on the [Program search set] screen display.

### [Cancel] button

For example, a message such as "Search conditions will be removed. Are you sure you want to continue?" and "YES" and "NO" buttons are displayed. When "YES" is selected, the [Program search set] screen is closed. When "NO" is selected, the message is deleted.

### [Save] button

A message such as "Search conditions will be saved. Are you sure you want to continue?" and "YES" and "NO" buttons, which are shown by way of illustration in FIG. 10, are displayed.

When "YES" is selected in FIG. 10, the search result by the [Program search set] is saved, and the screen is closed.

When "NO" is selected in FIG. 10, the screen is deleted.

### <<Display of Program Search Result (Preview)>>

FIG. 16 is an exemplary diagram of a screen display of the display device according to the embodiment, illustrating an example of a [Program search result <"Preview">] screen.

The [Program search result <"Preview">] screen is displayed (the display is switched) when a preview button is turned on on the [Program search set] screen shown in FIG. 15.

### - Search result screen display

At most N programs, for example, six programs, can be displayed on one screen display.

When the number of programs that has been searched for is greater than six, the programs can be displayed on the [Next] page.

FIG. 16A illustrates exemplary contents of the screen display (search result screen display) shown in FIG. 16, including the following:

### - Broadcasting type ([TD]/[BS]/[CS] display) field

Examples of the broadcasting types to be displayed are as follows:
[TD]: Regular (digital) broadcasting
[BS]: Satellite broadcasting relayed by broadcast satellites
[CS]: Satellite broadcasting relayed by communication satellites

A program of regular broadcasting that is rebroadcast by a distributor (cable station) or the like is displayed as [TD].

### - Channel field

A prescribed channel display is displayed.

### - Program name field

A program name (title) acquired from an electronic program guide (EPG) or a server (forum) is displayed.

### - Broadcast date: [yy (Year)/mm (Month)/dd (Day)] field

The broadcast date is displayed in the order of [yy (Year)/mm (Month)/dd (Day)].

### - Broadcast time: [hh (Hour)/mm (Minuite) - hh (Hour)/mm (Minuite)] field

The broadcast date is displayed in the order of [start <Leading end>: hh (Hour)/mm (Minuite) - end <Termination end>: hh (Hour)/mm (Minuite)]

### - Genre field

An identifier (genre) acquired from the electronic program guides (EPG) or the server (forum) is displayed.

FIG. 16B illustrates exemplary operations corresponding to button displays on the screen display shown in FIG. 15, in which a relationship between movement of the cursor or determination (selection) of a button by operation on a remote control and a screen display is shown.

### [Return] key or [Return] button on pop-up screen display

The [Search result] screen is closed.

The [Program search set] screen is displayed.

### <<Member Select>>

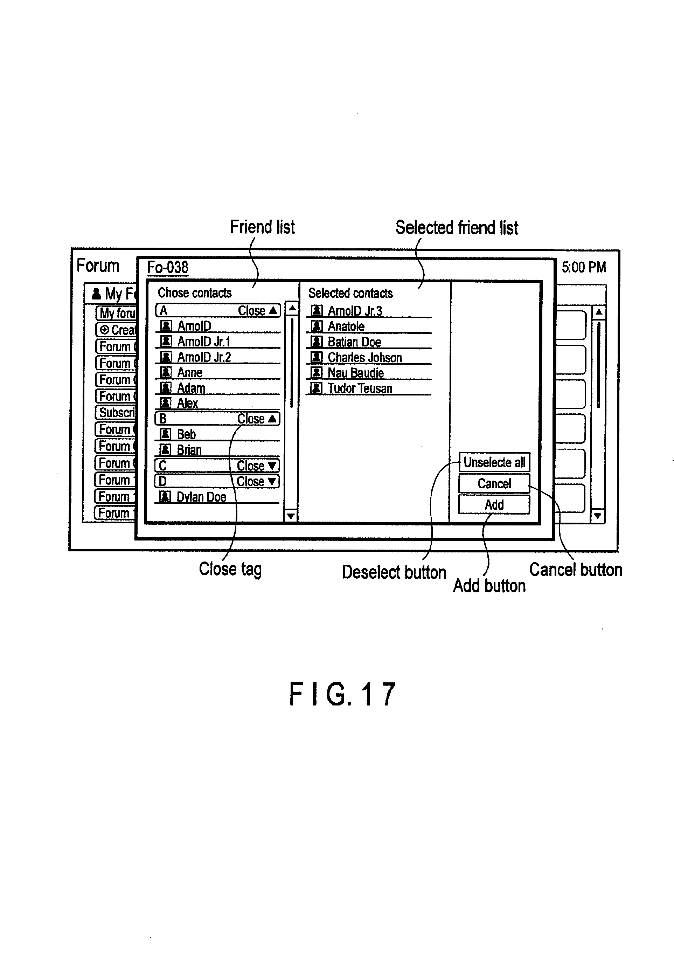

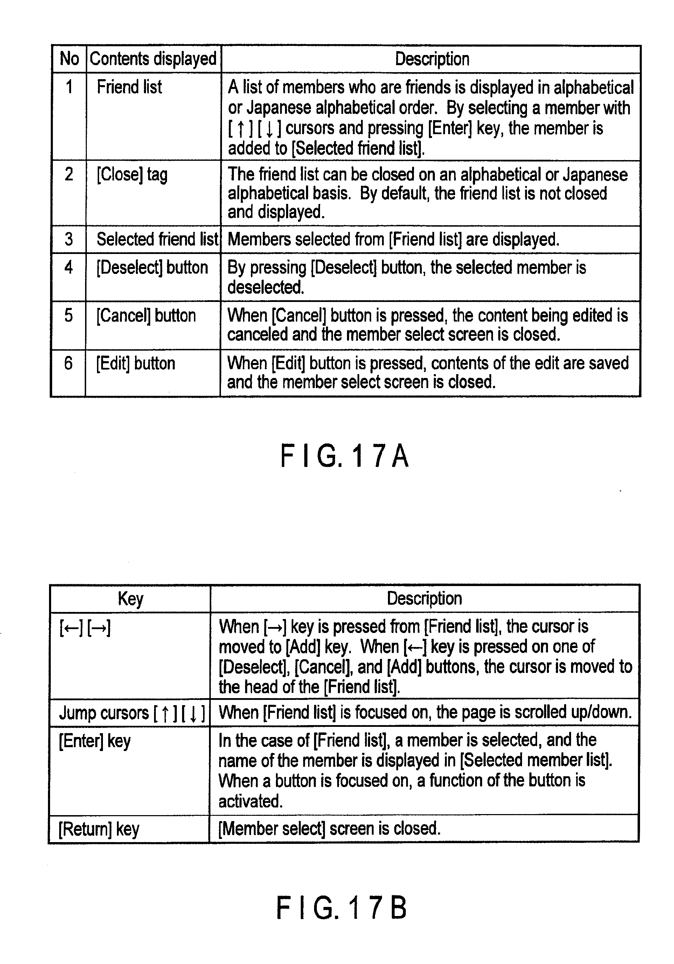

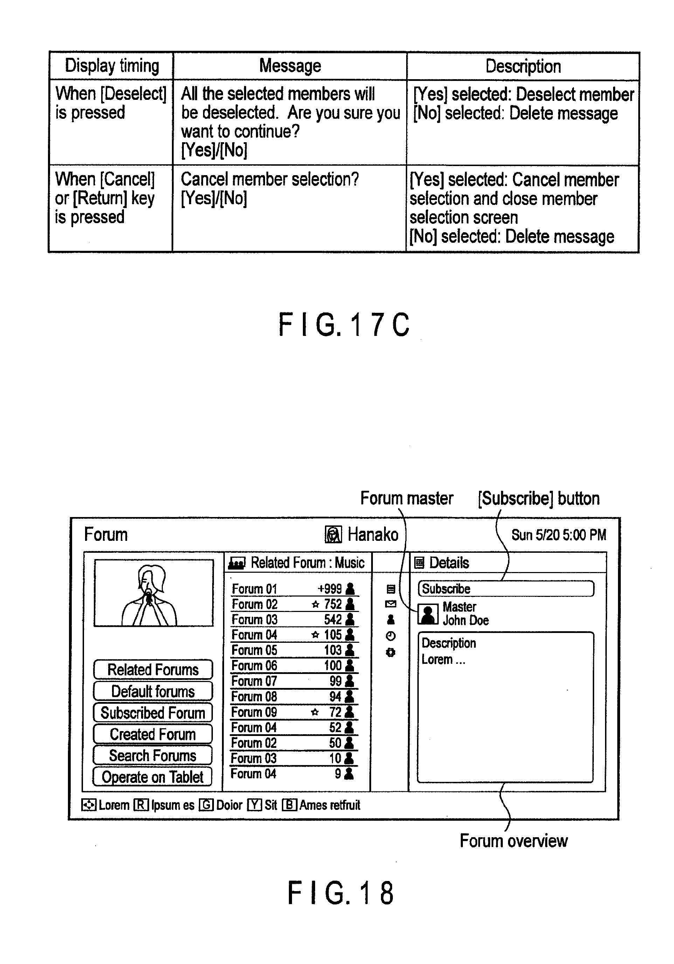

FIG. 17 is an exemplary diagram of a screen display of the display device according to the embodiment, illustrating an example of a [Member select <"Selected Contacts">] screen.

The [Member select] screen display [038] shown in FIG. 17 includes the following:
- Friend <"Friend"> list field
- Close <"Close"> tag
- Selected friend <"Friend Selected"> list field
- Deselect <"Deselect all"> button
- Cancel <"Cancel"> button
- Edit <"Edit"> button
- Add <"Add"> button

FIG. 17A is an exemplary diagram of contents of the screen display shown in FIG. 17, illustrating functions (displays) of fields and buttons on the [Member select] screen [038].

### [1] Friend list

A list of members who are friends is displayed in alphabetical or Japanese syllabic order.

By selecting (focusing on) a member displayed in the friend list with the [↑] and [↓] cursors and pressing (turning on) the [Enter] key, the member can be added to the [Selected friend list] (added as a member).

### [2] Close tag

The friend list can be closed on an alphabetical or Japanese syllabic basis.

By default, the friend list is not closed and displayed.

### [3] Selected friend list

Members selected from the [Friend list] are displayed.

### [4] Deselect

By pressing (turning on) the [Deselect] button, the selected member is deselected.

### [5] Cancel

When [Cancel] button is pressed (turned on), the content being edited is canceled and the member select screen is closed.

### [6-1] Edit

The members displayed as the selected friends can be edited (changed) one by one, and when the [Edit] button is pressed (turned on), contents of the edit are saved and the member select screen is closed.

### [6] Add

A member is "added" to the members displayed as the selected friend list.

FIG. 17B is an exemplary diagram of a relationship between displays and control instructions of the screen display shown in FIG. 17, illustrating remote control keys and operations in response to display on the [Member select] screen.
[t] key
[↓] key

Each of the arrow keys mutually shifts each of the members displayed in the [Friend list] field by one.

Each of the arrow keys shifts [4] Deselect field, [5] field, and [6] Add field by one.
[→] key
[→] key

Each of the arrow keys performs selective switching between [1] Friend list field, [3] Selected friend list field, [4] Deselect field, [5] Cancel field, and [6] Add field.

When the [→] key is pressed on the [Friend list], the cursor is moved to the [Add] key.

By pressing the [←] key on one of the [Deselect], [Cancel], or [Add] button, the cursor is moved to the head of the [Friend list] field.
[ 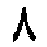 (▲)] key (jump cursor)
[ 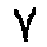 (▼)] key (jump cursor)

When the [Friend list] is focused on, the page is scrolled up or down.

### [Enter] key

In the case of [Friend list], a member is selected, and the name of the member is displayed in the [Selected friend list].

When a button is focused on, a function of the button is activated (a function of a focused button is activated [a control signal that executes the function of the button is output]).

### [Return] key

The [Member select] screen is closed.

FIG. 17C illustrates control inputs corresponding to button displays on the screen display shown in FIG. 17 and displays and operations on the [Member select] screen display.

### [Deselect] button

A message such as "All the selected members will be deselected. Are you sure you want to continue?" and buttons "YES" and "NO" are displayed, and when "YES" is selected, the members are deselected. When "NO" is selected, on the other hand, the message (pop-up) is deleted.

### [Cancel] button

A message such as "Cancel member selection?" and "YES" and "NO" buttons are displayed. When "YES" is selected, member selection is canceled, and the member select screen is closed. When "NO" is selected, the message (pop-up) is deleted. A similar operation is performed when "Return" key is pressed (turned on).

The forum will be described in detail with reference to FIG. 11.

### <<Forum Overview>>

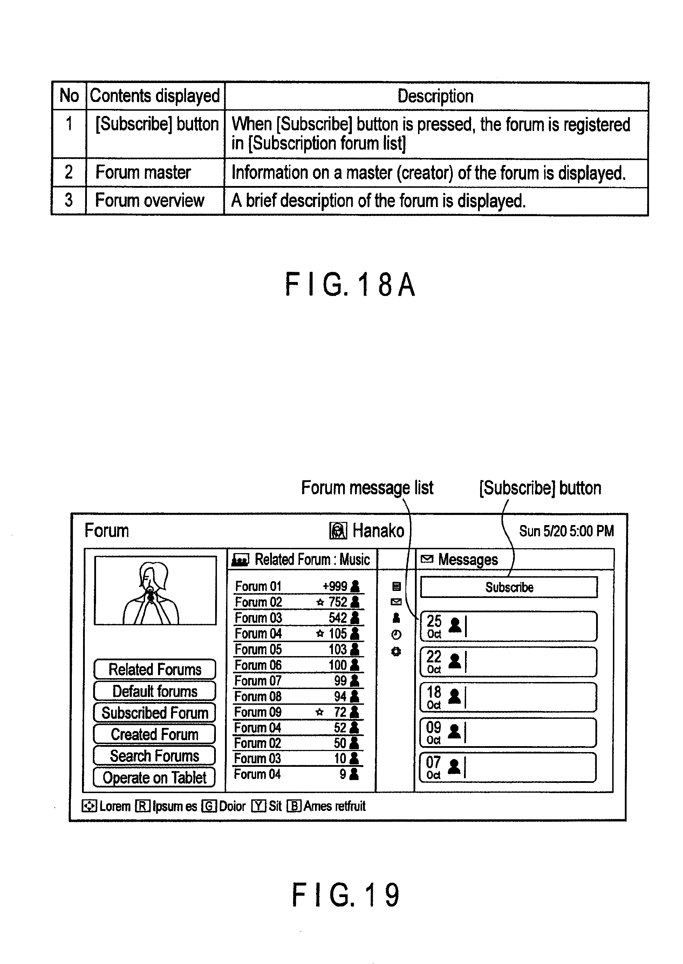

FIG. 18 illustrates an exemplary screen display of the display device according to the embodiment.

As shown in FIG. 18, when the "Forum details" are focused on by operating on a cursor key and turning on the enter button on the forum top screen display shown in FIG. 11, a forum overview screen, on which contents (overview) of a forum selected from a forum list can be checked, is displayed.

The forum overview screen displays the following:
[1] Subscribe <"Subscribe"> button
[2] Forum master field
[3] Forum overview field

FIG. 18A is an exemplary diagram of contents of the screen display shown in FIG. 18, illustrating contents of items to be displayed on the [Forum overview] screen.

### [1] Subscribe

When [Subscribe] button is pressed, the forum is registered in the [Subscription forum list (the third row of FIG. 11)].

### [2] Forum master

Information on a master (creator) of the forum is displayed.

### [3] Forum overview

A brief description of the forum is displayed. When the contents to be displayed cannot be contained on one screen, the screen can be scrolled page by page by operating a [ 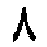 (▲)] key (jump cursor) and a [ 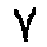 (▼)] key (jump cursor).

### [Return] key

The forum top screen is closed, and the screen returns to the cloud home <"Cloud HOME"> screen.

### <<Forum Message List>>

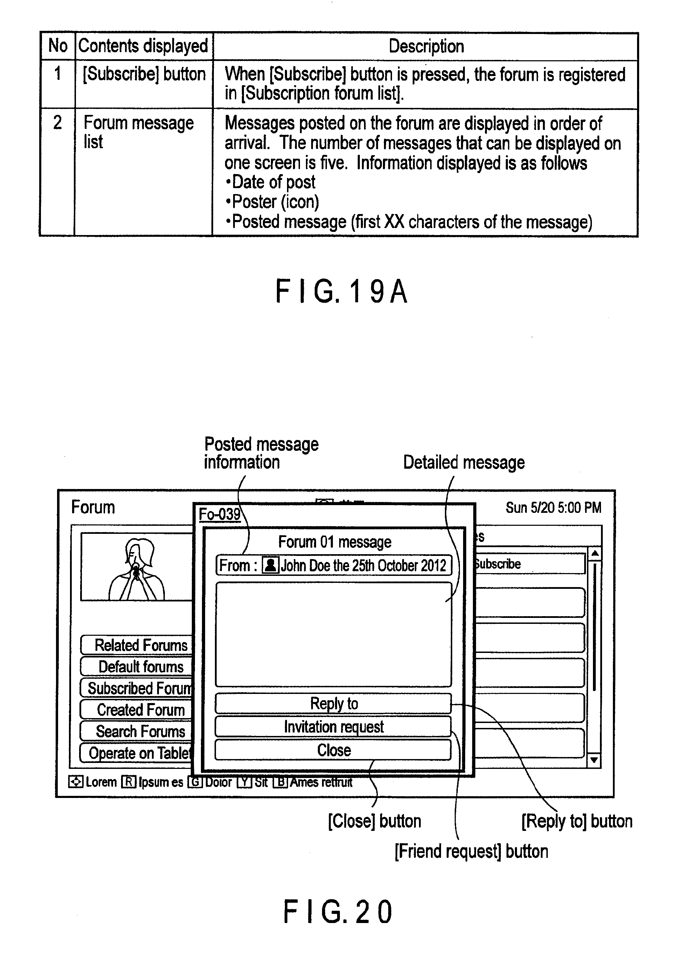

### FIG. 19 illustrates an exemplary screen display of the display device according to the embodiment.

As shown in FIG. 19, when the "forum message list" is focused on by operating a cursor key and turning on the enter button on the forum top screen display shown in FIG. 11, a forum message list screen displaying messages from other users in the forum selected from the forum list is displayed.

The forum message list screen displays the following:
[1] Subscribe <"Subscribe"> button
[2] Forum message list field

FIG. 19A is an exemplary diagram of contents of the screen display shown in FIG. 19, illustrating contents of items displayed on the [Forum message list] screen.

### [1] Subscribe

When [Subscribe] button is pressed, the forum is registered in the [Subscription forum list (the third row of FIG. 11)].

### [2] Forum message list

Messages posted on the forum are displayed in order of arrival.

The number of messages that can be displayed on one screen is five.

Information to be displayed by the message is as follows:
Date of post
Poster (icon)

### Posted message (first XX (predetermined number of) characters of the message)

When the contents to be displayed cannot be contained on one screen, the screen can be scrolled line by line by operating the [t] and [↓] keys.

When the contents to be displayed cannot be contained on one screen, the screen can be scrolled page by page by operating the [ 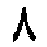 (▲)] key (jump cursor) and the [ 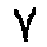 (▼)] key (jump cursor).

### [Return] key

The detailed message screen is closed.

### <<Forum detail message>>

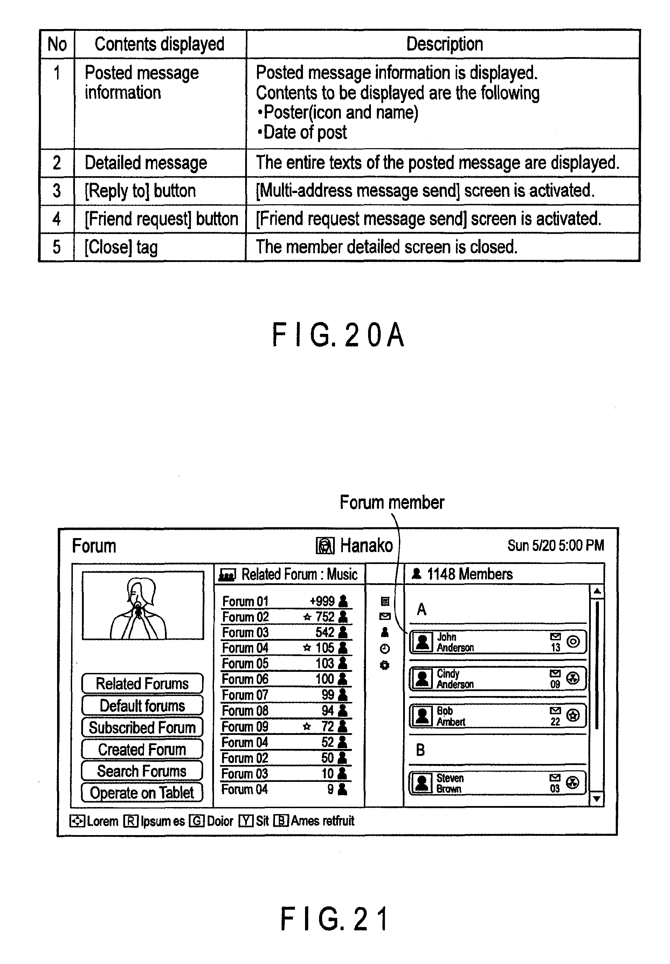

FIG. 20 is an exemplary screen display of the display device according to the embodiment, illustrating an exemplary screen display of the [Detail message] screen [039]. When one "message" is focused on by operating a cursor key and turning on the enter button (selecting the message) on the forum message list screen display shown in FIG. 19, a pop-up is displayed.

The detail message screen [039] displays the following:
[1] Posted message information <"User name (ID), dd (Date), mm (Month), yy (Year)"> field
[2] Detailed message <"Message (Text)"> field
[3] [Reply to <"Reply to">] button
[4] [Friend request <"Invitation request">] button
[5] [Close <"Close">] button

FIG. 20A is an exemplary diagram of contents of the screen display shown in FIG. 20, illustrating contents of the screen display of the detailed message screen [039].

The detailed message screen displays the following:

### [1] Posted message information <"User name (icon), dd (Date), mm (Month), yy (Year)">, i.e., the following:

Poster <User name (icon)>
Date of post <dd (Date), mm (Month), yy (Year)>

### [2] Detailed message

The entire texts of the posted message are displayed.

When the contents to be displayed cannot be contained on one screen, the screen can be scrolled line by line by operating the [↑] and [↓] keys.

When the contents to be displayed cannot be contained on one screen, the screen can be scrolled page by page by operating the [ 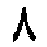 (▲)] key (jump cursor) and a [Y(V)] key (jump cursor).

### [3] [Reply to]

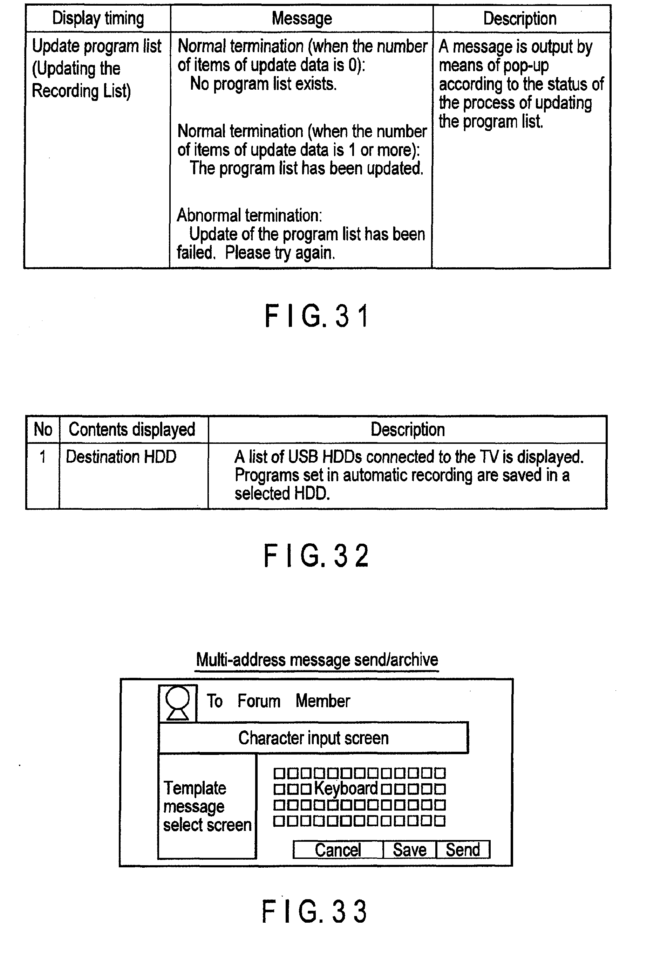

A [Multi-address message send] screen (message send screen of INBOX [FIG. 33]) is activated.

### [4] [Friend request]

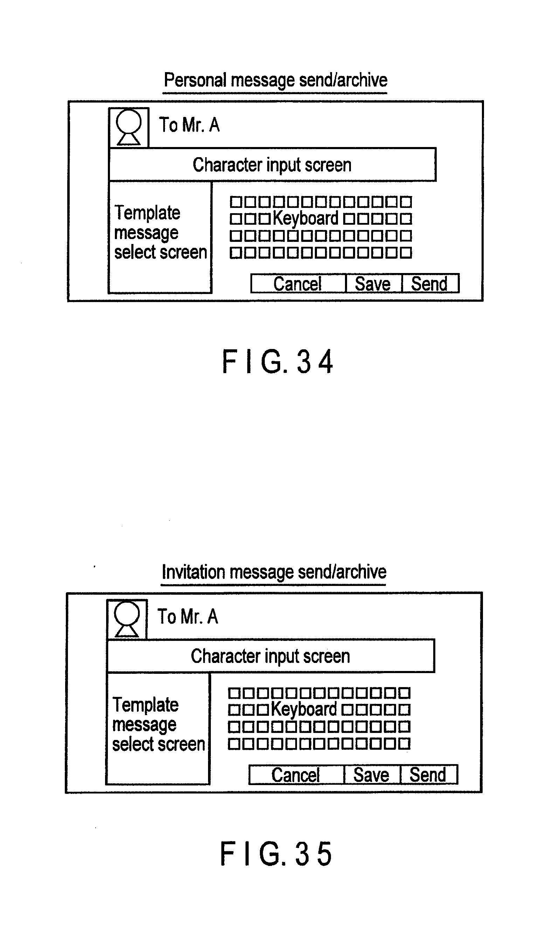

A [Friend request message send] screen (message send screen of INBOX [FIG. 35]) is activated.

The [Friend request message send] screen is displayed when the logged-in user and a participating member selected from the [Forum member list] screen are not friends.

### [5] [Close] button

The detailed message screen is closed.

### <<Forum member list>>

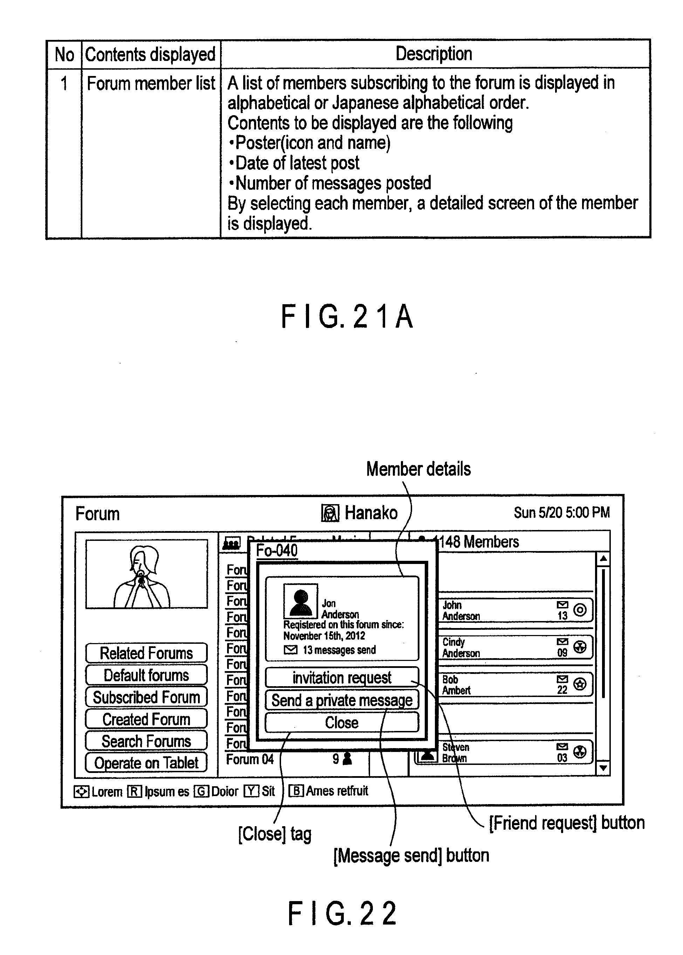

FIG. 21 is an exemplary screen display of the display device according to the embodiment, illustrating an example of the [Forum member list] screen. By focusing on one forum by operating a cursor key and turning on the enter button (selecting a message) on the [Forum list] screen displayed by focusing on the [Forum list] by operating the cursor key and turning on the enter button on the forum top screen display shown in FIG. 11, a pop-up is displayed.

FIG. 21A is an exemplary diagram of contents of the screen display shown in FIG. 21, illustrating contents of the screen display of the forum member (user) list screen.

The forum member list screen displays a list of members subscribing to the forum in alphabetical or Japanese syllabic order, as shown in FIG. 21A.

The contents to be displayed for each member includes, for example, the following:
- Poster <User name (icon)>
- Date of latest post <dd (Date), mm (Month), yy (Year) /Latest>
- Date of latest post
- Number of messages posted

When (the number of) the forum members cannot be contained on one screen, the screen can be scrolled page by page by operating the [ 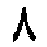 (▲)] key (jump cursor) and a [ 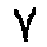 (▼)] key (jump cursor).

By selecting each member (one member), i.e., by focusing on the field of an arbitrary member and turning on the [Enter] key, a detailed screen of the member is displayed.

By turning on the [Return] key, the forum top screen is closed.

### <<Forum Member Details>>

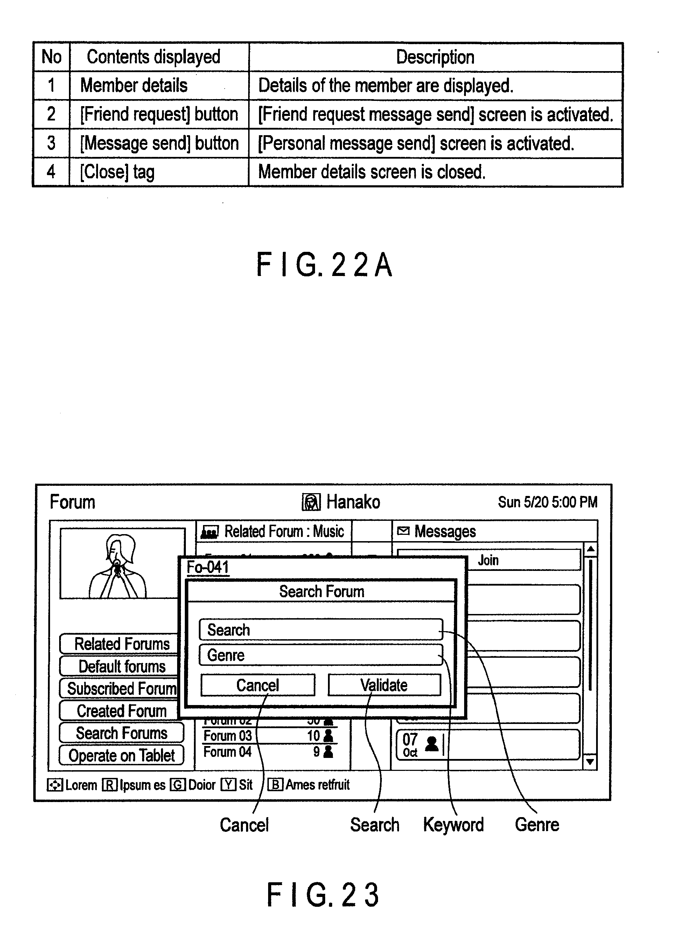

FIG. 22 is an exemplary diagram of a screen display of the display device according to the embodiment, illustrating an example of a [Member details <"Member (Selected Contacts)">] screen display.

By focusing on one member by operating a cursor key on the [Forum member list] screen display shown in FIG. 21 and turning on the enter button (selecting a member <"Member (Selected Contacts)">), the screen display of the [Member details] screen [40] shown in FIG. 22 is displayed as a pop-up.

The screen display of the [Member details] screen [040] includes the following:
[1] Member details <"Member (Selected Contacts)"> field
[2] [Friend request <"Invitation request">] button
[3] [Message send <"Send a private message">] button
[4] [Close <"Close">] button

FIG. 22A is an exemplary diagram of contents of the screen display shown in FIG. 22, illustrating contents to be displayed on the member details screen.

### [1] Member details

Details of the member are displayed.

### [2] [Friend request]

A [Friend request message send] (message send screen of INBOX [FIG. 35]) screen is activated. The display (activation of the screen) is displayed when the logged-in user and a participating member selected from the [Forum member list] screen are not friends.

### [3] [Message send]

A [Personal message send] screen (message send screen of INBOX (FIG. 34) is activated.

### [4] [Close] button

The member details screen is closed.
[↑] key
[↓] key

Each of the arrow keys shifts [1] Member details, [2] [Friend request], and [3] [Message send] by one.

### [Enter] key

When a button is focused on, a function of the button is activated (a function of the button that is focused on is activated [a control signal for executing a function of the button is output]).

### <<Forum Search>>

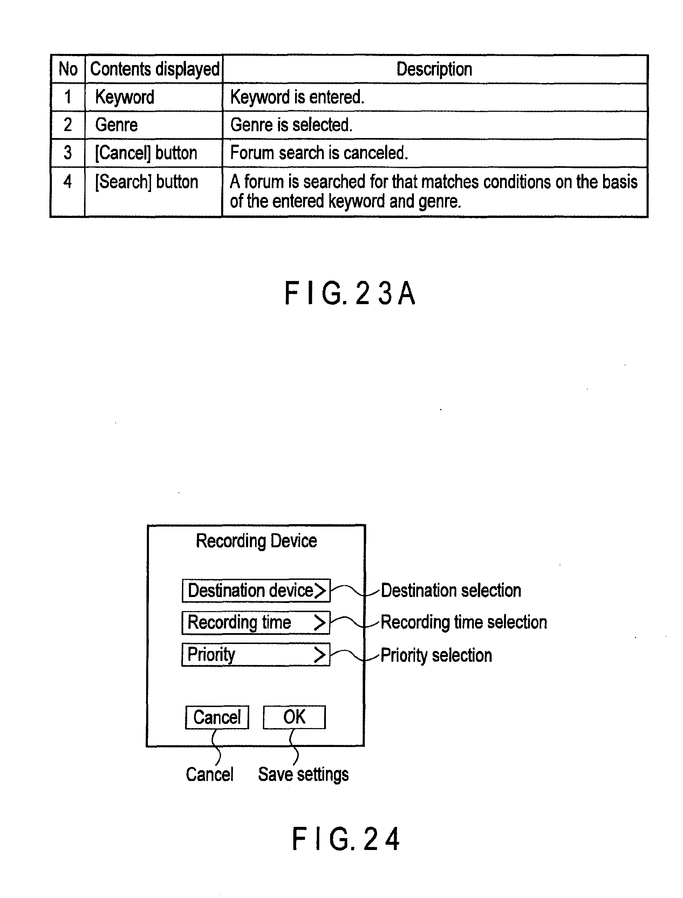

FIG. 23 is an exemplary diagram of a screen display of the display device according to the embodiment, illustrating a display example of the [Forum search] screen.

By focusing on the [Forum search] by operating a cursor key on the [Forum top] screen display shown in FIG. 11 and turning on the enter button, the screen display of the [Forum search] screen [041] shown in FIG. 23 is displayed as a pop-up.

The [Forum search <"Search Forum">] screen displays the following:
[1] Keyword <"Search"> field
[2] Genre <"Genre"> field
[3] [Cancel <"Cancel">] button
[4] [Search <"Validate">] button

FIG. 23A is an exemplary diagram of contents of the screen display shown in FIG. 23, illustrating contents to be displayed on the screen display of the [Forum search] screen [041].

The forum search screen includes the following:

### [1] Keyword

A keyword is entered (A GUI (character input) screen of a digital TV is used for input of characters).

### [2] Genre

A genre is selected.

### [3] [Cancel] button

The [Forum search] is canceled.

### [4] [Search] button

A [forum] is searched for that matches conditions on the basis of the entered keyword and genre.

### [Enter] key

In the case of a [keyword], characters are entered.

In the case of a [genre], a genre select screen is displayed.

When a button is focused on, a function of the button is activated.

### [Return] key

The [Forum search] screen is closed.

### <<Automatic Recording Basic Settings>>

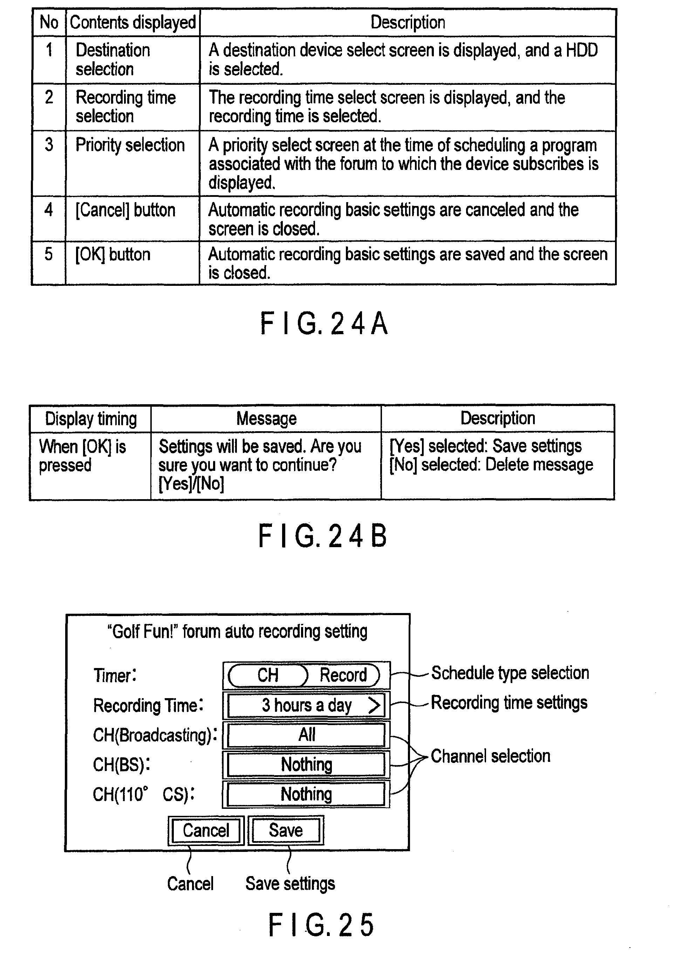

FIG. 24 is an exemplary diagram of a screen display of the display device according to the embodiment, illustrating an example of a screen display of the [Automatic recording basic settings] screen.

By focusing on the [Cloud menu <Cloud Menu>] by operating a cursor key and turning on the enter button on the [Home (HOME)] screen display shown in FIGS. 5A and 3A, the [Automatic recording basic settings <"Auto REC Setting">] screen shown in FIG. 24 is displayed as a pop-up. The pop-up is also activated when the user wants to make the [Subscribe to (Purchase) forum <"Subscribe">] settings but has not made the [Automatic recording <"Auto REC">] basic settings.

The [Automatic recording basic settings] screen shown in FIG. 24 includes the following:
[1] Destination device select <"Target Device"> field
[2] Recording time select <"Available Recording Time"> field
[3] Priority select <"Priority"> field
[4] Cancel <"Cancel"> button
[5] [OK (Save settings)] < "OK <Save>">] button

FIG. 24A is an exemplary diagram of contents of the screen display shown in FIG. 24, illustrating items to be displayed on the [Automatic recording basic settings] screen.

### [1] Destination device select

A destination device select screen (FIG. 3E) is displayed, and a HDD (recording device) is selected.

### [2] Recording time select

The recording time select screen (FIG. 3F) is displayed, and the recording time is selected. An approximate value of the recording time to be displayed is calculated on the basis of the effective capacity (which is not occupied by control information or management information, and can be used by the user to record [save] content) of the HDD and displayed.

### [3] Priority select

A priority select screen (FIG. 3H) at the time of scheduling a program associated with the forum to which the user subscribes is displayed.

### [4] [Cancel] button

The [Automatic recording basic settings] are canceled and the screen is closed.

### [5] [OK (Save settings)] button

The [Automatic recording basic settings] are saved and the screen is closed.

By operating (turning on [pressing]) the [Enter] key of the remote control unit, a function of the button is activated (a function of the focused [button] is activated [a control signal that executes a function of the button is output]). That is, the above-described destination device select screen (FIG. 3E) is displayed in the [1] destination device select field. The above-described recording time select screen (FIG. 3F) is displayed in the [2] recording time select field. The above-described priority select screen (FIG. 3H) is displayed in the [3] priority select field.

By operating (turning on [pressing]) the [Return] key of the remote control unit, the automatic recording basic settings are canceled, and the screen is closed.

Further, when the [OK (Save settings)] button displayed on the [Automatic recording basic settings] screen is turned on (pressed), as shown in FIG. 24B, an alert screen including a message to the effect that "Settings will be saved. Are you sure you want to continue?" and "YES" and "NO" buttons, for example, will be displayed as a pop-up.

When "YES" is selected in response to the alert screen (message screen) display, the settings are saved. When "NO" is selected, the alert screen (pop-up) is deleted.

### <<Automatic recording condition settings>>

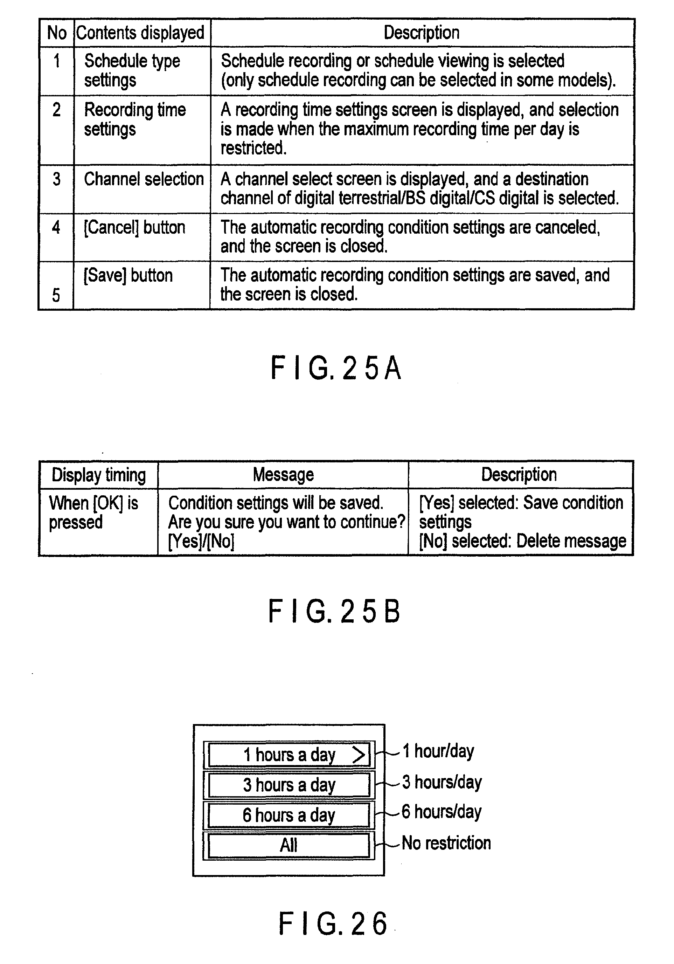

FIG. 25 is an exemplary diagram of a screen display of the display device according to the embodiment, in which [Automatic recording condition settings <"'+++ forum' forum auto recording setting"> are made, i.e., conditions are set when a program recommended by a forum in which the user participates is recorded.

By focusing on the [Participation (Subscription/Purchased) forum <"Subscribed Forums">]] on the [Forum top] screen display shown in FIG. 11 by operating a cursor key and turning on the enter button, the "automatic recording condition settings" <"'+++ forum' forum auto recording setting'>] screen shown in FIG. 25 is displayed as a pop-up.

The [Automatic recording condition settings] screen shown in FIG. 25 includes the following:
[1] Schedule type select <"Timer"> field
[2] Recording time setting <"Recording Time"> field
[3] Channel select <"CH (Broadcasting)"/"CH (BS)"/("CH (CS)")>] field
[4] Cancel <"Cancel">] button
[5] [OK (Save settings)] <"OK <Save>">] button

FIG. 25A is an exemplary diagram of contents of the screen display shown in FIG. 25, illustrating contents of the [Automatic recording condition settings] screen.

### [1] Schedule type select

Schedule recording or schedule viewing is selected <<Only schedule recording can be selected in some models.>>

### [2] Recording time setting

Selection (input) can be made on the recording time setting screen (FIG. 3M) when the recording time per day is restricted.

### [3] Priority select

A channel select screen (FIG. 3Q) is displayed, and a destination channel of each of regular broadcasting (terrestrial digital), BS (digital) broadcasting, and CS (digital) broadcasting can be selected (entered).

### [4] [Cancel] button

The automatic recording condition settings are canceled, and the screen is closed.

### [5] [Save] button

The automatic recording condition settings are saved, and the screen is closed.

By operating (turning on ([pressing]) the [Enter] key of the remote control unit, the function of the button is activated (the function of the focused [button] is activated [a control signal that executes the function of the button is output]). That is, a select screen of each setting value is displayed in selection of a variety of settings.

By operating (turning on [pressing]) the [Return] key of the remote control unit, the automatic recording basic settings are canceled, and the screen is closed.

When the [Save] button displayed on the automatic recording condition settings screen is turned on (pressed), for example, as shown in FIG. 25B, an alert screen including a message "Settings will be saved. Are you sure you want to continue?" and "YES" and "NO" buttons, for example, is displayed as a pop-up.

When "YES" is selected in response to the alert screen display, the settings are saved.

When "NO" is selected, on the other hand, the alert screen is deleted.

### <<Schedule time setting>>

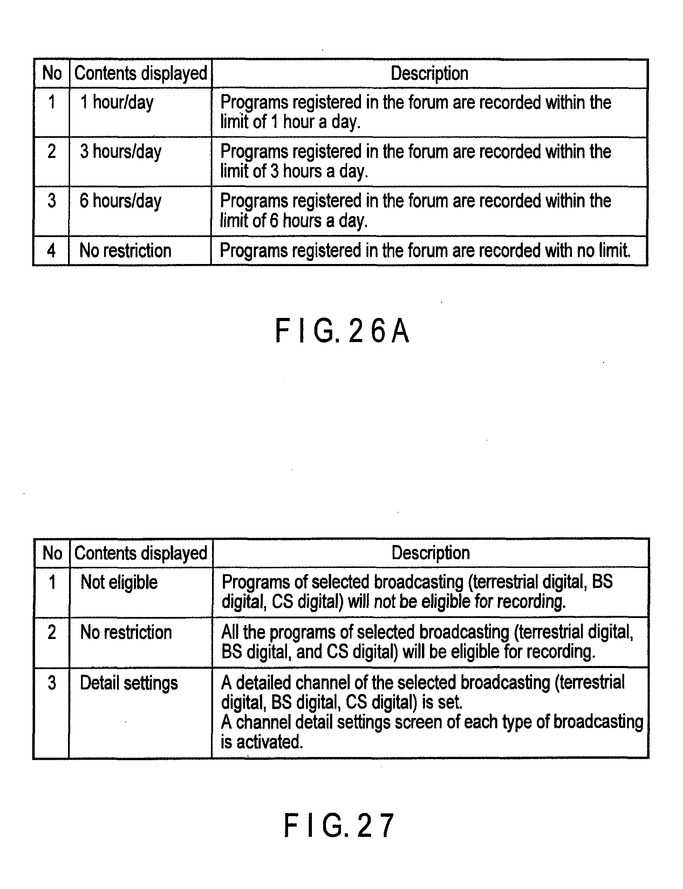

FIG. 26 is an exemplary diagram of a screen display of the display device according to the embodiment, illustrating an exemplary screen display for making [schedule time settings "Recording" for Timer on a day"], which are conditions per day for recording programs recommended by the forum in which the user participates, on the basis of the [Automatic recording condition settings] shown in FIG. 25.

The [Schedule time setting] screen shown in FIG. 26 includes the following:
[1] 1 hour a day <"1 hour a day"> field
[2] 3 hours a day <"3 hours a day"> field
[3] 6 hours a day <"6 hours a day"> field
[4] No restriction <"All"> field

FIG. 26A is an exemplary diagram of contents of the screen display shown in FIG. 26, illustrating the contents to be displayed on the [Schedule time setting] screen.

### [1] 1 hour a day

Programs registered in the forum are recorded within the limit of 1 hour per day.

### [2] 3 hours a day

Programs registered in the forum are recorded within the limit of 3 hours per day.

### [3] 6 hours a day

Programs registered in the forum are recorded within the limit of 6 hours per day.

### [4] No restriction

Programs registered in the forum are recorded with no limit.

By operating (turning on [pressing]) the [Enter] key of the remote control unit, the selected schedule time is set (saved), and the screen is closed.

By operating (turning on [pressing]) the [Return] key of the remote control unit, the [schedule time setting] screen is closed.

It is also possible to set schedule recording by referring to the popularity of the user (forum), i.e., the ranking, instead of the [Schedule time setting <'"Recording" for Timer on a day"'>]. For example, it is possible to restrict recording of a program registered in a forum by selecting one of the following:
[1] Top three <"within TOP 3"> field
[2] Top five <"within TOP 5"> field
[3] Top ten <"within TOP 10"> field
[4] All <"All"> field
on the [Schedule setting <"'Recording' with Ranking">] screen shown in FIG. 3M.

### <<Channel select>>

FIG. 3P illustrates a screen for setting a target channel (broadcaster) on which a program recommended by a forum in which the user participates is to be recorded on the [Automatic recording condition settings] shown in FIG. 25, i.e., [Channel select <"'Recording' with CH (Broadcasting)/CH (BS)/CH (CS)">]. The [Channel select] screen (FIG. 3P) is activated by selecting one of digital terrestrial channels, BS digital channels, and CS digital channels on the [Automatic recording condition settings] screen shown in FIG. 25. Restrictions on a channel to be a target for recording with respect to a program registered in a forum set as a target for [Automatic recording] are set from the setting screen.

The [Channel select] screen shown in FIG. 3P includes the following:
[1] Not eligible (Will not be recorded) <"Nothing"> field
[2] No restriction (Record all) <"All"> field
[3] Detailed setting (Channel-by-channel setting) <"Separate Setting"> field

FIG. 27 illustrates contents to be displayed on the [Channel select] screen display shown in FIG. 3P.

### [1] Not Eligible

Programs of selected broadcasting (terrestrial digital, BS digital, or CS digital) will not be eligible for recording (will not be recorded).

### [2] No restriction

All the programs of selected broadcasting (terrestrial digital, BS digital, and CS digital) will be eligible for recording.

### [3] Detail settings

A detailed channel of the selected broadcasting (terrestrial digital, BS digital, or CS digital) is set (Whether to "record" or "not record" is set on the channel detail setting screen (FIG. 3Q) for each broadcastor).

By operating (turning on [pressing]) the [Enter] key of the remote control unit, selection of the selected channel is set.

By operating (turning on [pressing]) the [Return] key of the remote control unit, the [Channel select] screen is closed.

### <<Channel Detail Setting>>

FIG. 3Q illustrates a screen for setting a target channel (broadcaster) on which a program recommended by a forum in which the user participates is to be recorded in [Channel select] shown in FIG. 3P, i.e., [Channel detail setting <'"Recording" with detailed CH (channel)'>].

The [Channel detail setting] is activated by selecting Channel detail setting from the [Channel select] screen shown in FIG. 3P. In this case, a channel is individually set for each of broadcasting to be a target for recording (digital terrestrial, BS digital, and CS digital) with respect to a program registered in a forum set as a target for automatic recording.

The [Channel detail setting] screen shown in FIG. 3Q includes the following:
[1] Selection checkbox group
[2] Channel (name display) field
[3] [Cancel] button
[4] [OK] button

FIG. 28 illustrates contents to be displayed on the [Channel detail setting (FIG. 3Q)] screen display.

The [Channel detail setting] includes the following:

### [1] Selection checkbox

A channel to be a target for recording is selected (A selection checkbox is prepared for each channel name display, and a channel corresponding to a checked box is to be a target for recording).

### [2] Channel (name field)

A list of channels of broadcasting (digital terrestrial, BS digital, and CS digital) selected in the automatic recording condition settings is displayed. The display order can be set by the user.

### [3] [Cancel] button

The channel detail selection is canceled, and the screen is closed.

### [4] [OK] button

Setting of the channel detail selection is saved, and the screen is closed.

By operating (turning on [pressing]) the [Enter] key on the remote control device, the selection checkbox is checked on or off.

By operating (turning on [pressing]) the [Return] key of the remote control device, the [Channel detail setting] screen is closed.

When the [OK] button is turned on (pressed), an alert screen that prompts the user to confirm by including a message such as "Settings will be saved. Are you sure you want to continue?" and "YES" and "NO" buttons is displayed as a pop-up.

When "YES" is selected in response to the alert screen (pop-up), the settings are saved.

When "NO" is selected, the alert (message) is deleted.

### <<Forum-by-forum priority "Recording Priority">>

FIG. 3H illustrates a [Forum-by-forum priority <"Recording Priority"> setting] screen when [Forum priority] is selected on the [Automatic recording settings] screen shown in FIG. 3C. In this case, the order of priority is set for forums when automatic recording of a forum set by a user (or a plurality of users) is performed in input (response) to the [Automatic recording settings] screen shown in FIG. 3C. As clear from FIG. 3H, the order of priority can be set for users as well.

The [Forum priority] screen shown in FIG. 3H includes the following:
[1] Forum list <"List"> field
[2] Selected forum (display <"Selected Forum">) field

FIG. 29 illustrates contents to be displayed on the [Forum priority] screen display.

### [1] Forum list <"List">

A list of set forums is displayed.

### [2] Selected forum <"Selected Forum"> (display)

By moving a cursor of the remote control, the selected forum is displayed.

After the selection, the forum is moved with the [↑] and [↓] keys of the remote control, and the order of priority is determined (in descending order of priority).

By operating (turning on [pressing]) the [Enter] key of the remote control unit once [first time], the target forum is selected. By operating (turning on [pressing]) the [Enter] key once more [twice], the selected forum is deselected.

By operating (turning on [pressing]) the [Return] key of the remote control unit, the [Forum priority] screen is closed.

When [OK] button is turned on (pressed), an alert screen which prompts the user to make confirmation in accordance with an alert screen display is displayed, and one of the inputs "YES" and "NO" is received (from the user).

The [Forum priority] screen shown in FIG. 3H, which is a screen display on which priority selection <"Priority"> is set, in accordance with "Automatic recording relevant settings" shown in FIG. 3C, further includes, as a forum which one of the family members, for example, the father subscribes to, the following:
[a] American football <"American football"> fan forum
   The [Forum priority] screen shown in FIG. 3H includes, as forums which Saya (family member) subscribes to, for example, the following:
[b] Celtic music <"Celtic music"> forum
[c] Golf <"Golf fun"> forum
[d] Popularity ranking <"Ranking"> forum
[e] FΔFΔ <"Football"> forum

In the example shown in FIG. 3H, the lastly set order of priority for forums is saved. That is, the [a] American football <"American football"> fan forum, which the father subscribes to, is given a higher priority than the [b] Celtic music <"Celtic music"> forum, which Saya subscribes to, for example.

### <<Cloud setting <"Cloud Selection POPUP">>>

FIG. 3B illustrates an exemplary screen display when [Cloud setting] is selected on the home screen that is displayed when the television 101 is activated.

By operating a cursor key to focus on the [Cloud menu <"Cloud Menu">] and turning on the enter button on the [Home "HOME">] screen display shown in FIG. 5A or FIG. 3A, the [Cloud setting <"Cloud Selection POPUP">] screen shown in FIG. 3B is displayed as a pop-up.

On the [Cloud setting] screen display shown in FIG. 3B, an [Automatic recording relevant settings] screen shown in FIG. 3C is activated.

By operating (turning on [pressing]) the [Enter] key of the remote control unit, the screen of a corresponding function in the menu is activated.

Further, by operating (turning on [pressing]) the [Return] key of the remote control unit, the [Cloud setting] screen is closed.

### <<Automatic recording relevant settings>>

FIG. 3C illustrates an exemplary screen display of [Automatic recording relevant settings <"Auto REC Setting">].

The [Automatic recording relevant settings] screen from the [Cloud setting] screen shown in FIG. 3B includes the following:
[1] Automatic recording setting ON <"Auto Recording ON"> field
[2] Automatic recording setting OFF <"Auto Recording OFF"> field
[3] Program list update <"Updating the Recording List"> field
[4] Priority setting <"Priority"> field

FIG. 30 is an exemplary diagram of contents of the screen display shown in FIG. 3C, illustrating an example of contents displayed on the [Automatic recording relevant settings] screen.

### [1] Automatic recording setting ON <"Auto Recording ON">

A recording time select screen (FIG. 3F) is displayed, and the user is prompted to select (set) the recording time.

A destination device select screen (FIG. 3E) is displayed, and the user is prompted to select (set) a HDD (recording device).

### [2] Automatic recording setting OFF <"Auto Recording OFF">

The automatic recording setting is turned off.

### [3] Program list update <"Updating the Recording List">

Update of a program list (schedule list) for automatic recording (in the form of FIG. 3H with priority) is displayed.

### [4] Priority select <"Priority">

Forum-by-forum priority setting (priority select screen [FIG. 3H]) is activated.

By operating (turning on [pressing]) the [Enter] key of the remote control unit, the function of the button is activated (a function of a focused [button] is activated [a control signal that executes a function of the button is output]). That is, in the [1] Automatic recording setting ON field, the screen display of FIG. 3D, on which the above-described recording time select screen (FIG. 3F) and the recording destination select screen (FIG. 3E) can be displayed, is activated. The above-described priority select screen (FIG. 3H) is displayed in the [4] Priority select field.

By operating (turning on [pressing]) the [Return] key of the remote control unit, the automatic recording basic settings are canceled, and the screen is closed.

In the [3] Program list update field, by operating (turning on [pressing]) the [Enter] key of the remote control unit, according to the status of the update process of the program list, the following messages (FIG. 31) are output (displayed):
[a] Normal termination (when the number of items of update data is 0):
   No program list exists.
[b] Normal termination (when the number of items of update data is 1 or more):
   The program list has been updated.
[c] Abnormal termination:
   Update of the program list has been failed. Please try again.

### <<Automatic recording relevant settings>>

When the automatic recording setting shown in FIG. 3C is switched on, selection is made, as shown in FIG. 30, as to the following:
[1] Selection of a HDD (recording device) from the destination device select screen (FIG. 3E (screen name [Automatic recording settings])) display according to selection of a recording destination <"Target Device"> on the screen display of FIG. 3D (screen name [004])
[2] Selection of a recording time from the recording time select screen (FIG. 3F (screen name [011])) display according to selection of a recoding time <"Available Recording Time"> on the screen display of FIG. 3D

FIG. 3E illustrates a screen display for selecting a HDD (recording device) according to selection of a recording destination <"Target Device"> on the screen display of FIG. 3D (screen name [004]). The screen display shown in FIG. 3E includes fields in which names of hard disc drives (HDDs) are displayed such that one of the following:
[1] USB-connected HDD1 <USB HDD1>
[2] USB-connected HDD2 <USB HDD2>
[3] USB-connected HDD3 <USB HDD3>
can be set as a storage of a program set in the automatic recording as a destination HDD (Universal Serial Bus (USB)-connected hard disc device).

As shown in FIG. 3E, by operating (turning on [pressing]) the [Enter] key of the remote control unit, a HDD indicated by a focused [field] can be set as a storage of a program set in the automatic recording.

That is, as shown in FIG. 32, the user can select an arbitrary recording destination (device). The screen display of FIG. 3D illustrates an example in which HDD1 is selected as a recording destination.

FIG. 3F illustrates a screen display on which the recording time can be selected in accordance with time selection <"Available Recording Time">. The screen display shown in FIG. 3F includes fields indicating that recording can be made in a hard disc drive (HDD) set as a storage of a program set in the automatic recording for a recording time that occupies, of the effective capacity (which is not occupied by control information or management information and can be used by the user for recording (storage) of content), one of the following:
[1] 10%/PP time
[2] 25%/QQ time
[3] 50%/RR time
[4] 75%/SS time
[5] 90%/TT time

As shown in FIG. 3F, by operating (turning on [pressing]) the [Enter] key of the remote control unit, the capacity of a HDD indicated by a focused [field] can be set as a storage for a program set in the automatic recording.

FIGS. 33-35 illustrate examples of a [Multi-address message send/archive] screen display for entering a message to members participating in a forum, a [Personal message send/archive] screen display for entering a message to a specified person in the members participating in the forum, and an [Invitation message send/archive] screen display for entering an invitation message to a specified person in the members participating in the forum, respectively.

On the [Multi-address message send/archive] screen, the [Personal message send/archive] screen, and the [Invitation message send/archive] screen shown in FIGS. 33-35, a message is created for a person selected from members participating in a selected forum and is sent to the selected person. A message to be sent can be entered using a keyboard or selected from some template messages prepared in advance. The input is performed directly using a GUI (keyboard-type input screen [INBOX]).

FIG. 33 illustrates an example in which a message is intended for multi-address transmission, and the destination is a "forum member <'Forum Member'>", and FIGS. 34 and 35 illustrate examples in which the destination is a "name of a person".

On each of the screens, a [Cancel] button for canceling input of a message and transmission of the input message, a [Save] button for saving the entered message, and a [Send] button for sending the entered message are prepared.

In the case of [Friend request <"Invitation request">], a message can be entered using a similar INBOX screen.

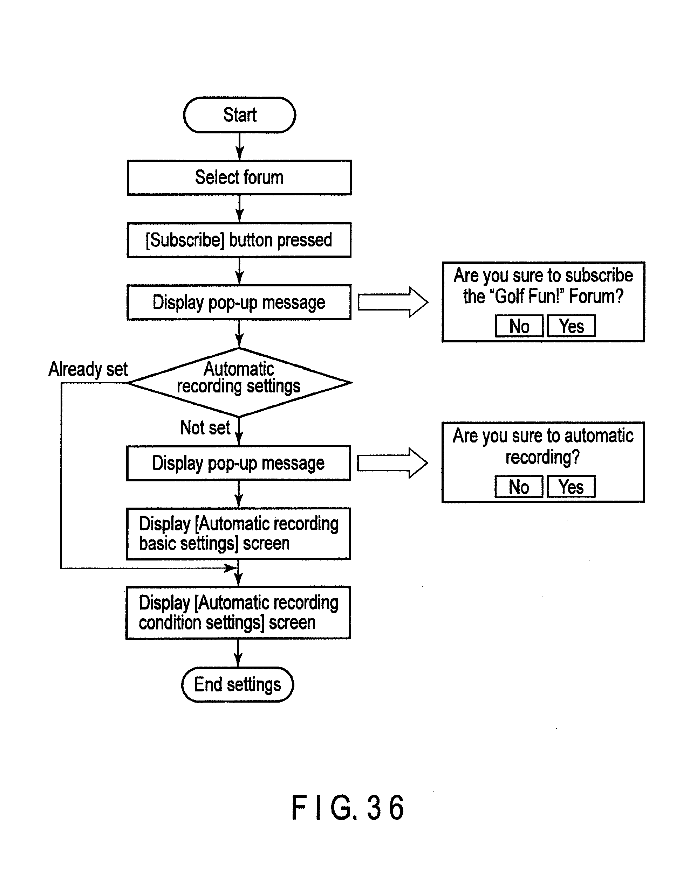

FIG. 36 illustrates an operation in a state in which [Automatic recording <"Auto Recording">] is not set (unset).

In order to perform schedule recording or schedule viewing by subscribing to a forum, automatic recording setting need to be made in advance in the main body of the television receiver. Accordingly, when subscription setting is made from the forum list, it is necessary to check whether automatic recording setting has been made, and when the setting has not been made, it is necessary to display an alert message and guide the user to make automatic recording setting.

As shown in FIG. 36, in the automatic recording setting, in association with subscription to a forum, a forum is selected [36-1], the [Subscribe] button is turned on (pressed) [36-2], a subscription confirmation pop-up message is displayed [36-3], whether automatic recording setting has been made or not is determined [36-4], and then it is confirmed that the automatic recording setting has been made [36-4-YES].

When the automatic recording setting has not been made [36-4-NO], a pop-up message confirming the intention to set automatic recording is displayed [36-5], and an "Automatic recording basic setting" screen is displayed and the user is prompted to make automatic recording setting [36-6].

After that, an "Automatic recording condition setting" screen and an "automatic recording relevant setting" screen are sequentially displayed, schedule recording or schedule viewing is enabled by subscription to a forum, and thereby [Automatic recording] settings are completed.

An [Avatar setting <"Avatar" setting">] screen can be activated on the [Cloud setting <"Cloud Selection POPUP">] screen according to the specification of the television set 101, as shown in FIG. 1B.

That is, on the [Home <"HOME">] screen shown in FIG. 1A, by focusing on the [Cloud menu <"Cloud Menu">]. and turning on the enter button, thereby causing the [Cloud setting] screen shown in FIG. 1B to be displayed as a pop-up, [Avatar setting <"'Avatar' tile setting">] can be made, as shown in FIG. 1C.

On the [Avatar setting (tile setting)] screen, a recommended notification interval (time cycle <"Recommendation period">) can be selected, as shown in FIG. 1D, and the selection can be made from 10 minutes <"10 minutes">, 5 minutes <"5 minutes">, and 1 minute <"a minute">, for example.

FIG. 1E (screen number [034]) illustrates an exemplary display of the forum top screen display when a "HOTLIST AVATAR" button is turned on on the Home "HOME">] screen shown in FIG. 1A.

From the [Home <"HOME">] screen (screen number [034]), a screen display [S3] (FIG. 1F) of an [Invitation <"Invitation message">] screen which prompts the user to set a Timeon mode <"Timeon">, which will be described later, using a response 1-105 to a selection 1-1.

The screen display [S3] is displatyed in accordance with a response 1-106 is an example of a [Log-in <Login popup> screen] and a [Cloud setting <"Cloud Setting Create Timeon Account">] screen, following a screen display [035] of the shift screen shown in FIG. 1F.

When [Log-in <Login>] is selected on the screen display [S3], a [Log-in <Login popup> screen] is displayed in accordance with a response 1-109.

When "Create Timeon Account" is selected on the screen display [S3], [Cloud setting <"Cloud Setting Create Timeon Account">], which prompts the user to make account settings for participation in the Timeon mode <"Timeon">, is displayed in accordance with a response 1-110.

By operating (turning on [(pressing]) the [Enter] key of the remote control unit, an interval of notification in the menu (time cycle <"Recommendation period">) can be selected.

By operating (turning on [pressing]) the [Return] key of the remote control unit, the [Notification interval] (time cycle <"Recommendation period">) is canceled, and the screen is closed.

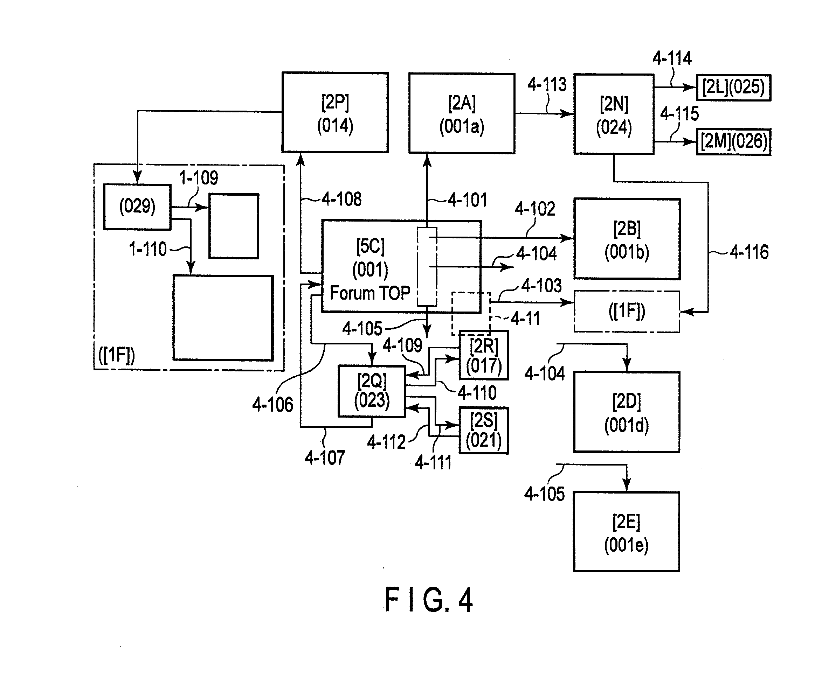

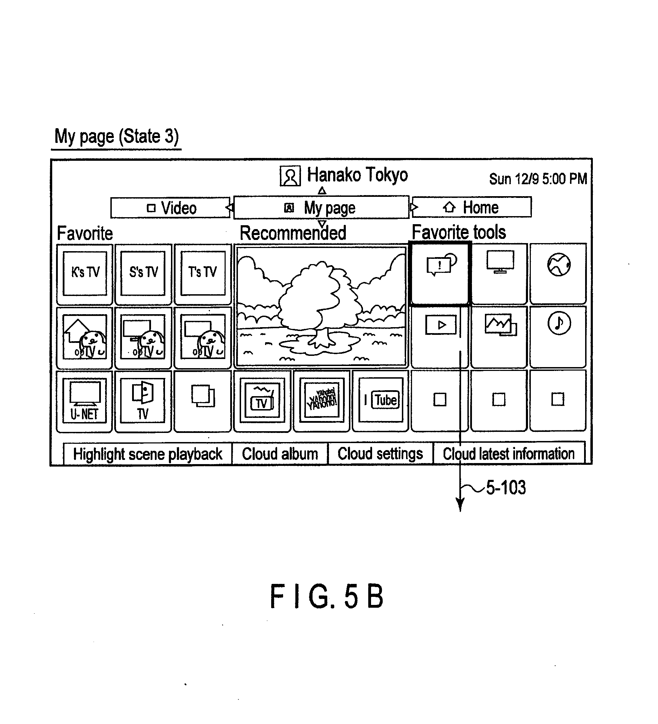

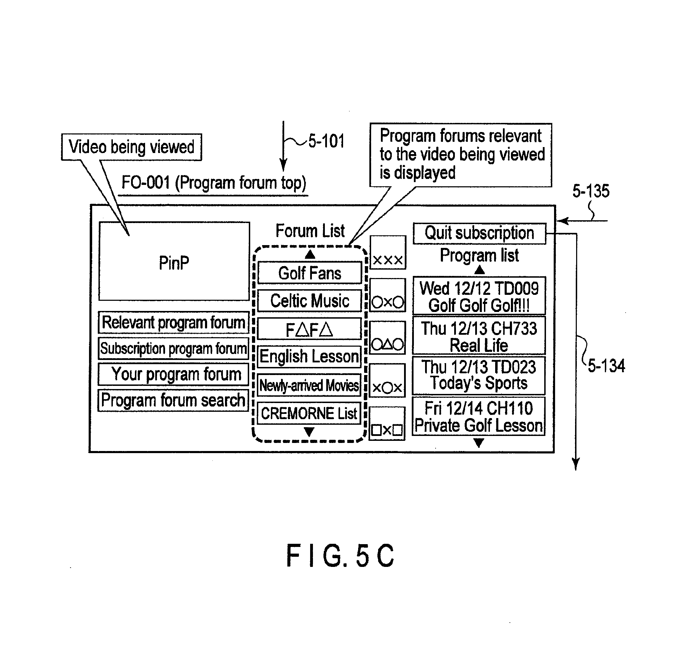

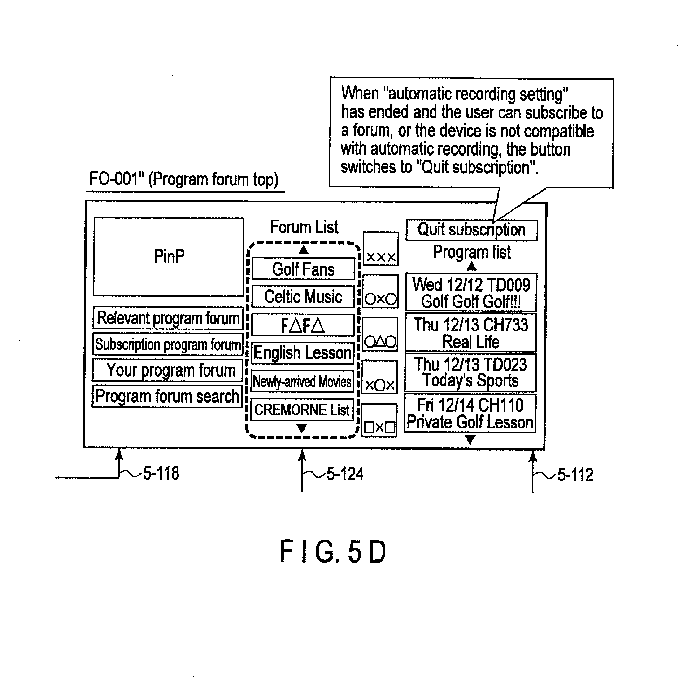

Next, a screen display displayed on a display part of the television set 101 and a shift of screen displays corresponding to a user input, setting, a selection instruction, or the like to the screen display will be described. It is to be noted that not all the screen displays shown in each of FIGS. 1-5, such as [1A] to [1F] in FIG. 1, [1E], [2A] to [2N], [2P] to [2Z], [3P], and [3Q] in FIG. 2, [2Z], [3A] to [3N], and [3P] to [3S] in FIG. 3, [1F], [2A], [2B], [2D], [2E], [2L], [2M], [2N], [2Q], [2R], [2S], and [2Z] in FIG. 4, and [3B], [3C], [3E], [3F], [3H] to [3N], [3P] to [3R], and [5A] to [5D] in FIG. 5, are simultaneously displayed at the same time. Each of FIGS. 1-5 illustrates a shift of screen displays caused by a control signal that is output by a selection input instruction made by a remote control operation or by turning on (pressing) the [Enter] button or the [Return] button.

FIGS. 2 and 3 illustrate screen displays on a television set connected to a cloud service and a shift of screen displays corresponding to a user input, setting, or a selection instruction to the screen display. Each of FIGS. 2 and 3 illustrates screen displays and a shift of screen displays in a state called State 2 <State 2>, in which there is no subscription to forums.

When a television set is activated, a "Home (State 2)" screen shown in [3A (FIG. 3A)] is displayed.

When the user is not a member of a forum, by turning on a "Cloud setting" button on the "Home screen" shown in FIG. 3A, the "Cloud setting screen" shown in [3B (FIG. 3B)] is displayed.

When an "automatic setting" tab is selected on the "Cloud setting screen" shown in FIG. 3B, an "automatic recording setting screen (with no screen display number)" shown in [3C (FIG. 3C)] is displayed in accordance with a response 3-103.

When an "Automatic recording ON" tab is selected on the "Automatic recording setting screen" shown in FIG. 3C, the "Automatic recording device setting screen (screen name [004 <"Device Setting">])" shown in [3D (FIG. 3D)] is displayed in accordance with a response 3-104. The "Automatic recording device setting screen [004]" is similarly displayed in accordance with a response 3-127 to the "Automatic recording" button on "My Page" screen (State 2) shown in [3S (FIG. 3S)] and a response 3-111 to a selection 3-3 <N> based on the response 3-127.

When a "recording destination" tab of the "automatic recording device setting screen [004]" shown in FIG. 3D is selected, a "recording device select screen (screen name [010])" shown in [3E (FIG. 3E)] is displayed in accordance with a response 3-105. Information on the "recording device" selected and input (instructed) in FIG. 3E is stored in a predetermined storage region in the television set. When selection of a "recording device" has finished in FIG. 3E, the screen returns to "Automatic recording device setting screen [004]" in accordance with a response 3-106.

When a "Recording time" tab of the automatic recording device setting screen [004] shown in FIG. 3D is selected, a recording time select screen (screen name [011]) shown in [3F (FIG. 3F)] is displayed in accordance with a response 3-107. When the "Recording time" is selected in FIG. 3F, the screen returns to the automatic recording device setting screen [004] in accordance with the response 3-106.

When setting corresponding to the screen display of the automatic recording device setting screen [004] shown in FIG. 3D has finished, an alert (setting finish confirmation) screen display (screen name [013]) shown in [3G (FIG. 3G)] is displayed.

When finish of setting is entered on the alert screen [013] shown in FIG. 3G, the forum top screen display (screen name [001]) shown in [2Z (FIG. 2Z)] is displayed. When the screen display of FIG. 3G is used as a screen display to a user subscribing to a forum in a state called State 3 <State 3>, by selecting "No" button, the screen returns to the home screen [5A] in accordance with a response 5-111.

When a "Forum priority" tab is selected on the automatic recording setting screen shown in FIG. 3C, a priority setting screen (screen name [012]) shown in [3H (FIG. 3H)] is displayed in accordance with a response 3-112. Setting of the order of priority will be described with reference to FIGS. 54 and 55.

When the user is a member of a forum (the user does not subscribe to a forum or addition of subscription can be expected from the user), by turning on the forum button on the home screen (State 2) of FIG. 3A, a forum top screen (screen name [001 <"Forum Top">]) shown in [2Z (FIG. 2Z)] is displayed in accordance with a response 3-101. That is, the user is recommended to "subscribe to a new forum" or "add subscription".

When a user wants to subscribe to "'GolfGolfGolf' forum" reversely displayed in "Forum List" string display on the forum top screen name [001] shown in FIG. 2Z, by focusing on the "'GolfGolfGolf' forum" display and turning on the enter key, an alert (subscription confirmation) screen display (screen name [002]) shown in [3I (FIG. 3I] is displayed in accordance with a response 3-113.

When approval is entered (by turning on the "YES" button) on the alert screen [002], confirmation 3-116 is made as to whether recording destination device setting <"Native Device Setting"> has been made in accordance with a selection 3-2 as a reconfirmation of execution of automatic recording in response to a confirmation screen (screen name [003] (FIG. 3J)) that confirms the user whether to turn on or off the automatic recording setting <"Cloud Auto Record setting"> in accordance with a selection 3-1 <Y> and a response 3-115, setting on a recording destination device on a recording destination device setting screen shown in FIG. 3K (screen name [004]) and setting on a recording time per day and a target channel on an automatic recording setting screen shown in FIG. 3L (screen name [005]) are completed, and then the screen returns to the forum top screen name [001] shown in FIG. 2Z again in accordance with a response 3-126.

The automatic recording setting made in accordance with the selection 3-1 is set to <N> (response 3-116) in schedule viewing when the user "wants to view a program but does not need to record a program".

A recording time setting screen (screen name [006]) shown in [3M (FIG. 3M)] and a recording time (ranking priority) setting screen (screen name [007]) shown in [3N (FIG. 3N)] are displayed in accordance with a response 3-120 to the setting screen shown in FIG. 3L. FIGS. 3M and 3N will be described in detail with reference to FIG. 26.

A channel setting screen (screen name [008]) for each broadcasting type (whether to include satellite broadcasting or not) to be a target for recording shown in [3P (FIG. 3P)] is displayed in accordance with a response 3-121 to the setting screen shown in FIG. 3L. Input to the screen display shown in FIG. 3P will be described in detail with reference to FIG. 27. The setting result of FIG. 3P is recorded in a recording region, and the screen returns to FIG. 3L (screen name [005]) in accordance with a response 3-122 and a response 3-124. When (channel-by-channel) individual setting is selected in accordance with a response 3-123 in the selection of FIG. 3P, a channel-by-channel (broadcaster-by-broadcaster) setting screen (screen name [009]) shown in [3Q (FIG. 3Q)] is displayed. Input to the screen display shown in FIG. 3Q will be described in detail with reference to FIG. 28. The setting result shown in FIG. 3Q is recorded in a recording region, and the screen returns to FIG. 3L (screen name [005]) in accordance with a response 3-125.

When the user is a member of a forum and a forum exists that the user has already subscribed to, "My Page" shown in [3S (FIG. 3S)] will be an activation screen.

By opening a forum (focusing on an icon (button display) on the screen and turning on the enter key) on My Page screen shown in FIG. 3S, a "Native Auto Recording List" in a selection 3-3 is acquired in accordance with a response 3-127 (i.e., approval is required for accessing a server in order to acquire a schedule list based on an automatic recording schedule).

When <Y> is selected in a selection 3-3, i.e., by approving acquisition of the "Native Auto Recording List", the "Native Auto Recording List" shown in [3R (FIG. 3R)] is downloaded in accordance with a response 3-128 and displayed.

FIG. 2 illustrates a screen display (screen name [001 <"Forum TOP">]) of FIG. 2Z in accordance with a response 3-101 when a forum button is turned on on the "Home (State 2)" screen shown in FIG. 3A, i.e., a forum top screen display and a shift of screen displays corresponding to a user input, setting, or a selection instruction to the screen display.

The forum top screen name [001] shown in FIG. 2Z includes a "Forum menu" display (left-most column), a "Forum list <"Forum list">" display (left-to-the-center column), a "Forum sub-menu" display (right-to-the-center column), and a "Forum details" display (right-most column) shown in FIG. 11.

A corresponding screen display can be selected from one of button displays of the "Forum sub-menu" display (right-to-the-center column) on the forum top screen shown in FIG. 2Z.

A "PL" button instructs a program list <"Program List"> to be displayed.

When the "PL" button is turned on, the screen is shifted to a screen display on which the program list is displayed in a position (display region) of the "Forum details" display (right-most column), as shown in a screen display of [2A (FIG. 2A)] (screen name [001a]), in accordance with a response 2-101.

When one of programs listed in accordance with a response 2-110 is selected in FIG. 2A (screen name [001a]), a [Program details] screen display shown in a screen display of [2N (FIG. 2N)] (screen name [024]) is displayed.

The [Program details] screen display includes a channel display tab 2-112 on which a scheduled recording channel is displayed, a schedule recording display tab 2-113 on which a scheduled recording time is displayed, a comment display tab 2-114 on which a comment is displayed, and a close tab 2-115 for closing the screen name [024] (inputting a control signal that causes the screen to return to the previous page).

When a channel display tab 2-112 is selected in accordance with a response 2-112 on the screen name [024], an [alert] screen display shown in a screen display of [2L (FIG. 2L)] (screen name [025]) is displayed. The [alert] screen display shown in FIG. 2L prompts the user to confirm the scheduled channel (requests the user to approve the scheduled channel). When the user expresses approval in accordance with a response 2-113, a "scheduled channel" included in a recording schedule stored in a calendar server (<Calendar Timer Page> 2-11 (1024) is determined (When a scheduled channel has already been determined, the determined scheduled channel is overwritten thereon).

When a scheduled recording display tab 2-113 is selected in accordance with a response 2-115 on the screen name [024], an [alert] screen display shown in a screen display of [2M (FIG. 2M)] (screen name [026]) is displayed. The "alert" screen display shown in FIG. 2M prompts the user to confirm the scheduled recording time (requests the user to approve the scheduled recording time). When the user has expressed approval in accordance with a response 2-114, a scheduled recording time included in the recording schedule stored in the calendar server ("Calendar Timer Page" 1024) is determined (When a scheduled recording time has already been determined, the determined schedule recording time is overwritten thereon).

When a comment display tab 2-114 is selected in accordance with a response 2-116 on the screen name [024], a [Comment input] screen display shown in a screen display of [2K (FIG. 2K)] (screen name [027]) is displayed. A comment entered on the "Comment input" screen display shown in FIG. 2K is sent to the forum by turning on the Send <Send> button. After the comment has been sent, the screen returns to the screen display of the program list screen display (FIG. 2A [001a]) in accordance with a response 2-117.

When a close tab 2-115 is selected on the screen name [024], the screen returns to a screen display of the program list screen display (FIG. 2A [001a]) in accordance with a response 2-111.

An "FD" button instructs Forum Details <"Forum Detail"> to be displayed.

When the "FD" button is turned on, the screen shifts to a screen display on which information (content) of a forum relevant to a program currently being displayed on a preview screen (Picture-in-picture [PinP]) of the "Forum Menu" display (left-most column) is displayed in a position (display region) of the "Forum details" display (right-most column), as shown in the [2B (FIG. 2B)] screen display (screen name [001b]), in accordance with a response 2-102.

When "Invitation" is selected in accordance with a response 2-118 in FIG. 2B (screen name [001b]), a "Send message to member" screen display shown in a screen display of [2J (FIG. 2J)] (screen name [029]) is displayed.

The "Send message to member" screen display includes a destination field 2-119 in which the name of a member (destination) is entered, a character string input field 2-120 to which a message (character strings) can be input, a send <Send> button for sending the message, closing the screen name [029], and inputting a control signal that causes the screen to return to the previous page, a cancel <Cancel> button for canceling sending (input) of the message, and the like.

When the destination field 2-119 is selected on the screen name [029], a screen display of [2X (FIG. 2X)] (screen name [016]) for setting the member (destination) is displayed. The "Member (destination)" screen display shown in FIG. 2X allows the user to send a message to a selected user. The destination field 2-119 performs a similar function when a message is sent in accordance with a response 2-108. A direct input can be made to the character string input field 2-120 using a GUI (keyboard-type input screen) or numerical (alphabetical) keys, as described with reference to FIG. 15 and the like. When sending of a message using the Send <Send> button has finished, or when sending of the message using the <Cancel> button has been canceled, the screen returns to the screen display of FIG. 2B (screen name [001b]) in accordance with a response 2-121.

When an edit button 2-122 is selected on the screen name [029], a screen display of [2Y (FIG. 2Y)] (screen name [015] <"Create new forum" screen>), on which a forum can be created and edited, is displayed.

When a remove button 2-123 is selected on the screen name [029], removal of the forum is instructed, and an "alert (such as 'Are you sure you want to remove?'" shown in a screen display of [2I (FIG. 2I)] (screen name [030]) is displayed (prior to the removal).

A "Bo" button instructs a message board <"Message Board"> to be displayed.

When the "Bo" button is turned on, the screen shifts to a screen display on which a message can be sent to a member participating in a forum that can be used for the [Multi-message send/archive] described with reference to FIG. 33 or [Personal message send/archive] described with reference to FIG. 34, as shown in a screen display of [2C (FIG. 2C)] (screen name [001c]) in accordance with a response 2-103.

When "Send message <Send Message to Forum members>" is selected in accordance with a response 2-124 in FIG. 2C (screen name [001c]), a "Send message to member" screen display shown in a screen display of [2F (FIG. 2F)] (screen name [028]), on which a message can be sent to a specific member, is displayed. Since message sending to a member using the screen name [028] is substantially the same as message sending using the screen name [016], a detailed description thereof will be omitted. When message sending using the Send <Send> button has ended, or when message sending has been canceled using the Cancel <Cancel> button, the screen returns to the screen display shown in FIG. 2C (screen name [001c]) in accordance with a response 2-125.

A "Me" button instructs a list of members <"Member List"> by which forum members can be referred to be displayed.

When the "Me" button is turned on, the screen shifts to a screen display giving a list of members (FIG. 21), as shown in a screen display of [2D (FIG. 2D)] (screen name [001d]), in accordance with a response 2-104.

When a member is selected in accordance with a response 2-126 in FIG. 2D (screen name [001d]), a "Send message to new member <'Invitation (Friend Request) Message'>" screen display shown in a screen display of [2G (FIG. 2G)] (screen name [031]) or a "Send message to a registered member (friend) <'Message'>" screen display shown in a screen display of [2H (FIG. 2H)] (screen name [032]) is displayed, in accordance with whether the selected member is a registered member (friend "registered member") or not according to a selection 2-1. A response to FIG. 2G (screen name [031]) is made in accordance with a response 2-127, and a response to FIG. 2H (screen name [032]) is made in accordance with a response 2-128. Since message sending is substantially the same as message sending using the screen name [016], a detailed description thereof will be omitted. When message sending using the Send <Send> button has finished, or when message sending using the Cancel <Cancel> button has been canceled, the screen returns to the screen display of FIG. 2D (screen name [001d]) in accordance with a response 2-129 or a response 2-130, respectively.

An "SS" button instructs Forum subscription <"Subscribe"> to be displayed.

When the "SS" button is turned on, the screen shifts to a screen display giving a list of purchased forums, as shown in a screen display of [2E (FIG. 2E)] (screen name [001e]), in accordance with a response 2-105.

When a user subscribes to a forum, a recording time per day and target channel (broadcasting type) setting screen is activated on the automatic recording setting screen shown in FIG. 3L (screen name [005]), in accordance with a response 2-151 from a scheduled automatic recording setting <"Auto Recording Setting"> button (display) on the screen of FIG. 2E (screen name [001e]). Since input and setting from the screen name [005 (FIG. 3L)] are the same as those described with respect to the automatic recording setting <"Cloud Auto Record Setting">, a detailed description thereof will be omitted.

When creation of a new forum <"Create new forum"> is instructed in accordance with a response 2-106 on the forum top screen name [001] shown in FIG. 2Z, a new forum creation <"Create new forum"> screen display (screen name [014]) shown in [2P (FIG. 2P)] is displayed. In this case, "Create new forum" is displayed in the "Forum list" display (left-to-the-center column) as a screen display shown in FIG. 2P. Details on "Create new forum" will be described with reference to FIG. 12, FIG. 12A, FIG. 12B, and FIG. 12C (The forum name is displayed in a 2-142 field, and the forum overview is displayed in a 2-141 field).

FIG. 2Y is activated in accordance with a response 2-107 to the "Create new forum" button shown in FIG. 2P.

In FIG. 2Y, a forum creation message can be sent to a forum member included in a member select screen display (screen name [016]) shown in FIG. 2X (response 2-109/response 2-108). A 2-131 field shown in FIG. 2Y is used for input of a keyword from the forum search screen shown in FIG. 2Q. The keyword/genre shown in FIG. 2Q uses a keyword input screen (response 2-146/response 2-147) shown in FIG. 2R and a genre setting screen (response 2-148/response 2-149) shown in FIG. 2S.

By turning on (pressing) a [Create <"Create">] button 2-132, creation of a forum is completed. In this case, an [alert] screen display that asks the user whether to search for a next program or not (whether to continue detailed settings of a forum to be newly created) shown in a screen display (screen name [018] over [001b]) of [2W (FIG. 2W)]. After that, a forum detail setting <"Forum Detail setting"> screen shown in a screen display of [2T (FIG. 2T)] (screen name [019]) is activated in accordance with a response 2-134 (Yes <Yes>).

Details on the forum detail setting <"Forum Detail Setting"> will be described with reference to FIG. 14, FIG. 14A, FIG. 14B, and FIG. 14C (Setting of a keyword is performed in accordance with a response 2-143. Setting of a channel (broadcasting type) is performed in accordance with a response 2-136 (FIG. 3P). Channel detail setting (FIG. 3Q) can be performed in accordance with a response 2-135). The screen display (screen name [020]) shown in [2V (FIG. 2V)] is an example of a time setting screen used for setting of a period of time as a target for search (FIG. 15 and the like).

In this case, the search result can be checked any time on a screen display of [2U (FIG. 2U)] (screen name [022]) (response 2-139/response 2-140).

FIGS. 4 and 5 illustrate screen displays on a television set connected to a cloud service, and a shift of screen displays corresponding to a user input, setting, or a selection instruction to the screen display. FIGS. 4 and 5 illustrate screen displays on a television set of a member subscribing to a forum and a shift of screen displays in a state called State 3 <State 3>.

When a television set is activated, a "Home (State 3)" screen shown in [5A (FIG. 5A)] is displayed. Since [3B], [3C], [3E], [3F], [3H] to [3N], and [3P] to [3R] shown in FIG. 5 are the same as the drawings (screen names) of the "Home (State 2)" screen described with reference to FIGS. 2 and 3, a detailed description thereof will be omitted except for "Select", which will be described with reference to "5-1" to "5-5".

The screen display of FIG. 5A (screen name [Home (State 3)]) is different from the screen display shown in FIG. 3A (screen name [Home (State 2]) in that the screen display of FIG. 5A is an activation screen on which "Community <'Community'>", i.e., a forum to which the user subscribes is displayed in the left-to-the-center column.

When "Community" is selected in accordance with a response 5-101 in FIG. 5A, the screen shifts to a forum top screen display (screen name [001]) shown in [5C (FIG. 5C)]. When "Cloud setting" is selected in accordance with a response 5-102, the screen shifts to FIG. 3B.

In FIG. 5C (screen name [001]), the response 5-134 causes a forum subscription confirmation screen display, i.e., an "alert" screen display shown in FIG. 3I (screen name [002]) to be displayed.

When it is specified by the selection 5-1 <Y> that the television set is compatible with automatic recording in accordance with a response 5-117 from the "Alert" screen display, a confirmation screen (screen name [003] (FIG. 3J)) confirming the user as to whether to turn on or off the automatic recording setting <"Cloud Auto Record Setting"> (screen name [003] (FIG. 3J)) is displayed, and then the screen shifts to a setting screen according to the selection 5-2 <Y>/5-2 <N> on the basis of whether the automatic recording setting has completed. When setting of a recording time per day and a channel (broadcasting type) (the recording time can be set on the basis of a ranking according to the selection 5-4 as necessary) based on FIG. 3L has finished in accordance with a response 5-120 to the selection 5-2 <Y>, the screen shifts to a forum top screen display (screen name [001']) shown in [5D (FIG. 5D)] in accordance with a response 5-124. The forum top screen display (screen name [001']) shown in FIG. 5D is different in that a "Quit subscription" button display is included.

When the user is a forum member and a screen display indicating that the user is participating in an already purchased forum (screen name [My Page] screen [5B (FIG. 5B)]), a "Native Auto Recording List" shown in FIG. 3R is downloaded and displayed in accordance with a response 3-106 to a selection 5-3 <Y> (A selection 5-5 prompts the user to confirm that a purchased forum exists).

FIG. 4 illustrates a screen display (screen name [001 <Forum TOP>]) of FIG. 5C when "Community" is selected in accordance with a response 5-101 on the "Home (State 3)" screen shown in FIG. 5A, i.e., the forum top screen display of State 3, and a shift of screen displays corresponding to a user input, setting, a selection instruction, or the like to the screen display.

Since [1F], [2A], [2B], [2D], [2E], [2L], [2M], [2N], [2Q], [2R], and [2S] are the same as the drawings (screen names) of the "Home (State 2)" screen described with reference to FIGS. 2 and 3, a detailed description thereof will be omitted.

By using the above-described electronic device (television set and server), recommended data for automatic recording <Auto Rec Data> can be prepared for each recording device. Therefore, it is possible to classify recording devices according to the type (whether age restriction is set or not) and genre of the content, for example. That is, by combining automatic recording schedules such that a television set viewed by a user A and a user B records a program scheduled for automatic recording on the basis of an automatic recording schedule provided by one of forums and a television set viewed by user C and user B records a program scheduled for automatic recording on the basis of an automatic recording schedule provided by the other forum, user B is capable of viewing a program proposed by each of the forums. Further, user A is capable of viewing a program recorded on the basis of proposal (information) by a forum to which user A belongs. Similarly, user C is capable of viewing a program recorded on the basis of proposal (information) by a form to which user C belongs.

Although several embodiments according to the present invention have been described, these embodiments are presented as examples, and they are not intended to restrict the scope of the present invention. These novel embodiments can be carried out in other various conformations, and diverse omissions, substitutions, and changes can be carried out without departing from the gist of the present invention. These embodiments or their modifications are included in the scope or the gist of the present invention, and they are also included in the invention described in claims and its equivalent scope.

## Claims

1. An electronic device comprising:
a search condition storage configured to store search conditions presented by a first device equipped with a recording function;
a search module configured to search a content on the basis of the search conditions stored in the search condition storage; and
a list storage configured to store a content list based on the search result by the search module and the schedule information and the restrictive conditions from the second device such that the content list can be acquired as a schedule list to be used by the second device for the automatic recording.

2. The electronic device according to claim 1, wherein the search means searches for a content to be a target on the basis of the search conditions stored in the search condition storage means.

3. The electronic device according to claim 2, wherein the restrictive conditions are set on the basis of an arbitrary combination of a type of a business organization that provides the content, a time zone in which the content is provided, a maximum recording time per day for which the content can be recorded, and the number of the device.

4. The electronic device according to claim 2, wherein setting peculiar to the electronic device is given higher priority in the restrictive conditions.

5. The electronic device according to claims 3 or 4, wherein the restrictive conditions setting are peculiar with respect to an able to capacity of a recording volume of recordable of the electronic device.

6. An electronic device comprising:
an objecting list storage configured to store a recording objection content list based on a recommendation come up with a collecting union (forum) with respect to the restrictive conditions of the device has a recording function;
a search condition storage configured to store search conditions presented by a first device equipped with the recording function;
a search module configured to search a content on the basis of the search conditions stored in the search condition storage; and
a list storage configured to store a content list based on the search result by the search module and the schedule information and the restrictive conditions from an acquire device such that the content list can be acquired as a schedule list to be used for the automatic recording.

7. The electronic device according to claim 6, wherein the content list is set on the basis of an order of priority for groups of information when the number of groups of information is more than one.

8. The electronic device according to claim 7, wherein the restrictive conditions are set on the basis of an arbitrary combination of a type of a business organization that provides the content, a time zone in which the content is provided, a maximum recording time per day for which the content can be recorded, and the number of the device.

9. The electronic device according to claim 7, wherein the search means searches for a content to be a target on the basis of the search conditions stored in the search condition storage means.

10. The electronic device according to claims 8 or 9, wherein the restrictive conditions setting are peculiar with respect to an able to capacity of a recording volume of recordable of the electronic device.

11. An information distribution system comprising:
storing search conditions presented by a first device equipped with a recording function;
searching for a content on the basis of the search conditions;
receiving schedule information on schedule recording set in advance in a second device equipped with a recording function and restrictive conditions on recording restrictions set in the second device from the second device; and
storing a content list based on the search result and the schedule information and the restrictive conditions from the second device such that the content list can be acquired as a schedule list to be used by the second device for automatic recording.

12. An information distribution method comprising:
storing search conditions presented by a first device equipped with a recording function;
searching for a content on the basis of the search conditions;
receiving schedule information on schedule recording set in advance in a second device equipped with a recording function and restrictive conditions on recording restrictions set in the second device from the second device; and
storing a content list based on the search result and the schedule information and the restrictive conditions from the second device such that the content list can be acquired as a schedule list to be used by the second device for automatic recording.

13. An information distribution program comprising:
storing search conditions presented by a first device equipped with a recording function;
searching for a content on the basis of the search conditions;
receiving schedule information on schedule recording set in advance in a second device equipped with a recording function and restrictive conditions on recording restrictions set in the second device from the second device; and
storing a content list based on the search result and the schedule information and the restrictive conditions from the second device such that the content list can be acquired as a schedule list to be used by the second device for automatic recording.

## Amended claims

### Amended claims under Art. 19.1 PCT

**1.** (Amended) An electronic device comprising:
a search condition storage configured to store search conditions presented by a first device equipped with a recording function;
a search module configured to search a content on the basis of the search conditions stored in the search condition storage;
a reception module configured to receive schedule information on schedule recording set in advance in a second device equipped with a recording function and restrictive conditions on recording restrictions set in the second device from the second device; and
a list storage configured to store a content list based on the search result by the search module and the schedule information and the restrictive conditions from the second device such that the content list can be acquired as a schedule list to be used by the second device for the automatic recording.

**2.** (Amended) The electronic device according to claim 1, wherein the search module configured to a content to be a target on the basis of the search conditions stored in the search condition storage.

**3.** (Amended) The electronic device according to claim 2, wherein the restrictive conditions are set on the basis of any one of combination of a type of a business organization that provides the content, a time zone in which the content is provided, a maximum recording time per day for which the content can be recorded, and the number of programs.

**4.** (Amended) The electronic device according to claim 2, wherein setting peculiar to the electronic device is given higher priority in the restrictive condition.

**5.** (Amended) The electronic device according to claim 1, further comprising a target list storage configured to store a content list to be a target for recording recommended by a group of information relevant to the search conditions on the basis of the search conditions.

**6.** (Amended) The electronic device according to claim 5, wherein the content list is set on the basis of an order of priority for groups of information when the number of groups of information is more than one.

**7.** (Amended) The electronic device according to claim 5, wherein
the search condition storage configured to store the search conditions set by the first device on which a master user of the group of information has logged in, and
the reception module configured to receive the schedule information and the restrictive conditions from the second device on which a user who is registered in the group of information has logged in.

**8.** (Amended) An information distribution system comprising:
storing search conditions presented by a first device equipped with a recording function;
searching for a content on the basis of the search conditions;
receiving schedule information on schedule recording set in advance in a second device equipped with a recording function and restrictive conditions on recording restrictions set in the second device from the second device; and
storing a content list based on the search result and the schedule information and the restrictive conditions from the second device such that the content list can be acquired as a schedule list to be used by the second device for automatic recording.

**9.** (Amended) An information distribution method comprising:
storing search conditions presented by a first device equipped with a recording function;
searching for a content on the basis of the search conditions;
receiving schedule information on schedule recording set in advance in a second device equipped with a recording function and restrictive conditions on recording restrictions set in the second device from the second device; and
storing a content list based on the search result and the schedule information and the restrictive conditions from the second device such that the content list can be acquired as a schedule list to be used by the second device for automatic recording.

**10.** (Amended) An information distribution program comprising:
storing search conditions presented by a first device equipped with a recording function;
searching for a content on the basis of the search conditions;
receiving schedule information on schedule recording set in advance in a second device equipped with a recording function and restrictive conditions on recording restrictions set in the second device from the second device; and
storing a content list based on the search result and the schedule information and the restrictive conditions from the second device such that the content list can be acquired as a schedule list to be used by the second device for automatic recording.

**11.** Deleted)

**12.** Deleted)

**13.** Deleted)
